# EUROPEAN PATENT APPLICATION

(11) **EP 4 647 346 A1**
(43) Date of publication of application: **12.11.2025**
(21) Application number: 23922629.3
(22) Date of filing: 14.02.2023
(51) Int. Cl.: B64U 10/14, B64C 13/18, B64D 1/08, G05D 1/20, B64U 101/40

(54) **UNMANNED AIRCRAFT, MANAGEMENT SYSTEM, PACKAGE SYSTEM, MANAGEMENT METHOD, AND COMPUTER PROGRAM**

(71) Applicant: Kubota Corporation, Osaka 556-8601 (JP)
(72) Inventor: MASUMOTO, Tadahisa, Sakai-shi, Osaka 590-0908 (JP)
(74) Representative: Cabinet Beau de Loménie
(86) International application number: PCT/JP2023/004970
(87) International publication number: WO 2024/171290

(57) **Abstract**

An unmanned aerial vehicle according to an embodiment is an unmanned aerial vehicle that transports harvested crops harvested from a field, comprising: a flight device that causes the unmanned aerial vehicle to fly; a control device that controls operation of the flight device; a communication device that receives package position information indicating a first position where a target package for transport containing the harvested crops is located, and package weight information indicating the weight of the target package; and a support device capable of supporting the target package, wherein the control device determines, based on the package weight information, whether the target package can be transported to a second position different from the first position, and when determining that the target package can be transported, controls the flight device to cause the unmanned aerial vehicle to fly to the first position, causes the support device to support the target package, and controls the flight device to cause the unmanned aerial vehicle to fly to the second position.

## Description

### TECHNICAL FIELD

The present disclosure relates to an unmanned aerial vehicle, a management system, a package system, a management method, and a computer program.

### BACKGROUND ART

An unmanned aerial vehicle (UAV) is an aircraft that cannot carry a person due to its structure and can fly by remote operation or automatic piloting. A rotary-wing type unmanned aerial vehicle is an unmanned aerial vehicle that obtains lift using propellers, i.e., rotary wings, that rotate around an axis. Small unmanned aerial vehicles equipped with multiple rotary wings (Multi-Rotor UAV) are also called "drones," "multi-rotors," or "multicopters," and are widely used for applications such as aerial photography, surveying, logistics, and agricultural chemical spraying.

Patent Document 1 describes an unmanned aerial vehicle (unmanned aircraft) that changes its flight position in conjunction with the operation of an agricultural machine.

### CITATION LIST

### PATENT LITERATURE

Patent Document 1: Japanese Patent Application Publication No. 2022-104737

### SUMMARY OF INVENTION

### TECHNICAL PROBLEM

There is a demand for transporting harvested crops using unmanned aerial vehicles.

### SOLUTION TO PROBLEM

A harvest management system according to an embodiment of the present disclosure is a harvest management system for acquiring harvested crops that a mobile agricultural machine has harvested from a field using an unmanned aerial vehicle, wherein an acquisition device used for acquiring the harvested crops is connected to the unmanned aerial vehicle and moves together with the unmanned aerial vehicle, and the unmanned aerial vehicle includes: a receiving device that receives position information indicating a position of the agricultural machine in the field or a position where the agricultural machine is scheduled to discharge harvested crops; a flight device that causes the unmanned aerial vehicle to fly; and a control device that controls operation of the flight device to cause the unmanned aerial vehicle to fly to a position where first harvested crops stored in the agricultural machine or second harvested crops discharged from the agricultural machine can be acquired, and the first harvested crops or the second harvested crops are acquired using the acquisition device connected to the unmanned aerial vehicle.

An unmanned aerial vehicle according to an embodiment of the present disclosure is an unmanned aerial vehicle that transports harvested crops harvested from a field, including: a flight device that causes the unmanned aerial vehicle to fly; a control device that controls operation of the flight device; a communication device that receives package position information indicating a first position where a target package for transport containing the harvested crops is located, and package weight information indicating the weight of the target package; and a support device capable of supporting the target package, wherein the control device determines, based on the package weight information, whether the target package can be transported to a second position different from the first position, and when determining that the target package can be transported, controls the flight device to cause the unmanned aerial vehicle to fly to the first position, causes the support device to support the target package, and controls the flight device to cause the unmanned aerial vehicle to fly to the second position.

A management system according to an embodiment of the present disclosure is a management system that manages transport operations of an unmanned aerial vehicle, including: a communication device that receives package position information indicating a first position where a package containing harvested crops harvested in a field is located; and a control device that controls operation of an unmanned aerial vehicle supporting a structure, wherein when causing the unmanned aerial vehicle to support the package, the control device separates the structure from the unmanned aerial vehicle.

### ADVANTAGEOUS EFFECTS OF INVENTION

According to an embodiment of the present disclosure, an unmanned aerial vehicle acquires harvested crops that an agricultural machine has harvested. The unmanned aerial vehicle acquires harvested crops from the agricultural machine, for example, without landing on the ground. Also, for example, the unmanned aerial vehicle acquires harvested crops from a position above the agricultural machine. Since there is no need to secure a ground surface for running a transport vehicle in parallel with the agricultural machine, crop harvesting can be performed easily and efficiently.

According to an embodiment of the present disclosure, an unmanned aerial vehicle capable of transporting a target package flies to a first position where the target package is located, supports and transports the target package, thereby enabling efficient transport of harvested crops.

According to an embodiment of the present disclosure, by causing an unmanned aerial vehicle that was performing operations to support a structure to transport a package, efficient transport of harvested crops can be achieved. By using an unmanned aerial vehicle from which the structure has been separated, the weight of packages that the unmanned aerial vehicle can transport can be increased.

### BRIEF DESCRIPTION OF DRAWINGS

FIG. **1A** is a block diagram schematically showing some examples of rotary drive devices that rotate rotors in an unmanned aerial vehicle equipped with multiple rotors.
FIG. **1B** is a plan view schematically showing one of the basic configuration examples of an unmanned aerial vehicle equipped with multiple rotors.
FIG. **1C** is a side view schematically showing one of the basic configuration examples of an unmanned aerial vehicle equipped with multiple rotors.
FIG. **1D** is a plan view schematically showing another basic configuration example of an unmanned aerial vehicle equipped with multiple rotors.
FIG. **2A** is a block diagram showing a basic configuration example of a battery-driven multicopter.
FIG. **2B** is a block diagram showing a basic configuration example of a series hybrid-driven multicopter.
FIG. **2C** is a block diagram showing a basic configuration example of a parallel hybrid-driven multicopter.
FIG. **3** is a diagram showing an example of a harvest management system.
FIG. **4** is a side view schematically showing an example of a harvester.
FIG. **5** is a block diagram showing a configuration example of a harvester.
FIG. **6** is a block diagram showing a configuration example of an unmanned aerial vehicle.
FIG. **7** is a block diagram showing a configuration example of a management device and a terminal device.
FIG. **8** is a diagram schematically showing an example of an unmanned aerial vehicle to which an acquisition device is connected.
FIG. **9** is a diagram showing a field where a harvester harvests crops.
FIG. **10** is a flowchart showing an example of an operation for acquiring harvested crops that a harvester has harvested from a field using an unmanned aerial vehicle.
FIG. **11A** is a diagram showing an example of an operation for acquiring harvested crops stored in a tank of a harvester using an unmanned aerial vehicle.
FIG. **11B** is a diagram showing an example of an operation for acquiring harvested crops stored in a tank of a harvester using an unmanned aerial vehicle.
FIG. **11C** is a diagram showing an example of an operation for acquiring harvested crops stored in a tank of a harvester using an unmanned aerial vehicle.
FIG. **12** is a diagram showing an unmanned aerial vehicle moving to a storage facility that stores harvested crops.
FIG. **13** is a diagram schematically showing another example of an unmanned aerial vehicle to which an acquisition device is connected.
FIG. **14** is a diagram showing a vacuum hose extending from a suction machine placed in a field, and an unmanned aerial vehicle supporting the vacuum hose.
FIG. **15** is a diagram showing an unmanned aerial vehicle flying so that the end of a vacuum hose gripped by a gripper is positioned inside a tank of a harvester.
FIG. **16** is a diagram showing a discharge hose extending from a harvester, and an unmanned aerial vehicle supporting the discharge hose.
FIG. **17A** is a diagram showing an example of an operation for acquiring harvested crops stored in a container of a harvester using an unmanned aerial vehicle.
FIG. **17B** is a diagram showing an example of an operation for acquiring harvested crops stored in a container of a harvester using an unmanned aerial vehicle.
FIG. **17C** is a diagram showing an example of an operation for acquiring harvested crops stored in a container of a harvester using an unmanned aerial vehicle.
FIG. **18A** is a diagram showing an example of an operation for acquiring a container in which harvested crops are stored using an unmanned aerial vehicle.
FIG. **18B** is a diagram showing an example of an operation for acquiring a container in which harvested crops are stored using an unmanned aerial vehicle.
FIG. **18C** is a diagram showing an example of an operation for acquiring a container in which harvested crops are stored using an unmanned aerial vehicle.
FIG. **18D** is a diagram showing an example of a small unmanned aerial vehicle that harvests crops.
FIG. **19** is a diagram showing an example of an agricultural machine.
FIG. **20A** is a diagram showing an example of an operation for scooping up bales discharged from a baler.
FIG. **20B** is a diagram showing an example of an operation for scooping up bales discharged from a baler.
FIG. **20C** is a diagram showing an example of an operation for scooping up bales discharged from a baler.
FIG. **21** is a flowchart showing an example of processing for determining an unmanned aerial vehicle that transports packages of harvested crops from among multiple unmanned aerial vehicles.
FIG. **22** is a flowchart showing an example of processing for determining an unmanned aerial vehicle that transports packages of harvested crops from among multiple unmanned aerial vehicles.
FIG. **23** is a flowchart showing an example of processing for determining an unmanned aerial vehicle that transports packages of harvested crops from among multiple unmanned aerial vehicles.
FIG. **24** is a diagram showing an example of a field where an unmanned aerial vehicle performs operations to acquire and transport packages.
FIG. **25** is a flowchart showing an example of processing where an unmanned aerial vehicle itself determines whether it can transport a target package.
FIG. **26** is a diagram showing an example of an unmanned aerial vehicle supporting an implement.
FIG. **27** is a flowchart showing an example of an operation for causing an unmanned aerial vehicle supporting an implement to separate the implement and perform transport of harvested crops.
FIG. **28A** is a diagram showing an unmanned aerial vehicle supporting an implement performing work in a field.
FIG. **28B** is a diagram showing an unmanned aerial vehicle supporting an implement performing work in a field.
FIG. **28C** is a diagram showing an unmanned aerial vehicle that has separated an implement.

### DESCRIPTION OF EMBODIMENTS

Hereinafter, embodiments of the present disclosure will be described. However, unnecessarily detailed descriptions may be omitted. For example, detailed descriptions of already well-known matters and redundant descriptions of substantially identical configurations may be omitted. This is to avoid unnecessary redundancy in the following description and to facilitate understanding by those skilled in the art. Note that the inventors provide the accompanying drawings and the following description for those skilled in the art to fully understand the present disclosure, and do not intend to limit the subject matter described in the claims thereby. In the following description, components having the same or similar functions are denoted by the same reference numerals. The reference signs **F, Re, L, R, U, D** attached to the drawings represent front, rear, left, right, up, and down, respectively.

The following embodiments are illustrative, and the technology of the present disclosure is not limited to the following embodiments. The contents of the following embodiments are merely examples, and various modifications are possible as long as no technical contradiction arises. Moreover, one aspect and another aspect can be combined as long as no technical contradiction arises.

### (Unmanned Aerial Vehicle)

An unmanned aerial vehicle equipped with multiple rotors includes a rotary drive device that rotates rotors (hereinafter sometimes referred to as "propellers"). Hereinafter, such an unmanned aerial vehicle is referred to as a "multicopter."

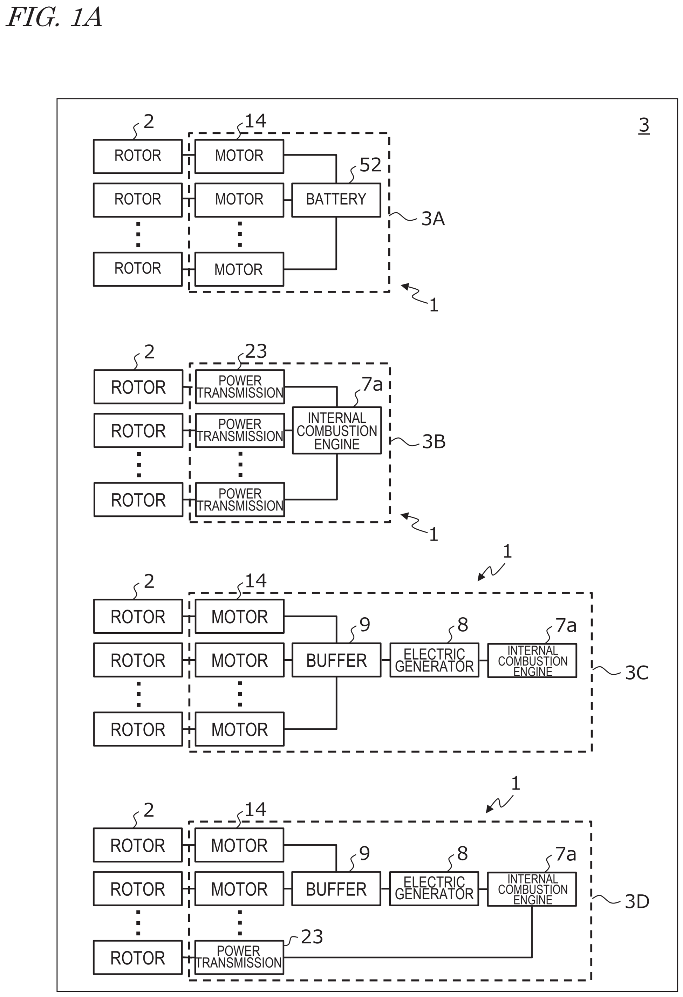

There are various forms of configuration for the rotary drive device that a multicopter is equipped with. FIG. **1A** is a block diagram schematically showing four examples of the rotary drive device **3** in the present disclosure. A flight device 1 that causes a multicopter to fly includes multiple rotors **2** and the rotary drive device **3.**

A first rotary drive device **3A** shown in FIG. **1A** has multiple electric motors (hereinafter referred to as "motors") **14** that rotate the multiple rotors **2,** and a battery **52** that stores electric power to be supplied to each motor **14.** The battery **52** is, for example, a secondary battery such as a polymer lithium-ion battery. Each rotor **2** is connected to the output shaft of the corresponding motor **14** and is rotated by the motor **14.** To increase payload and/or flight time, it is necessary to increase the storage capacity of the battery **52.** The storage capacity of the battery **52** can be increased by enlarging the battery **52,** but enlarging the battery **52** leads to an increase in weight.

A second rotary drive device **3B** shown in FIG. **1A** has a power transmission system **23** mechanically connected to the rotor **2,** and an internal combustion engine **7a** that provides driving force (torque) to the power transmission system **23.** The power transmission system **23** includes mechanical components such as gears or belts, and transmits the torque of the output shaft of the internal combustion engine **7a** to the rotor **2.** The internal combustion engine **7a** can efficiently generate mechanical energy through fuel combustion. Examples of the internal combustion engine **7a** may include gasoline engines, diesel engines, and hydrogen engines. Also, the number of internal combustion engines **7a** included in the rotary drive device **3B** is not limited to one.

A third rotary drive device **3C** shown in FIG. **1A** has multiple motors **14,** a power buffer **9** that stores electric power to be supplied to each motor **14,** a power generation device **8** such as an alternator that generates electric power, and an internal combustion engine **7a** that provides mechanical energy for power generation to the power generation device **8.** A typical example of the power buffer **9** is a battery such as a secondary battery, but it may be a capacitor. In the third rotary drive device **3C,** even when the storage capacity of the power buffer **9** is not large, the power generation device **8** generates electric power using the driving force (mechanical energy) of the internal combustion engine **7a,** making it possible to increase payload and/or flight time. This type of drive is called "series hybrid drive." The power generation device **8** and internal combustion engine **7a** in series hybrid drive are called "range extenders" to extend the flight distance of the multicopter.

A fourth rotary drive device **3D** shown in FIG. **1A** has multiple motors **14,** a power buffer **9** that stores electric power to be supplied to each motor **14,** a power generation device **8** such as an alternator that generates electric power, an internal combustion engine **7a** that provides driving force for power generation to the power generation device **8,** and a power transmission system **23** that transmits the driving force generated by the internal combustion engine **7a** to the rotor **2** to rotate the rotor **2.** At least one rotor **2** among the multiple rotors **2** is rotated by the internal combustion engine **7a,** and other rotors **2** are rotated by the motors **14.** In the fourth rotary drive device **3D,** the mechanical energy generated by the internal combustion engine **7a** can be used for rotor **2** rotation without being converted to electric power, making it possible to improve energy utilization efficiency. This type of drive is called "parallel hybrid drive."

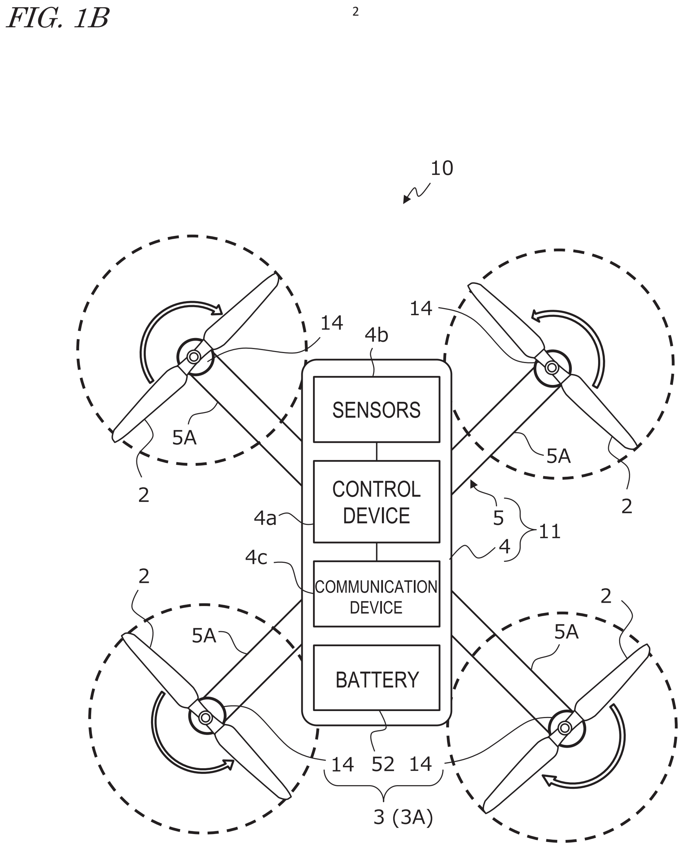

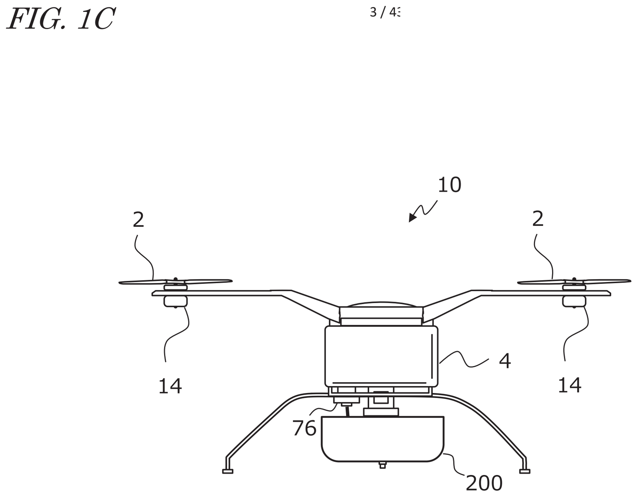

FIG. **1B** is a plan view schematically showing one of the basic configuration examples of the multicopter **10.** The configuration example in FIG. **1B** includes the first rotary drive device **3A** shown in FIG. **1A** as the rotary drive device **3.** That is, the rotary drive device **3 (3A)** in this example has the motor **14** and the battery **52.** FIG. **1C** is a side view schematically showing the multicopter **10.**

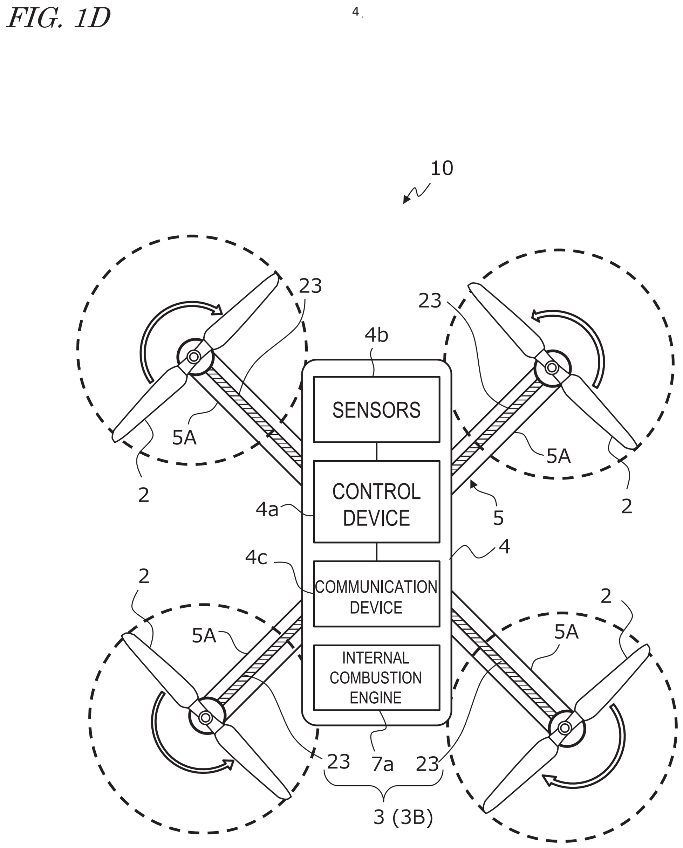

The multicopter **10** shown in FIGS. **1****B** and **1C** includes multiple rotors **2,** a main body **4,** and a body frame **5** that supports the rotors **2** and the main body **4.** The body frame **5** supports the main body **4** at a central portion and rotatably supports the multiple rotors **2** with multiple arms **5A** extending outward from the central portion. A motor **14** that rotates the rotor **2** is provided near the tip of each arm **5A.** The main body **4** and the body frame **5** are collectively referred to as "body **11"** in some cases.

In the example of FIG. **1B****,** the multicopter **10** is a quad-type multicopter (quadcopter) equipped with four rotors **2.** Rotors **2** positioned on one diagonal line rotate in the same direction (clockwise or counterclockwise), but rotors **2** positioned on different diagonal lines rotate in opposite directions.

The main body **4** includes a control device **4a** that controls the operation of devices and components mounted on the multicopter **10,** a sensor group **4b** connected to the control device **4a,** a communication device **4c** connected to the control device **4a,** and the battery **52.**

The control device **4a** may include, for example, a flight control device such as a flight controller and an upper-level computer (companion computer). The companion computer can execute advanced computational processing such as image processing, obstacle detection, and obstacle avoidance based on sensor data acquired by the sensor group **4b.**

The sensor group **4b** may include an acceleration sensor, an angular velocity sensor, a geomagnetic sensor, an atmospheric pressure sensor, an altitude sensor, a temperature sensor, a flow sensor, an imaging device, a laser sensor, an ultrasonic sensor, an obstacle contact sensor, and a GNSS (Global Navigation Satellite System) receiver. The acceleration sensor and angular velocity sensor may be mounted on the main body **4** as components of an IMU (Inertial Measurement Unit), for example. Examples of the laser sensor may include a laser range finder used for measuring distance to the ground, for example, and two-dimensional or three-dimensional LiDAR (light detection and ranging).

The communication device **4c** may include a wireless communication module for transmitting and receiving signals with a transmitter or ground station (Ground Control Station: GCS) on the ground via an antenna, a mobile communication module using a cellular communication network, etc. The communication device **4c** can receive signals such as control commands transmitted from the ground and transmit sensor data such as image data acquired by the sensor group **4b** as telemetry information. The communication device **4c** may have functions for communication between multicopters and satellite communication functions. The control device **4a** can connect to computers on the cloud through the communication device **4c.** Part or all of the functions of the companion computer may be executed by computers on the cloud.

The battery **52** is a secondary battery that can store electric power through charging and supply electric power to the motors **14** through discharging. Through the operation of the battery **52** and the multiple motors **14,** the multiple rotors **2** are rotationally driven, making it possible to generate desired thrust. Each of the multiple rotors **2** generally has multiple blades with fixed pitch angles and generates thrust through rotation. The pitch angles may be variable. Not all of the multiple rotors **2** need to have the same diameter (propeller diameter), and one or more rotors **2** may have a larger diameter than other rotors **2.** The thrust (static thrust) generated by the rotating rotor **2** is generally proportional to the cube of the diameter of the rotor **2.** Therefore, when rotors **2** with different diameters are provided, rotors **2** with relatively large diameters may be referred to as "main rotors," and rotors **2** with relatively small diameters may be referred to as "sub-rotors." Note that, regardless of diameter size, rotors **2** capable of generating relatively large thrust and rotors **2** with relatively small thrust may be included depending on the configuration of the rotary drive device **3.** In that case, rotors **2** capable of generating relatively large thrust may be referred to as "main rotors," and rotors **2** with relatively small thrust may be referred to as "sub-rotors." For example, rotors **2** that generate relatively large thrust per rotation may be referred to as "main rotors," and rotors **2** that generate relatively small thrust per rotation may be referred to as "sub-rotors." In one example, main rotors may be arranged inward relative to sub-rotors. In other words, each rotor **2** may be arranged such that the distance from the center of the body to the rotation axis of each main rotor is shorter than the distance from the center of the body to the rotation axis of each sub-rotor.

In this example, the rotary drive device **3** has multiple motors **14.** As described above, the rotary drive device **3** may include the internal combustion engine **7a.**

FIG. **1D** is a plan view schematically showing a basic configuration example of the multicopter **10** equipped with the second rotary drive device **3B** as the rotary drive device **3.** In the example shown in FIG. **1D**, the internal combustion engine **7a** is supported by the main body **4.** In this example, the driving force generated by the internal combustion engine **7a** is transmitted to the multiple rotors **2** by multiple power transmission systems **23** to rotate each rotor **2.** The control device **4a** can change the rotation speed of individual rotors **2** by controlling each power transmission system **23.** The rotary drive device **3B** may include a mechanism that changes the pitch angle of the blades of each of the multiple rotors **2.** In that case, the control device **4a** may adjust the lift generated by each rotor **2** by controlling the mechanism to change the pitch angle of the blades.

Note that in "parallel hybrid drive" where some of the multiple rotors **2** are rotated by the internal combustion engine **7a** and other rotors **2** are rotated by the motors **14,** the internal combustion engine **7a** and the battery **52** are supported by the main body **4.** At least one rotor **2** among the multiple rotors **2** is connected to the internal combustion engine **7a** via the power transmission system **23,** and other rotors **2** are connected to the motors **14.**

In such parallel hybrid drive, the diameter of one or more rotors **2** rotated by the internal combustion engine **7a** may be made larger than the diameter of other rotors **2** rotated by the motors **14.** In other words, the internal combustion engine **7a** may be used for rotation of main rotors, and the motors **14** may be used for rotation of sub-rotors. In such cases, main rotors are mainly used for thrust generation, and sub-rotors are used for thrust generation and attitude control. Main rotors may be called "booster rotors," and sub-rotors may be called "attitude control rotors."

In the case of parallel hybrid drive, the internal combustion engine is used for both thrust generation and power generation. It is also possible to achieve thrust generation and power generation in a balanced manner by selectively transmitting the driving force (torque) generated by the internal combustion engine to one or both of the rotor and the power generation device.

When a multicopter is equipped with an internal combustion engine and performs at least one of thrust generation and power generation using the internal combustion engine, this contributes to increasing payload and flight time. Attitude control of a multicopter is preferably performed by rotating propellers using motors that have better response characteristics than internal combustion engines. Therefore, in applications where accurate attitude control of the multicopter is required, it is preferable to adopt parallel hybrid drive or series hybrid drive to increase payload and flight time. Note that when the rotary drive device **3** includes a mechanism that changes the pitch angle of the blades of each of the multiple rotors **2,** attitude can also be adjusted by changing the pitch angle of each blade.

With increased payload and flight time, the applications of multicopters can be further expanded. For example, in the agricultural field, multicopters are currently being used for agricultural chemical spraying or monitoring crop growth conditions, but by connecting various ground work machines (hereinafter sometimes simply referred to as "work machines") to multicopters, it becomes possible to execute various agricultural operations from the air. Work machines for agricultural use are sometimes called "implements." Examples of implements may include sprayers that spray chemicals on crops, mowers (grass cutters), seeders (seeding machines), spreaders (fertilizing machines), rakes, balers (grass collection machines), harvesters, plows, harrows, or rotaries. Work vehicles such as tractors are not included in the "implements" in the present disclosure.

In the example shown in FIG. **1C****,** an implement **200** capable of spraying agricultural chemicals or fertilizers on a field or crops in the field is connected to the multicopter **10.** With increased payload and flight time, it becomes possible to realize larger and/or more multifunctional implements **200.** For example, by exchanging the implement **200** connected to the multicopter **10,** it becomes possible to execute various ground operations (agricultural operations) including liquid application, granular application, fertilization, thinning, weeding, transplanting, direct seeding, and harvesting. The implement **200** may include mechanisms such as robot hands. In that case, one implement **200** can execute various ground operations. If the implement **200** has a space large enough to accommodate materials, such an implement **200** can also transport agricultural materials or harvested crops over a wide range. There are various forms for connecting the implement **200** to the multicopter **10.** The multicopter **10** may suspend and tow the implement **200** with a cable. The implement **200** towed by the multicopter **10** can also perform ground operations while being towed while the multicopter **10** is flying or hovering. The implement **200** during work may be in the air or on the ground.

In the example shown in FIG. **1C****,** the multicopter **10** includes a power supply device **76.** The power supply device **76** is a device that supplies electric power to the implement **200** from a driving energy source such as the battery **52** or the power generation device **8** that the multicopter **10** is equipped with. Various functions of the implement **200** can be executed by this electric power. The implement **200** includes actuators such as motors that operate using electric power obtained from the power supply device **76** of the multicopter **10.** The implement **200** preferably includes a battery that stores electric power. The ESC **16** described later may be included in the control device **4a.**

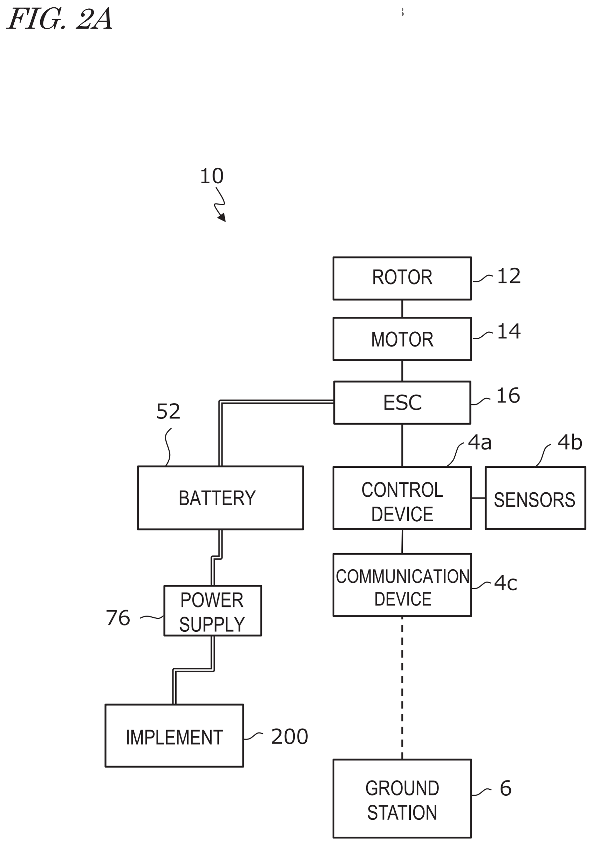

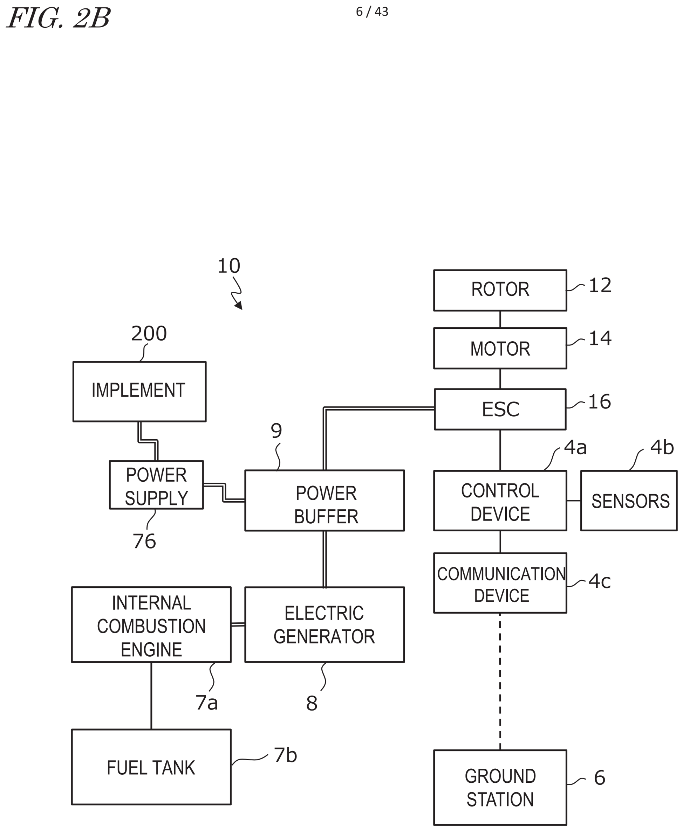

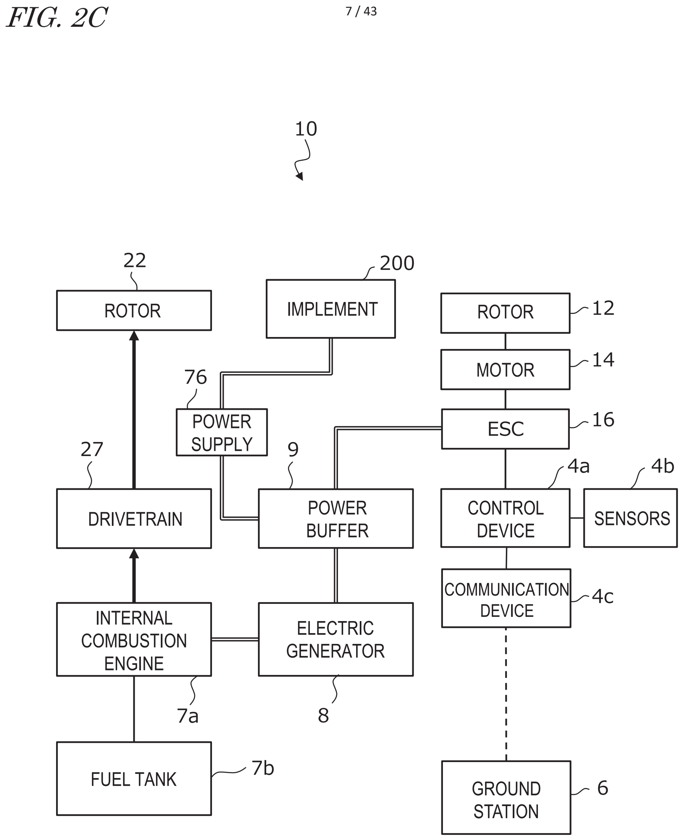

FIG. **2A** is a block diagram showing a basic configuration example of a battery-driven multicopter **10.** The battery-driven multicopter **10** includes multiple rotors **12,** multiple motors **14** that respectively rotate the multiple rotors **12,** multiple ESCs (Electric Speed Controllers) **16** having motor drive circuits that respectively drive the multiple motors **14,** a battery **52** that supplies electric power to the corresponding motor **14** via each ESC **16,** a control device **4a** that controls each ESC **16** to perform flight while controlling attitude, a sensor group **4b**, a communication device **4c,** and a power supply device **76** electrically connected to the battery **52.** The rotor **12** is an example of the rotor **2.** In FIG. **2A****,** for simplicity, the rotor **12,** motor **14,** and ESC **16** are each shown by one block, but the numbers of rotors **12,** motors **14,** and ESCs **16** are each multiple. This point is the same for FIGS. **2B** and **2C****.**

The control device **4a** can wirelessly receive control commands from, for example, a ground station **6** on the ground via the communication device **4c.** The number of ground stations **6** is not limited to one and may be distributed in multiple locations. The communication device **4c** can also wirelessly receive control commands from a pilot's control device on the ground. The control device **4a** may have functions to automatically or autonomously execute each operation of takeoff, flight, obstacle avoidance, and landing based on sensor data obtained from the sensor group **4b**. The control device **4a** may be configured to communicate with the implement **200** connected to the power supply device **76** and acquire signals indicating the state of the implement **200** from the implement **200.** Also, the control device **4a** may provide signals controlling the operation of the implement **200** to the implement **200.** Furthermore, the implement **200** may generate signals instructing the operation of the multicopter **10** and transmit them to the control device **4a.** Such communication between the control device **4a** and the implement **200** can be performed by wire or wirelessly.

FIG. **2B** is a block diagram showing a basic configuration example of a series hybrid-driven multicopter **10.** The series hybrid-driven multicopter **10** includes multiple rotors **12,** multiple motors **14,** multiple ESCs **16,** a control device **4a,** a sensor group **4b**, and a communication device **4c,** similar to the battery-driven multicopter **10.** The illustrated series hybrid-driven multicopter **10** further includes an internal combustion engine **7a,** a fuel tank **7b** that stores fuel for the internal combustion engine **7a,** a power generation device 8 that is driven by the internal combustion engine **7a** to generate electric power, a power buffer **9** that temporarily stores electric power generated by the power generation device **8,** and a power supply device **76** electrically connected to the power buffer **9.** The power buffer **9** is, for example, a battery such as a secondary battery. Electric power generated by the power generation device **8** is supplied to the motors **14** via the power buffer **9** and the ESCs **16.** Also, electric power generated by the power generation device **8** can also be supplied to the implement **200** via the power supply device **76.**

FIG. **2C** is a block diagram showing a basic configuration example of a parallel hybrid-driven multicopter **10.** The parallel hybrid-driven multicopter **10** includes multiple rotors **12,** multiple motors **14** that respectively drive the multiple rotors **12,** multiple ESCs **16,** a control device **4a,** a sensor group **4b**, a communication device **4c,** an internal combustion engine **7a,** a fuel tank **7b**, a power generation device **8,** a power buffer **9,** and a power supply device **76,** similar to the series hybrid-driven multicopter **10.** The parallel hybrid-driven multicopter **10** further includes a drivetrain **27** that transmits the driving force of the internal combustion engine **7a,** and a rotor **22** that rotates by receiving the driving force of the internal combustion engine **7a** from the drivetrain **27.** One of the rotor **12** and the rotor **22** may be called a "first rotor," and the other may be called a "second rotor" to distinguish them from each other. The rotor **22** connected to and rotated by the drivetrain **27** may be one or two or more.

In the parallel hybrid-driven multicopter **10,** the internal combustion engine **7a** not only drives the power generation device **8** to perform power generation but also mechanically transmits energy for rotating the rotor **22** to the rotor **22.** On the other hand, in the series hybrid-driven multicopter **10,** all rotors **12** rotate by electric power generated by the power generation device **8.** Therefore, in the series hybrid-driven multicopter **10,** if the power generation device **8** is, for example, a fuel cell, the internal combustion engine **7a** is not an essential component.

### (Harvest Management System)

Next, a harvest management system will be described that acquires harvested crops that an agricultural machine has harvested from a field using the unmanned aerial vehicle **10.**

The agricultural machine in the present embodiment may be a mobile agricultural machine (Mobile Agricultural Machine) capable of harvesting crops from a field while moving. The agricultural machine is, for example, a harvester, a tractor, or an agricultural mobile robot. In some cases, an implement attached to or towed by an agricultural machine such as a tractor and the agricultural machine as a whole function as one "agricultural machine."

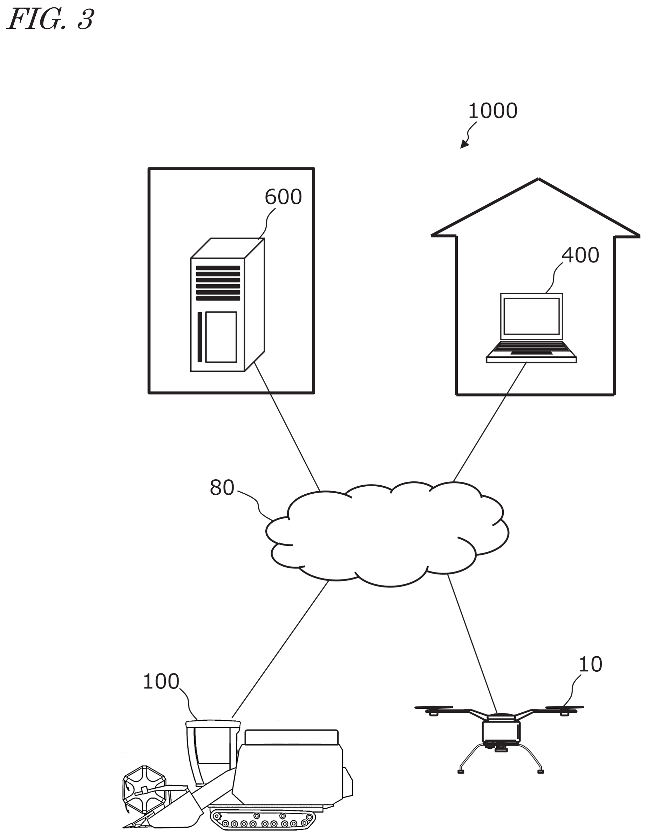

FIG. **3** is a diagram showing an example of a harvest management system **1000** according to the present embodiment. The harvest management system **1000** includes an agricultural machine **100,** an unmanned aerial vehicle **10,** a terminal device **400,** and a management device **600.** FIG. **3** shows a harvester as an example of the agricultural machine **100.** The unmanned aerial vehicle **10** is, for example, the multicopter described above.

The harvester **100** may be, for example, a combine harvester. The harvester **100** performs cutting of crops in the field, threshing of the cut crops, storage of harvested crops after threshing, discharge of harvested crops, etc. The crops in the field may be plants from which grains such as rice, wheat, corn, and soybeans can be harvested, but are not limited thereto. The unmanned aerial vehicle **10** acquires and transports harvested crops that the harvester **100** has harvested from the field.

The harvester **100** has an automatic driving function. That is, the harvester **100** can travel not manually but through the operation of a control device. The control device in the present embodiment is provided inside the harvester **100** and can control both the speed and steering of the harvester **100.** The harvester **100** may automatically travel not only within the field but also outside the field (for example, on roads). The harvester **100** includes devices used for positioning or self-position estimation, such as a GNSS unit and a LiDAR sensor. The control device of the harvester **100** automatically drives the harvester **100** based on the position of the harvester **100** and information about a target route.

The unmanned aerial vehicle **10** has an autonomous flight function and can fly through the operation of a control device. The unmanned aerial vehicle **10** includes devices used for positioning or self-position estimation, such as a GNSS unit and a LiDAR sensor. The control device of the unmanned aerial vehicle **10** automatically flies the unmanned aerial vehicle **10** based on the position of the unmanned aerial vehicle **10** and information about a target flight route.

The terminal device **400** is a computer used by a user who remotely monitors the harvester **100** and the unmanned aerial vehicle **10.** The management device **600** is a computer managed by a business operator that operates the harvest management system **1000.** The harvester **100,** the unmanned aerial vehicle **10,** the terminal device **400,** and the management device **600** can communicate with each other via a network **80.** Although one harvester **100** and one unmanned aerial vehicle **10** are illustrated in FIG. **3****,** the harvest management system **1000** may include multiple harvesters **100** and/or multiple unmanned aerial vehicles **10.** The harvest management system **1000** may include other agricultural machines.

The management device **600** is a computer that manages agricultural work and transport work by the harvester **100** and the unmanned aerial vehicle **10.** The management device **600** may be, for example, a server computer that centrally manages information about fields on the cloud and supports agriculture by utilizing data on the cloud. The management device **600,** for example, creates work plans for the harvester **100** and the unmanned aerial vehicle **10,** and causes the harvester **100** and the unmanned aerial vehicle **10** to execute agricultural work according to those work plans. The management device **600,** for example, generates target routes within fields based on information input by a user using the terminal device **400** or other devices. The management device **600** may further generate and edit environment maps based on data collected by sensing devices such as LiDAR sensors used by the harvester **100,** the unmanned aerial vehicle **10,** other mobile bodies, etc. The management device **600** transmits data of the generated work plans, target routes, and environment maps to the harvester **100** and the unmanned aerial vehicle **10.** The harvester **100** and the unmanned aerial vehicle **10** automatically perform movement and various operations based on those data.

The terminal device **400** is a computer used by a user who is at a location away from the harvester **100** and the unmanned aerial vehicle **10.** The terminal device **400** shown in FIG. **3** is a laptop computer, but is not limited thereto. The terminal device **400** may be a stationary computer such as a desktop PC (Personal Computer), or may be a mobile terminal such as a smartphone or tablet computer. The terminal device **400** can be used for remotely monitoring the harvester **100** and the unmanned aerial vehicle **10,** or for remotely operating the harvester **100** and the unmanned aerial vehicle **10.** For example, the terminal device **400** can display on a display video captured by cameras (imaging devices) that the harvester **100** and the unmanned aerial vehicle **10** each include. The terminal device **400** can also display on a display a setting screen for a user to input information necessary for creating work plans for the harvester **100** (for example, schedules for each agricultural work). When the user inputs necessary information on the setting screen and performs a transmission operation, the terminal device **400** transmits the input information to the management device **600.** The management device **600** creates work plans based on this information. The terminal device **400** may further have a function to display on a display a setting screen for a user to input information necessary for setting target routes.

The configuration and operation of the system in the present embodiment will be described in more detail below.

### (System Configuration)

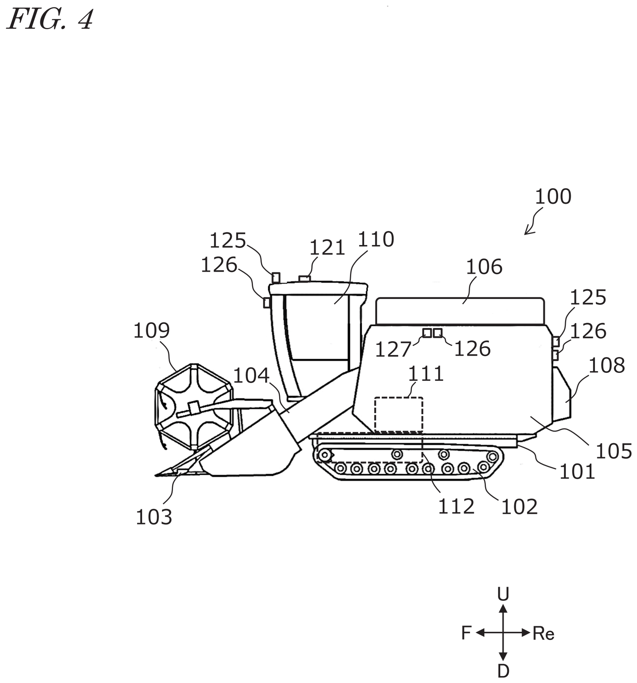

FIG. **4** is a side view schematically showing an example of the harvester **100.** The harvester **100** includes a vehicle body **101** and a traveling device **102.** The illustrated traveling device **102** is a crawler-type traveling device, but may be a traveling device equipped with wheeled tires. A cabin **110** is provided above the vehicle body **101.**

A cutting device **103** for cutting crops is provided in front of the traveling device **102** in a height-adjustable manner. A reel **109** for raising the stem parts of crops is provided above the cutting device **103** in a height-adjustable manner. Behind the cabin **110,** a threshing device **105** and a tank **106** for storing harvested crops are arranged side by side in the left-right direction. A conveying device **104** for conveying cut crops is provided between the cutting device **103** and the threshing device **105.** The threshing device **105** performs threshing of cut crops. The tank **106** stores harvested crops obtained by threshing grains, etc. A straw processing device **108** is provided behind the threshing device **105.** The straw processing device **108** finely cuts stem parts, etc., after grains and other harvested crops have been removed and discharges them to the outside. The tank **106** may be provided with a discharge device that discharges harvested crops from the tank **106.**

Since the configurations and operations of various devices that perform harvesting operations, such as the cutting device **103,** the conveying device **104,** the threshing device **105,** the straw processing device **108,** the reel **109,** and the discharge device, are known, detailed descriptions thereof are omitted here.

The harvester **100** in the present embodiment can operate in both manual driving mode and automatic driving mode. In automatic driving mode, the harvester **100** can travel unmanned. Also, in automatic driving mode, the harvester **100** can travel unmanned while performing operations to harvest crops in the field.

As shown in FIG. **4****,** the harvester **100** includes a prime mover (engine) **111** and a transmission **112.** Inside the cabin **110,** a driver's seat, operating levers, an operating terminal, and a group of switches for operation are provided.

The harvester **100** may include at least one sensing device that senses the environment around the harvester **100** and a control device that processes sensing data output from the at least one sensing device. The harvester **100** includes multiple sensing devices. The sensing devices may be a LiDAR sensor **125,** a camera **126,** and an obstacle sensor **127.**

The camera **126** may be provided, for example, at the front, rear, left, and right of the harvester **100.** The camera **126** captures the environment around the harvester **100** and generates image data. Images acquired by the camera **126** are output to a control device mounted on the harvester **100** and can be transmitted to the terminal device **400** for remote monitoring. Also, the images may be used for monitoring the harvester **100** during unmanned operation.

The LiDAR sensor **125** illustrated in FIG. **4** is arranged at the front and rear portions of the harvester **100.** The LiDAR sensor **125** may further be provided at side portions of the harvester **100.** The harvester **100** may include multiple LiDAR sensors arranged at mutually different positions in different orientations. The LiDAR sensor **125** may be a 3D-LiDAR sensor, but may also be a 2D-LiDAR sensor. The LiDAR sensor **125** senses the environment around the harvester **100** and outputs sensing data. The LiDAR sensor **125** repeatedly outputs sensor data indicating the distance and direction to each measurement point of objects existing in the surrounding environment, or three-dimensional or two-dimensional coordinate values of each measurement point. The sensor data output from the LiDAR sensor **125** is processed by the control device of the harvester **100.** The control device can perform self-position estimation of the harvester **100** by matching the sensor data with an environment map. The control device can further detect objects such as obstacles existing around the harvester **100** based on the sensor data. The control device can also generate or edit environment maps using algorithms such as SLAM (Simultaneous Localization and Mapping).

The obstacle sensor **127** illustrated in FIG. **4** is provided at side portions of the harvester **100.** The obstacle sensor **127** may also be arranged at other locations. For example, the obstacle sensor **127** may be provided at front and rear portions of the harvester **100.** The obstacle sensor **127** may include, for example, a laser scanner or ultrasonic sonar. The obstacle sensor **127** is used to detect obstacles in the surroundings during automatic travel and stop or bypass the harvester **100.** The LiDAR sensor **125** may be used as one of the obstacle sensors **127.**

The harvester **100** includes a positioning device **121** that detects the geographic coordinates of the position of the harvester **100.** The positioning device **121** is, for example, a GNSS unit. The GNSS unit **121** includes a GNSS receiver. The GNSS receiver may include an antenna that receives signals from GNSS satellites and a processor that calculates the position of the harvester **100** based on signals received by the antenna. The GNSS unit **121** receives satellite signals transmitted from multiple GNSS satellites and performs positioning based on the satellite signals. GNSS is a general term for satellite positioning systems such as GPS (Global Positioning System), QZSS (Quasi-Zenith Satellite System, for example, Michibiki), GLONASS, Galileo, and BeiDou. The GNSS unit **121** in the present embodiment is provided at the top of the cabin **110,** but may be provided at other positions.

The control device of the harvester **100** may use sensing data acquired by sensing devices such as the camera **126** and/or the LiDAR sensor **125** for positioning in addition to positioning results by the GNSS unit **121.** When landmarks that function as feature points exist in the environment where the harvester **100** travels, the position and orientation of the harvester **100** can be estimated with high accuracy based on data acquired by the camera **126** and/or the LiDAR sensor **125** and an environment map stored in advance in a storage device. By correcting or complementing position data based on satellite signals using data acquired by the camera **126** and/or the LiDAR sensor **125,** the position of the harvester **100** can be specified with higher accuracy.

The prime mover **111** may be, for example, a diesel engine. An electric motor may be used instead of a diesel engine. The transmission **112** can change the propulsion force and movement speed of the harvester **100** through gear changes. The transmission **112** can also switch between forward and reverse movement of the harvester **100.**

In forms where the harvester **100** includes the crawler-type traveling device **102,** the traveling direction of the harvester **100** can be changed by making the rotation speeds of left and right wheels equipped with tracks different from each other, or by making the rotation directions of the left and right wheels different from each other. In forms where the harvester **100** includes a traveling device equipped with wheeled tires, the harvester **100** includes a power steering device, and the traveling direction of the harvester **100** can be changed by controlling the power steering device to change the turning angle (also called "steering angle") of steered wheels.

The harvester **100** shown in FIG. **4** is capable of manned operation, but may correspond only to unmanned operation. In that case, components necessary only for manned operation, such as the cabin **110,** steering device, and driver's seat, may not be provided in the harvester **100.** The unmanned harvester **100** can travel by autonomous travel or remote operation by a user.

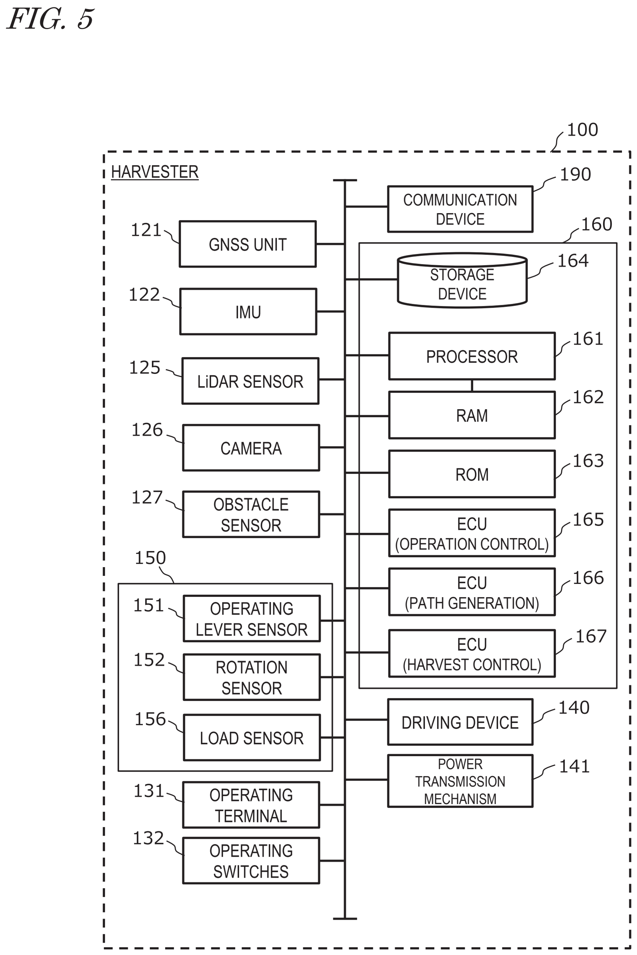

FIG. **5** is a block diagram showing a configuration example of the harvester **100.** The harvester **100** can communicate with the terminal device **400** and the management device **600** via the network **80** (FIG. **3****).** The harvester **100** and the unmanned aerial vehicle **10** may communicate via the network **80** or may communicate directly without going through the network **80.**

The harvester **100** illustrated in FIG. **5** includes a GNSS unit **121,** an inertial measurement unit (IMU) **122,** a LiDAR sensor **125,** a camera **126,** an obstacle sensor **127,** an operating terminal **131,** an operating switch group **132,** a driving device **140,** a power transmission mechanism **141,** a sensor group **150,** a control device **160,** and a communication device **190.** These components are connected to communicate with each other via a bus.

The GNSS unit **121** includes, for example, a GNSS receiver and an RTK receiver. The sensor group **150** detects various states of the harvester **100.** The sensor group **150** includes an operating lever sensor **151,** a rotation sensor **152,** and a load sensor **156.** The control device **160** includes a processor **161,** RAM (Random Access Memory) **162,** ROM (Read Only Memory) **163,** a storage device **164,** and multiple electronic control units (ECUs) **165** to **167.** FIG. **5** shows components that have relatively high relevance to automatic driving operations by the harvester **100,** and illustration of other components is omitted.

The GNSS unit **121** receives satellite signals transmitted from multiple GNSS satellites and generates GNSS data based on the satellite signals. The GNSS data is generated in a predetermined format such as the NMEA-0183 format. The GNSS data may include, for example, values indicating the identification numbers, elevation angles, azimuth angles, and reception strengths of each satellite from which satellite signals were received.

The GNSS unit **121** may perform positioning of the harvester **100** using RTK (Real Time Kinematic)-GNSS. In positioning using RTK-GNSS, correction signals transmitted from reference stations are used in addition to satellite signals transmitted from multiple GNSS satellites. Reference stations may be installed near fields where the harvester **100** performs work travel (for example, at positions within 10 km from the harvester **100).** Reference stations generate correction signals in, for example, RTCM format based on satellite signals received from multiple GNSS satellites and transmit them to the GNSS unit **121.** The RTK receiver **122** includes an antenna and a modem and receives correction signals transmitted from reference stations. The GNSS unit **121** corrects positioning results based on correction signals. By using RTK-GNSS, positioning can be performed with accuracy of, for example, an error of several centimeters. Position data including information about latitude, longitude, and altitude is acquired by high-precision positioning using RTK-GNSS. The GNSS unit **121** calculates the position of the harvester **100,** for example, at a frequency of about 1 to 10 times per second.

Note that the positioning method is not limited to RTK-GNSS, and any positioning method (such as interferometric positioning or relative positioning) that can obtain position data with necessary accuracy can be used. For example, positioning using VRS (Virtual Reference Station) or DGPS (Differential Global Positioning System) may be performed. When position data with necessary accuracy can be obtained without using correction signals transmitted from reference stations, position data may be generated without using correction signals. In that case, the GNSS unit **121** may not include an RTK receiver.

Even when RTK-GNSS is used, in places where correction signals from reference stations cannot be obtained (for example, on roads far from fields), the position of the harvester **100** is estimated by other methods without relying on signals from RTK receivers. For example, the position of the harvester **100** may be estimated by matching data output from the LiDAR sensor **125** and/or the camera **126** with high-precision environment maps.

The IMU **122** may include a 3-axis acceleration sensor and a 3-axis gyroscope. The IMU **122** may include an orientation sensor such as a 3-axis geomagnetic sensor. The IMU **122** functions as a motion sensor and can output signals indicating various quantities such as acceleration, velocity, displacement, and attitude of the harvester **100.**

Position data can be complemented using output signals from the IMU **122.** The IMU **122** can measure the inclination and minute movements of the harvester **100.** By complementing position data based on satellite signals using data acquired by the IMU **122,** positioning performance can be improved.

In addition to the satellite signals and correction signals described above, the position and orientation of the harvester **100** can be estimated with higher accuracy based on signals output from the IMU **122.** Signals output from the IMU **122** can be used for correction or complementation of positions calculated based on satellite signals and correction signals. The IMU **122** outputs signals at a higher frequency than position detection using satellite signals. Using those high-frequency signals, the position and orientation of the harvester **100** can be measured at a higher frequency (for example, 10 Hz or higher). Instead of the IMU **122,** a 3-axis acceleration sensor and a 3-axis gyroscope may be provided separately. The IMU **122** may be included in the GNSS unit **121.**

The camera **126** is an imaging device that captures the environment around the harvester **100.** The camera **126** includes, for example, an image sensor such as a CCD (Charge Coupled Device) or CMOS (Complementary Metal Oxide Semiconductor). The camera **126** may also include an optical system including one or more lenses and a signal processing circuit. The camera **126** captures the environment around the harvester **100** while the harvester **100** is traveling and generates data of images (for example, moving images). The camera **126** can capture moving images at a frame rate of, for example, 3 frames per second (fps) or higher. Images generated by the camera **126** may be used, for example, when a remote monitor uses the terminal device **400** to check the environment around the harvester **100.** Images generated by the camera **126** may be used for positioning or obstacle detection. Multiple cameras **126** may be provided at different positions of the harvester **100,** or a single camera may be provided. A visible camera that generates visible light images and an infrared camera that generates infrared images may be provided separately. Both visible cameras and infrared cameras may be provided as cameras that generate images for monitoring. Infrared cameras can also be used for obstacle detection at night.

The obstacle sensor **127** detects objects existing around the harvester **100.** The obstacle sensor **127** may include, for example, a laser scanner or ultrasonic sonar. The obstacle sensor **127** outputs a signal indicating that an obstacle exists when an object exists closer than a predetermined distance from the obstacle sensor **127.** Multiple obstacle sensors **127** may be provided at different positions of the harvester **100.** For example, multiple laser scanners and multiple ultrasonic sonars may be arranged at different positions of the harvester **100.** By providing multiple obstacle sensors **127,** blind spots in monitoring obstacles around the harvester **100** can be reduced.

The operating lever sensor **151** detects operation of operating levers by a user in the cabin **110.** Output signals from the operating lever sensor **151** are used for driving control by the control device **160.** The rotation sensor **152** measures the rotation speed of the axle of the traveling device **102,** that is, the number of rotations per unit time. The rotation sensor **152** may be a sensor using a magnetoresistive element (MR), Hall element, or electromagnetic pickup. The rotation sensor **152** outputs, for example, a numerical value indicating the number of rotations per minute (unit: rpm) of the axle. The rotation sensor **152** is used, for example, to measure the speed of the harvester **100.**

The load sensor **156** is provided at the bottom of the tank **106** and detects the weight of harvested crops in the tank **106.** By detecting the weight of harvested crops in the tank **106,** the control device **160** can recognize the storage state of harvested crops in the tank **106.** A yield sensor and a taste sensor may be provided inside or around the tank **106.** Quality data such as moisture content and protein content of harvested crops is output from the taste sensor.

The driving device **140** includes various devices necessary for driving the harvester **100** for travel, such as the prime mover **111** and the transmission **112.** The prime mover **111** may include an internal combustion engine such as a diesel engine. The driving device **140** may include a traction electric motor instead of or together with the internal combustion engine.

The power transmission mechanism **141** transmits power generated by the prime mover **111** to various devices that perform harvesting operations. The devices that perform harvesting operations are the cutting device **103,** the conveying device **104,** the threshing device **105,** the tank **106,** the straw processing device **108,** the reel **109,** etc. The harvester **100** may include a power source (such as an electric motor) that supplies power to at least one of these devices that perform harvesting operations separately from the prime mover **111.**

The processor **161** may be a semiconductor integrated circuit including, for example, a central processing unit (CPU). The processor **161** may be realized by a microprocessor or microcontroller. Alternatively, the processor **161** may be realized by an FPGA (Field Programmable Gate Array) equipped with a CPU, GPU (Graphics Processing Unit), ASIC (Application Specific Integrated Circuit), ASSP (Application Specific Standard Product), or a combination of two or more circuits selected from these circuits. The processor **161** sequentially executes computer programs stored in the ROM **163** that describe instruction groups for executing at least one process, thereby realizing desired processing.

The ROM **163** is, for example, a writable memory (for example, PROM), a rewritable memory (for example, flash memory), or a read-only memory. The ROM **163** stores programs that control the operation of the processor **161.** The ROM **163** need not be a single storage medium and may be a collection of multiple storage media. Part of the collection of multiple storage media may be removable memory.

The RAM **162** provides a work area for temporarily expanding control programs stored in the ROM **163** during boot-up. The RAM **162** need not be a single storage medium and may be a collection of multiple storage media.

The storage device **164** includes one or more storage media such as flash memory or magnetic disks. The storage device **164** stores various data generated by the GNSS unit **121,** the LiDAR sensor **125,** the camera **126,** the obstacle sensor **127,** the sensor group **150,** and the control device **160.** The data stored by the storage device **164** may include map data (environment maps) of environments where the harvester **100** travels, and data of target routes for automatic driving. Environment maps include information about multiple fields where the harvester **100** performs agricultural work and surrounding roads. Environment maps and target routes may be generated by a processor of the management device **600.** Note that the control device **160** may have functions to generate or edit environment maps and target routes. The control device **160** can edit environment maps and target routes acquired from the management device **600** according to the traveling environment of the harvester **100.** The storage device **164** also stores data of work plans that the communication device **190** receives from the management device **600.**

The storage device **164** also stores computer programs that cause the processor **161** and ECUs **165-167** to execute various operations described later. Such computer programs may be provided to the harvester **100** via storage media (such as semiconductor memory or optical disks) or telecommunication lines (such as the Internet). Such computer programs may be sold as commercial software.

The control device **160** includes multiple ECUs **165-167.** The ECU **165** controls the traveling speed and turning operations of the harvester **100** by controlling the prime mover **111,** the transmission **112,** the traveling device **102,** etc., included in the driving device **140.**

The ECU **165** performs calculations and control for realizing automatic driving based on data output from the GNSS unit **121,** the camera **126,** the obstacle sensor **127,** the LiDAR sensor **125,** the sensor group **150,** and the processor **161.** For example, the ECU **165** identifies the position of the harvester **100** based on data output from at least one of the GNSS unit **121,** the camera **126,** and the LiDAR sensor **125.** Within fields, the ECU **165** may determine the position of the harvester **100** based only on data output from the GNSS unit **121.** The ECU **165** may estimate or correct the position of the harvester **100** based on data acquired by the camera **126** and/or the LiDAR sensor **125.** By using data acquired by the camera **126** and/or the LiDAR sensor **125,** the accuracy of positioning can be further improved. For example, the ECU **165** may estimate the position of the harvester **100** by matching data output from the LiDAR sensor **125** and/or the camera **126** with environment maps. During automatic driving, the ECU **165** performs calculations necessary for the harvester **100** to travel along target routes based on the estimated position of the harvester **100.**

The ECU **166** may determine the destination of the harvester **100** based on work plans stored in the storage device **164** and determine target routes from the starting point of movement of the harvester **100** to the destination. The ECU **166** may perform processing to detect objects located around the harvester **100** based on data output from the camera **126,** the obstacle sensor **127,** and the LiDAR sensor **125.**

The ECU **167** controls operations of the power transmission mechanism **141,** etc., to cause various devices that perform the harvesting operations described above to execute desired operations.

Through the operation of these ECUs, the control device **160** realizes automatic driving and crop harvesting operations. During automatic driving, the control device **160** controls the driving device **140** based on the measured or estimated position of the harvester **100** and target routes. Thereby, the control device **160** can cause the harvester **100** to travel along target routes.

The multiple ECUs included in the control device **160** can communicate with each other according to vehicle bus standards such as CAN (Controller Area Network). Instead of CAN, higher-speed communication methods such as in-vehicle Ethernet (registered trademark) may be used. In FIG. **5****,** each of the ECUs **165** to **167** is shown as an individual block, but each of these functions may be realized by multiple ECUs. An in-vehicle computer that integrates at least some functions of the ECUs **165** to **167** may be provided. The control device **160** may include ECUs other than the ECUs **165** to **167,** and any number of ECUs may be provided according to functions. Each ECU includes a processing circuit including one or more processors. The processor **161** may be integrated with any of the ECUs included in the control device **160.**

The communication device **190** is a device including circuits that communicate with the unmanned aerial vehicle **10,** the terminal device **400,** and the management device **600.** The communication device **190** includes circuits that perform wireless communication with the communication device of the unmanned aerial vehicle **10.** This enables causing the unmanned aerial vehicle **10** to execute desired operations or acquiring information from the unmanned aerial vehicle **10.** The communication device **190** may further include antennas and communication circuits for executing signal transmission and reception via the network **80** with each of the communication devices of the terminal device **400** and the management device **600.** The network **80** may include, for example, cellular mobile communication networks such as 3G, 4G, or 5G and the Internet. The communication device **190** may have a function to communicate with portable terminals used by monitors near the harvester **100.** Communication with such portable terminals may be performed according to any wireless communication standard such as Wi-Fi (registered trademark), cellular mobile communication such as 3G, 4G, or 5G, or Bluetooth (registered trademark).

The operating terminal **131** is a terminal for a user to execute operations related to travel of the harvester **100** and operations of the unmanned aerial vehicle **10,** and is also called a virtual terminal (VT). The operating terminal **131** may include a display device such as a touch screen and/or one or more buttons. The display device may be a display such as liquid crystal or organic light-emitting diode (OLED). By operating the operating terminal **131,** a user can execute various operations such as switching automatic driving mode on/off, recording or editing environment maps, and setting target routes. At least some of these operations may also be realized by operating the operating switch group **132.** The operating terminal **131** may be configured to be removable from the harvester **100.** A user at a location away from the harvester **100** may operate the detached operating terminal **131** to control the operation of the harvester **100.** Instead of the operating terminal **131,** a user may operate a computer such as the terminal device **400** on which necessary application software is installed to control the operation of the harvester **100.**

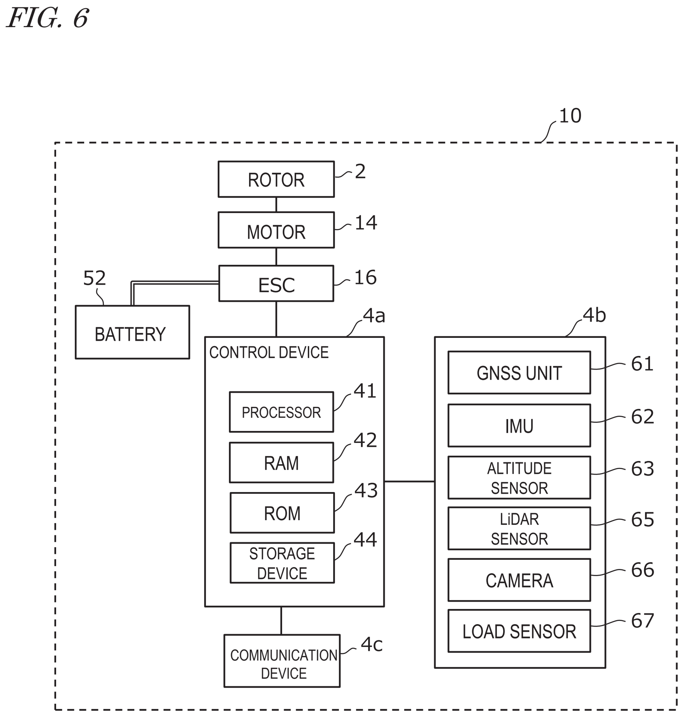

FIG. **6** is a block diagram showing a configuration example of the unmanned aerial vehicle **10.** The unmanned aerial vehicle **10** shown in FIG. **6** includes components similar to the unmanned aerial vehicle **10** shown in FIG. **2A****.** However, in FIG. **6****,** illustration of the power supply device **76** and the implement **200** shown in FIG. **2A** is omitted. In the example shown in FIG. **6****,** the control device **4a** includes a processor **41,** RAM **42,** ROM **43,** and a storage device **44.** In FIG. **6****,** as examples of the sensor group **4b**, a GNSS unit **61,** an IMU **62,** an altitude sensor **63,** a LiDAR sensor **65,** a camera **66,** and a load sensor **67** are shown. Various components of the unmanned aerial vehicle **10** may be connected to communicate with each other via a bus. FIG. **6** shows components that have relatively high relevance to autonomous flight operations by the unmanned aerial vehicle **10,** and illustration of other components is omitted.

In FIG. **6****,** for simplicity, the rotor **2,** motor **14,** and ESC **16** are each shown by one block, but the numbers of rotors **2,** motors **14,** and ESCs **16** are each multiple. Also, although not shown in FIG. **6****,** the unmanned aerial vehicle **10** may include the internal combustion engine **7a,** the fuel tank **7b**, and the power generation device **8** as shown in FIG. **2B** or **2C****.** Furthermore, as shown in FIG. **2C****,** it may include at least one rotor **22** driven by the internal combustion engine **7a.** The unmanned aerial vehicle **10** may adopt "series hybrid" and "parallel hybrid" drive forms.

The GNSS unit **61** is an example of a positioning device that detects the geographic coordinates of the position of the unmanned aerial vehicle **10.** The GNSS receiver included in the GNSS unit **61** receives satellite signals transmitted from multiple GNSS satellites and generates GNSS data based on the satellite signals.

The GNSS unit **61** illustrated in FIG. **6** may perform positioning of the unmanned aerial vehicle **10** using RTK-GNSS. By using RTK-GNSS, positioning can be performed with accuracy of, for example, an error of several centimeters. Position data including information about latitude, longitude, and altitude is acquired by high-precision positioning using RTK-GNSS. The GNSS unit **61** calculates the position of the unmanned aerial vehicle **10,** for example, at a frequency of about 1 to 10 times per second.

Note that the positioning method is not limited to RTK-GNSS, and any positioning method (such as interferometric positioning or relative positioning) that can obtain position data with necessary accuracy can be used. For example, positioning using VRS or DGPS may be performed. When position data with necessary accuracy can be obtained without using correction signals transmitted from reference stations, position data may be generated without using correction signals. In that case, the GNSS unit **61** may not include an RTK receiver.

Even when RTK-GNSS is used, in places where correction signals from reference stations cannot be obtained, the position of the unmanned aerial vehicle **10** is estimated by other methods without relying on signals from RTK receivers. For example, the position of the unmanned aerial vehicle **10** may be estimated by matching data output from the LiDAR sensor **65** and/or the camera **66** with high-precision environment maps.

The IMU **62** may include a 3-axis acceleration sensor and a 3-axis gyroscope. The IMU **62** may include an orientation sensor such as a 3-axis geomagnetic sensor. The IMU **62** functions as a motion sensor and can output signals indicating various quantities such as acceleration, velocity, displacement, and attitude of the unmanned aerial vehicle **10.** In addition to the satellite signals and correction signals described above, the position and orientation of the unmanned aerial vehicle **10** can be estimated with higher accuracy based on signals output from the IMU **62.** Signals output from the IMU **62** can be used for correction or complementation of positions calculated based on satellite signals and correction signals. The IMU **62** outputs signals at a higher frequency than GNSS receivers. Using those high-frequency signals, the position and orientation of the unmanned aerial vehicle **10** can be measured at a higher frequency (for example, 10 Hz or higher). Instead of the IMU **62,** a 3-axis acceleration sensor and a 3-axis gyroscope may be provided separately. The IMU **62** may be included in the GNSS unit **61.**

The altitude sensor **63** measures the altitude of the body of the unmanned aerial vehicle **10** and outputs a signal indicating the altitude. Altitude refers to the vertical distance between a reference surface (for example, the ground surface) and the body. The altitude sensor **63** may be realized by, for example, a barometer, a GNSS receiver, a distance measurement sensor that measures the distance from the body to the ground, or a combination thereof.

The LiDAR sensor **65** may be a 3D-LiDAR sensor, but may also be a 2D-LiDAR sensor. The LiDAR sensor **65** senses the environment around the unmanned aerial vehicle **10** and outputs sensing data. The LiDAR sensor **65** repeatedly outputs sensor data indicating the distance and direction to each measurement point of objects existing in the surrounding environment, or three-dimensional or two-dimensional coordinate values of each measurement point. Multiple LiDAR sensors **65** may be provided at multiple positions such as front, rear, left, and right of the unmanned aerial vehicle **10.** The sensor data output from the LiDAR sensor **65** is processed by the control device **4a.** The control device **4a** can perform self-position estimation of the unmanned aerial vehicle **10** by matching the sensor data with environment maps. The control device **4a** can further detect objects such as obstacles existing around the unmanned aerial vehicle **10** based on the sensor data. The control device **4a** may generate or edit environment maps using algorithms such as SLAM.

The camera **66** is an imaging device that captures the environment around the unmanned aerial vehicle **10.** The camera **66** includes, for example, an image sensor such as a CCD or CMOS. The camera **66** may also include an optical system including one or more lenses and a signal processing circuit. The camera **66** captures the environment around the unmanned aerial vehicle **10** during flight of the unmanned aerial vehicle **10** and generates data of images (for example, moving images). The camera **66** can capture moving images at a frame rate of, for example, 3 fps or higher. Images generated by the camera **66** may be used, for example, when a remote monitor uses the terminal device **400** to check the environment around the unmanned aerial vehicle **10.** Images generated by the camera **66** may be used for positioning or obstacle detection. Multiple cameras **66** may be provided at different positions of the unmanned aerial vehicle **10,** or a single camera may be provided. A visible camera that generates visible light images and an infrared camera that generates infrared images may be provided separately. Both visible cameras and infrared cameras may be provided as cameras that generate images for monitoring. Infrared cameras can also be used for obstacle detection at night.

The load sensor **67** detects the weight of objects connected to the unmanned aerial vehicle **10,** such as the implement **200.** The control device **4a** can determine whether the weight of objects connected to the unmanned aerial vehicle **10** is appropriate by comparing, for example, the weight of objects connected to the unmanned aerial vehicle **10** with the maximum payload of the unmanned aerial vehicle **10.** Also, the control device **4a** can calculate the consumption of electric power and/or fuel used for flight based on the weight of objects connected to the unmanned aerial vehicle **10.**

The processor **41** may be a semiconductor integrated circuit including, for example, a central processing unit (CPU). The ROM **43** is, for example, a writable memory (for example, PROM), a rewritable memory (for example, flash memory), or a read-only memory. The RAM **42** provides a work area for temporarily expanding control programs stored in the ROM **43** during boot-up. The detailed configurations of the processor **41,** the RAM **42,** and the ROM **43** are similar to those of the processor **161,** the RAM **162,** and the ROM **163,** so detailed descriptions thereof are omitted here. The processor **41** may operate as the flight controller and companion computer described above.

The storage device **44** includes one or more storage media such as flash memory or magnetic disks. The storage device **44** stores various data generated by the sensor group **4b** and the control device **4a.** The data stored by the storage device **44** may include map data (environment maps) of environments where the unmanned aerial vehicle **10** flies, and data of target flight routes for autonomous flight. Environment maps include information about multiple fields where the unmanned aerial vehicle **10** performs work and their surroundings. Environment maps and target flight routes may be generated by a processor of the management device **600.** Note that the control device **4a** may have functions to generate or edit environment maps and target flight routes. The control device **4a** can edit environment maps and target flight routes acquired from the management device **600** according to the flight environment of the unmanned aerial vehicle **10.** The storage device **44** also stores data of work plans that the communication device **4c** receives from the management device **600.**

The storage device **44** also stores computer programs that cause the processor **41** to execute various operations described later. Such computer programs may be provided to the unmanned aerial vehicle **10** via storage media (such as semiconductor memory or optical disks) or telecommunication lines (such as the Internet). Such computer programs may be sold as commercial software.

The communication device **4c** is a device including circuits that communicate with the harvester **100,** the terminal device **400,** and the management device **600.** The communication device **4c** includes circuits that perform wireless communication with the communication device **190** of the harvester **100.** This enables causing the harvester **100** to execute desired operations or acquiring information from the harvester **100.** The communication device **4c** may further include antennas and communication circuits for executing signal transmission and reception via the network **80** with each of the communication devices of the terminal device **400** and the management device **600.** The communication device **4c** may have a function to communicate with portable terminals used by monitors near the unmanned aerial vehicle **10.** Communication with such portable terminals may be performed according to any wireless communication standard such as Wi-Fi (registered trademark), cellular mobile communication such as 3G, 4G, or 5G, or Bluetooth (registered trademark).

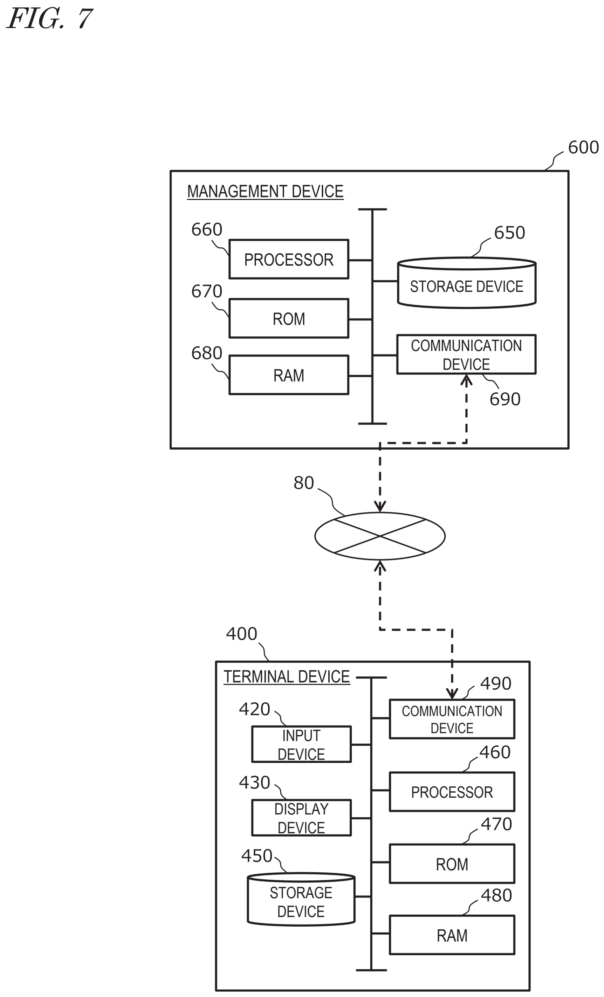

Next, the configurations of the management device **600** and the terminal device **400** will be described with reference to FIG. **7.** FIG. **7** is a block diagram showing configuration examples of the management device **600** and the terminal device **400.**

The management device **600** includes a storage device **650,** a processor **660,** ROM **670,** RAM **680,** and a communication device **690.** These components are connected to communicate with each other via a bus. The management device **600** may function as a cloud server that performs schedule management of agricultural work executed by the harvester **100** and the unmanned aerial vehicle **10** and supports agriculture by utilizing data to be managed. A user can input information necessary for creating work plans using the terminal device **400** and upload this information to the management device **600** via the network **80.** The management device **600** can create work plans, that is, schedules for agricultural work, based on this information. The management device **600** can further execute generation or editing of environment maps. Environment maps may be distributed from computers external to the management device **600.**

The communication device **690** is a communication module for communicating with the harvester **100,** the unmanned aerial vehicle **10,** and the terminal device **400** via the network **80.** The communication device **690** can perform wired communication according to communication standards such as IEEE 1394 (registered trademark) or Ethernet (registered trademark). The communication device **690** may perform wireless communication according to Bluetooth (registered trademark) standards or Wi-Fi standards, or cellular mobile communication such as 3G, 4G, or 5G.

The processor **660** may be a semiconductor integrated circuit including, for example, a central processing unit (CPU). The ROM **670** is, for example, a writable memory (for example, PROM), a rewritable memory (for example, flash memory), or a read-only memory. The RAM **680** provides a work area for temporarily expanding control programs stored in the ROM **670** during boot-up. The detailed configurations of the processor **660,** the ROM **670,** and the RAM **680** are similar to those of the processor **161,** the ROM **163,** and the RAM **162,** so detailed descriptions are omitted here.

The storage device **650** mainly functions as database storage. The storage device **650** may be, for example, a magnetic storage device or a semiconductor storage device. The storage device **650** may be a device independent of the management device **600.** For example, the storage device **650** may be a storage device connected to the management device **600** via the network **80,** such as cloud storage.

The terminal device **400** includes an input device **420,** a display device **430,** a storage device **450,** a processor **460,** ROM **470,** RAM **480,** and a communication device **490.** These components are connected to communicate with each other via a bus. The input device **420** is a device for converting instructions from a user into data and inputting them to a computer. The input device **420** may be, for example, a keyboard, mouse, or touch panel. The display device **430** may be, for example, a liquid crystal display or organic EL display. The descriptions of each of the processor **460,** the ROM **470,** the RAM **480,** the storage device **450,** and the communication device **490** are as described in the hardware configuration examples of the harvester **100,** the unmanned aerial vehicle **10,** and the management device **600,** and those descriptions are omitted.

### (Operation)

Next, operations for acquiring harvested crops that the harvester **100** has harvested from a field using the unmanned aerial vehicle **10** will be described.

In the present embodiment, an acquisition device used for acquiring harvested crops is connected to the unmanned aerial vehicle **10** and moves together with the unmanned aerial vehicle **10,** and the acquisition device is used to acquire harvested crops. The acquisition device may be an example of the implement **200.**

The acquisition device may be detachable from the unmanned aerial vehicle **10** or may be configured integrally with the body of the unmanned aerial vehicle **10.** The operation of the acquisition device may be controlled by the control device **4a** of the unmanned aerial vehicle **10.** Communication between the unmanned aerial vehicle **10** and the acquisition device may be performed by wire or wirelessly. Electric power necessary for the operation of the acquisition device may be supplied from the unmanned aerial vehicle **10** to the acquisition device via the power supply device **76,** or the acquisition device may be equipped with a battery. The acquisition device may include a control device that controls the operation of the acquisition device, and in that case, the control device **4a** controls the operation of the acquisition device by communicating with the control device of the acquisition device.

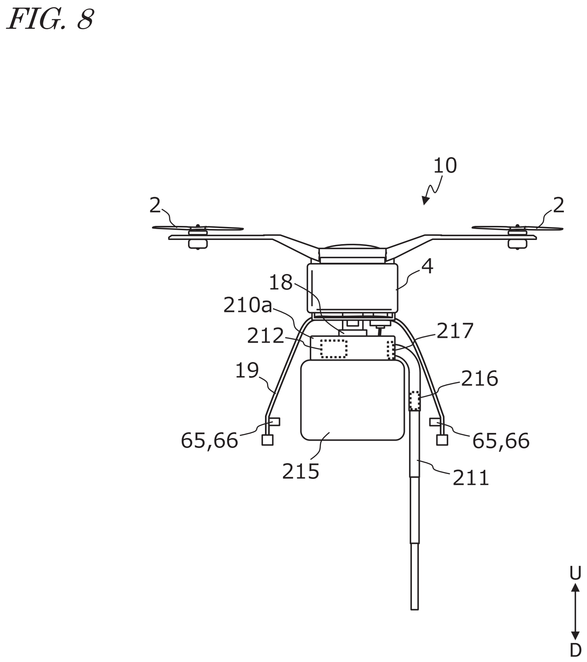

FIG. **8** is a diagram schematically showing an example of the unmanned aerial vehicle **10** to which an acquisition device is connected. In the example shown in FIG. **8****,** the acquisition device is a suction machine **210a.** The suction machine **210a** acquires harvested crops stored in the tank **106** of the harvester **100** by suction. The harvested crops are, for example, grains. By suctioning harvested crops, the harvested crops can be transferred from the harvester **100** to the unmanned aerial vehicle **10** side.

In the example shown in FIG. **8****,** the unmanned aerial vehicle **10** is provided with a connection device **18,** and the suction machine **210a** is connected to the connection device **18.** The method of connecting the suction machine **210a** to the connection device **18** is arbitrary. For example, the suction machine **210a** may be connected to the connection device **18** using a link mechanism, or the suction machine **210a** may be connected to the connection device **18** using fasteners such as bolts.

The suction machine **210a** includes a nozzle **211,** a suction blower **212,** and a tank **215.** The suction blower **212** is sometimes called a suction pump. The unmanned aerial vehicle **10** is flown so that the tip of the nozzle **211** is positioned inside the tank **106** of the harvester **100,** and the suction blower **212** is operated to suction harvested crops inside the tank **106.** Harvested crops can be acquired by storing the suctioned harvested crops in the tank **215.**

The suction machine **210a** is, for example, a centrifugal separation type suction machine. The centrifugal separation method is sometimes called the cyclone method. Since the technology for separating suctioned harvested crops and air by the centrifugal separation method is known, detailed description is omitted here. A suction machine adopting methods other than the centrifugal separation method may be used as the suction machine **210a.**

The nozzle **211** can be extended and retracted by operating an actuator **216.** Also, the orientation of the nozzle **211** can be changed by operating an actuator **217.** For example, when landing the unmanned aerial vehicle 10 on the ground, by shortening the length of the nozzle **211** and directing the direction in which the nozzle **211** extends to a direction close to horizontal, interference of the nozzle **211** with the ground can be suppressed.

The LiDAR sensor **65** and the camera **66** are arranged at positions where monitoring of harvested crop acquisition work using the acquisition device can be easily performed. In this example, the LiDAR sensor **65** and the camera **66** are provided on the skid **19** of the unmanned aerial vehicle **10.** The LiDAR sensor **65** and the camera **66** used for controlling the flight of the unmanned aerial vehicle **10** may be provided separately from these. Also, the LiDAR sensor **65** and the camera **66** may be provided in the acquisition device.

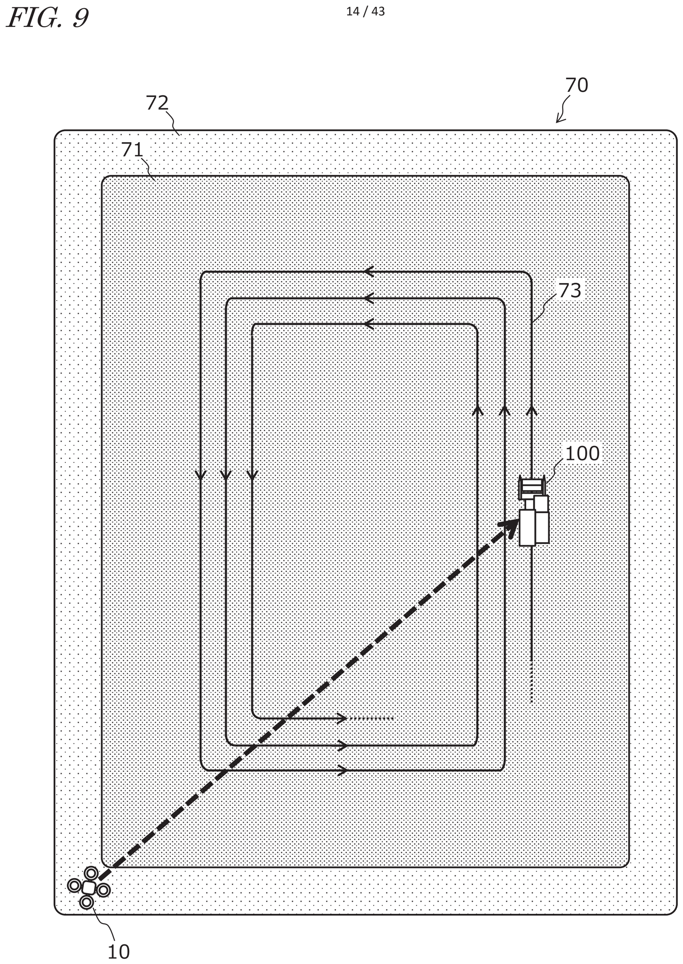

FIG. **9** **is** a diagram showing the field **70** where the harvester **100** harvests crops. The harvester **100** of the present embodiment harvests crops while traveling automatically in the field **70.** Within the field **70,** the harvester **100** executes crop harvesting operations while traveling along a preset target route **73.** Within the field **70,** positioning of the harvester **100** is mainly performed based on data output from the GNSS unit **121.** In addition to positioning data output from the GNSS unit **121,** the position of the harvester **100** may be estimated based on data output from the LiDAR sensor **125** and/or the camera **126.**

In the example shown in FIG. **9****,** the field **70** includes a work area **71** where the harvester **100** performs crop harvesting and a headland **72** located near the outer periphery of the field **70.** Which areas of the field **70** on the map correspond to the work area **71** and the headland **72** may be set in advance by a user. The harvester **100** automatically travels from the work start point to the work end point along the target route **73** as shown in FIG. **9****.** Note that the target route **73** shown in FIG. **9** is merely an example, and the method of determining the target route **73** is arbitrary. The target route **73** may be created based on user operations or may be created automatically. The target route **73** may be created, for example, to cover the entire work area **71** within the field **70.**

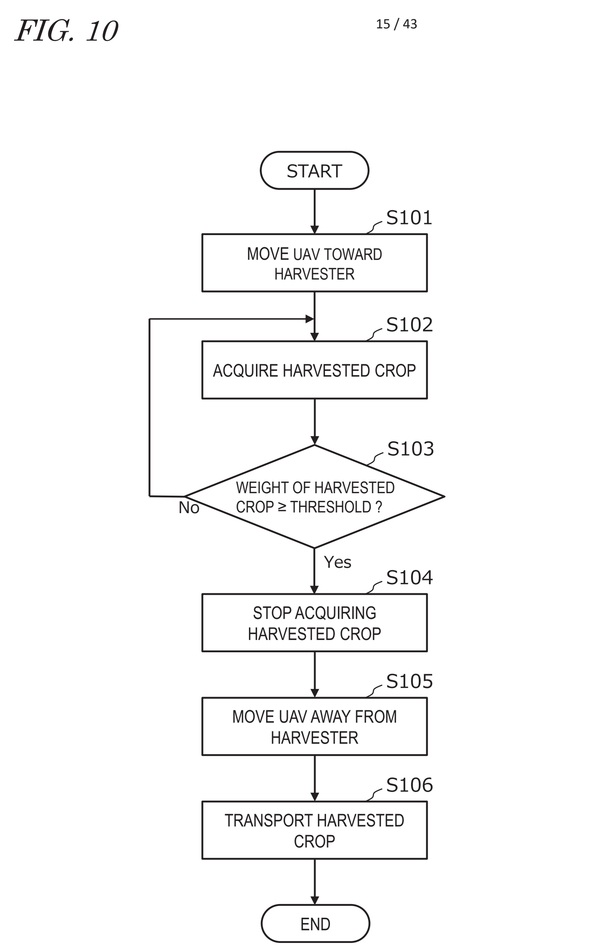

In the present embodiment, harvested crops that the harvester **100** has harvested from the field **70** are acquired using the unmanned aerial vehicle **10.** FIG. **10** is a flowchart showing an example of operations for acquiring harvested crops that the harvester **100** has harvested from the field **70** using the unmanned aerial vehicle **10.**

The harvester **100** harvests crops while traveling automatically along the target route **73.** The processor **161** (FIG. **5****)** of the harvester **100** causes the ECU **165** to execute control for causing the harvester **100** to travel automatically along the target route **73,** and causes the ECU **167** to execute control of crop harvesting operations. The ECU **165** controls the operation of the driving device **140** to cause the harvester **100** to travel automatically. The ECU **167** controls the operation of the power transmission mechanism **141** to cause various devices that perform crop harvesting operations to execute desired operations. The cutting device **103** cuts crops in the field **70.** The threshing device **105** performs threshing of cut crops. The tank **106** stores harvested crops obtained by threshing grains, etc. The straw processing device **108** finely cuts stem parts, etc., after grains and other harvested crops have been removed and discharges them to the outside.

The processor **41** (FIG. **6****)** of the unmanned aerial vehicle **10** controls the operation of the flight device **1** (FIG. **1****)** to cause the unmanned aerial vehicle **10** to fly. The processor **41** causes the unmanned aerial vehicle **10** to fly so as to approach the harvester **100** (step S101 in FIG. **10****).**

The unmanned aerial vehicle **10** and the harvester **100** perform data communication with each other via the communication device **4c** and the communication device **190.** The processor **161** of the harvester **100** transmits information about the geographic coordinates of the position of the harvester **100** acquired from the GNSS unit **121** to the unmanned aerial vehicle **10** via the communication device **190.**

The processor **41** of the unmanned aerial vehicle **10** sets the geographic coordinate position of the harvester **100** as a target position. Since the position of the traveling harvester **100** changes, the target position is updated as needed. The processor **41** causes the unmanned aerial vehicle **10** to fly to reach the latest target position. The target position may be set based on the geographic coordinates of the harvester **100,** the traveling direction and traveling speed of the harvester **100.** The processor **41** causes the unmanned aerial vehicle **10** to fly so as to be positioned above the harvester **100.**

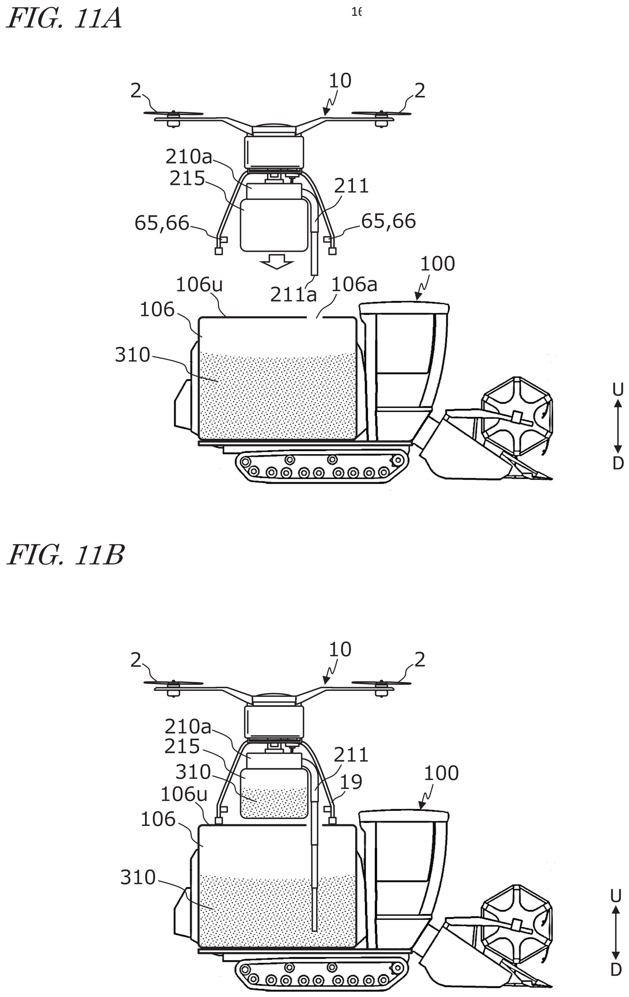

FIGS. **11A** to **11C** are diagrams showing examples of operations for acquiring harvested crops stored in the tank **106** of the harvester **100** using the unmanned aerial vehicle **10.** For ease of explanation, in FIGS. **11A** to **11C****,** the interiors of the tanks **106** and **215** are shown transparently.

As shown in FIG. **11A****,** an opening **106a** is provided in the upper part **106u** of the tank **106** of the harvester **100.** By inserting the nozzle **211** of the suction machine **210a** into the opening **106a,** harvested crops stored in the tank **106** can be suctioned. The processor **41** causes the unmanned aerial vehicle **10** to fly so that the tip (lower end) **211a** of the nozzle **211** is positioned inside the tank **106.** The processor **41** performs position alignment between the nozzle **211** and the opening **106a** using output signals from the LiDAR sensor **65** and/or the camera **66.**

The processor **41,** for example, identifies point cloud data representing the opening **106a** and point cloud data representing the nozzle **211** from three-dimensional point cloud data output by the LiDAR sensor **65** using an estimation model generated by machine learning. The estimation model is stored in advance in the storage device **44.**

The processor **41** can insert the nozzle **211** into the opening **106a** by causing the unmanned aerial vehicle **10** to fly so that the tip **211a** of the nozzle **211** is positioned within the range of the opening **106a** in plan view from a direction along the vertical direction, while causing the unmanned aerial vehicle **10** to descend.

The processor **41** may cause the nozzle **211** to be inserted into the opening **106a** using data output by the camera **66** that captures the nozzle **211** and the opening **106a.** The processor **41,** for example, identifies images representing the opening **106a** and images representing the nozzle **211** from image data output by the camera **66** using an estimation model generated by machine learning. The processor **41** can insert the nozzle **211** into the opening **106a** by causing the unmanned aerial vehicle **10** to fly so that the tip **211a** of the nozzle **211** is positioned within the range of the opening **106a** in plan view, while causing the unmanned aerial vehicle **10** to descend.

FIG. **11B** is a diagram showing an operation where the suction machine **210a** suctions harvested crops **310** stored in the tank **106** of the harvester **100.**

The processor **41** can adjust the length of the nozzle **211** by operating the actuator **216** (FIG. **8****).** The processor **41** operates the suction blower **212** to start suctioning the harvested crops **310** inside the tank **106** (step S102 in FIG. **10****).** The harvested crops **310** are transferred from the tank **106** to the suction machine **210a** through the nozzle **211.** The suctioned harvested crops **310** are stored in the tank **215.** By inserting the nozzle **211** into the tank **106** and suctioning the harvested crops **310,** the harvested crops **310** can be easily transferred from the harvester **100** to the unmanned aerial vehicle **10** side.

When acquiring the harvested crops **310** inside the tank **106,** the unmanned aerial vehicle **10** may be landed on the harvester **100.** For example, the unmanned aerial vehicle **10** is landed on the upper part **106u** of the tank **106.** This can suppress positional deviation between the unmanned aerial vehicle **10** and the harvester **100,** enabling stable performance of harvested crop **310** acquisition operations. In this case, the rotors **2** may be rotated to generate lift to the extent that the unmanned aerial vehicle **10** does not rise. By generating such lift, the magnitude of the weight of the unmanned aerial vehicle **10** applied to the harvester **100** during landing can be reduced.

While operating the suction machine **210a** to suction the harvested crops **310** inside the tank **106,** the processor **41** may rotate the rotors **2** to generate lift according to the suction force of the suction machine **210a.** Although a downward force acts on the unmanned aerial vehicle **10** due to the reaction of the suction operation of the suction machine **210a,** such downward force can be offset by generating lift with the rotors **2.**

The unmanned aerial vehicle **10** may include a connection device that connects the unmanned aerial vehicle **10** to the harvester **100** when acquiring the harvested crops **310** from the harvester **100.** This can suppress positional deviation between the unmanned aerial vehicle **10** and the harvester **100,** enabling stable harvested crop acquisition. For example, the skid **19** is used as such a connection device. For example, the upper part **106u** of the tank **106** may have a magnetic material, and the skid **19** may include an electromagnet at its lower part. By turning on the electromagnet, the processor **41** connects the skid **19** and the tank **106.** Also, each of the skid **19** and the tank **106** may include connection devices that connect to each other. Also, as a connection device, the nozzle **211** may include a "barb" that spreads approximately horizontally. For example, the barb can be opened and closed in an umbrella shape inside the tank **106,** and the nozzle **211** includes an actuator that opens and closes the barb. The horizontal length of the opened barb is larger than the diameter of the opening **106a,** and can suppress the nozzle **211** from coming out of the tank **106.** In cases where the harvested crops **310** are acquired while flying the unmanned aerial vehicle **10,** the connection between the unmanned aerial vehicle **10** and the harvester **100** can be maintained.

The processor **41** can detect the weight of the harvested crops **310** stored in the tank **215** using the load sensor **67** (FIG. **6****).** The load sensor **67** is provided, for example, in the connection device **18** and detects the weight of the suction machine **210a** in which the tank **215** is provided. By comparing the weight of the suction machine **210a** when the tank **215** is empty with the weight of the suction machine **210a** when the harvested crops **310** are stored in the tank **215,** the weight of the harvested crops **310** stored in the tank **215** can be calculated.

The weight of the harvested crops **310** stored in the tank **215** may be detected using a load sensor provided in the tank **215.**

While the suction machine **210a** is suctioning the harvested crops **310,** the processor **41** determines whether the weight value of the harvested crops accumulated in the tank **215** is equal to or greater than a first predetermined value (step S103 in FIG. **10****).** The first predetermined value is, for example, 80-100% of the maximum weight of the harvested crops **310** that can be stored in the tank **215,** but is not limited to that value.

The first predetermined value may be set based on the weight (payload) that the unmanned aerial vehicle **10** can transport. Also, the first predetermined value may be set based on the remaining amount of energy sources for flying the unmanned aerial vehicle **10.** The remaining amount of energy sources for flying the unmanned aerial vehicle **10** is, for example, the remaining amount of the battery **52** (FIG. **2A****)** and/or the remaining amount of fuel in the fuel tank **7b** (FIG. **2B****).**

While the weight of harvested crops accumulated in the tank **215** is less than the first predetermined value, the processor **41** continues suctioning of the harvested crops **310** by the suction machine **210a.** When the processor **41** determines that the weight of harvested crops accumulated in the tank **215** has become equal to or greater than the first predetermined value, it stops the operation of the suction blower **212** and stops suctioning of the harvested crops **310** by the suction machine **210a** (step S104).

The processor **41** may control the on/off of the suction operation of the suction machine **210a** by comparing the weight of the suction machine **210a** in which the tank **215** is provided with the maximum payload of the unmanned aerial vehicle **10.** For example, when the weight of the suction machine **210a** that performs the operation of suctioning the harvested crops **310** and accumulating them in the tank **215** reaches 80-100% of the maximum payload, suctioning of the harvested crops **310** by the suction machine **210a** may be stopped.

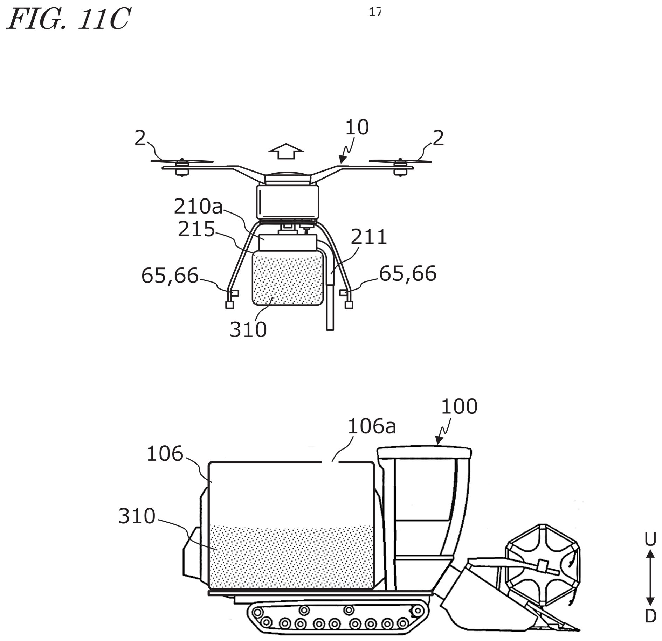

When acquisition of the harvested crops **310** by the suction machine **210a** is completed, the processor **41** causes the unmanned aerial vehicle **10** to separate from the harvester **100** (step S105). FIG. **11C** is a diagram showing the unmanned aerial vehicle **10** separating from the harvester **100.** The processor **41** causes the unmanned aerial vehicle **10** to separate from the harvester **100** by causing the unmanned aerial vehicle **10** to rise above the harvester **100.**

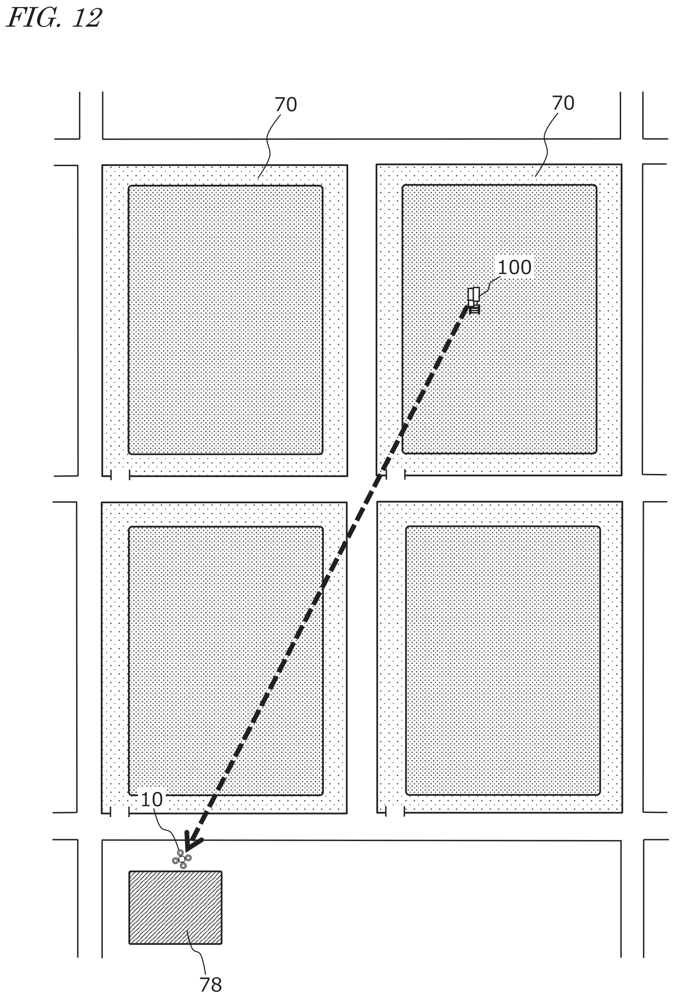

After causing the unmanned aerial vehicle **10** to separate from the harvester **100,** the processor **41** causes the unmanned aerial vehicle **10** to transport the harvested crops to a predetermined location (step S106). For example, the processor **41** moves the unmanned aerial vehicle **10** to a building that stores harvested crops. FIG. **12** is a diagram showing the unmanned aerial vehicle **10** moving to a storage facility **78** that stores harvested crops. The processor **41** sets the geographic coordinate position of the storage facility **78** or its surrounding area as a target position. The processor **41** causes the unmanned aerial vehicle **10** to fly to reach the set target position. When the unmanned aerial vehicle **10** arrives at the storage facility **78** or its surrounding area, the harvested crops in the tank **215** are transferred to the storage facility **78.** The unmanned aerial vehicle **10** with the empty tank **215** may return to the field **70** again to resume work of acquiring harvested crops.

The above-described operation where the unmanned aerial vehicle **10** acquires harvested crops can be performed even while the harvester **100** is moving. By having the unmanned aerial vehicle **10** acquire harvested crops from the harvester **100** that continues harvesting work while moving, work efficiency can be improved.

In the operation of acquiring harvested crops from the harvester **100,** when the weight value of harvested crops accumulated in the tank **106** of the harvester **100** is less than a second predetermined value, the processor **41** may perform control to cause the unmanned aerial vehicle **10** to standby at a predetermined position.

The predetermined position where the unmanned aerial vehicle **10** stands by can be set at any position that does not interfere with harvesting work by the harvester **100.** As long as it does not interfere with harvesting work by the harvester **100,** the predetermined position may be set at a position within the work area **71** where harvesting work has already been completed. Also, the predetermined position may be set at a position outside the field **70.**

When the harvester **100** is performing crop harvesting, the processor **161** determines whether the weight of harvested crops accumulated in the tank **106** is equal to or greater than a second predetermined value. For example, the processor **161** determines whether the weight value of harvested crops in the tank **106** detected by the load sensor **156** is equal to or greater than the second predetermined value. The second predetermined value is, for example, 50-90% of the maximum weight of harvested crops that can be stored in the tank **106,** but is not limited to that value.

While the harvested crops accumulated in the tank **106** are less than the second predetermined value, the processor **161** does not transmit a command to fly the unmanned aerial vehicle **10** to the position of the harvester **100** to the unmanned aerial vehicle **10.** The processor **41** causes the unmanned aerial vehicle **10** to standby at the predetermined position while not receiving the command.

When the processor **161** determines that the weight of harvested crops accumulated in the tank **106** has become equal to or greater than the second predetermined value, it transmits a command to fly the unmanned aerial vehicle **10** to the position of the harvester **100** to the unmanned aerial vehicle **10** via the communication device **190.** When the processor **41** receives the command, it causes the unmanned aerial vehicle **10** to fly to the position of the harvester **100** and performs operations to acquire harvested crops stored in the tank **106** of the harvester **100.** By having the unmanned aerial vehicle **10** acquire harvested crops when a predetermined amount or more of harvested crops have accumulated in the harvester **100,** work efficiency can be improved.

The unmanned aerial vehicle **10** may receive data indicating the weight of harvested crops accumulated in the tank **106** of the harvester **100,** and the processor **41** of the unmanned aerial vehicle **10** may determine whether the weight of harvested crops accumulated in the tank **106** has become equal to or greater than the second predetermined value. When the processor **41** determines that the weight of harvested crops accumulated in the tank **106** has become equal to or greater than the second predetermined value, it causes the unmanned aerial vehicle **10** to fly to the position of the harvester **100** and performs operations to acquire harvested crops stored in the tank **106** of the harvester **100.**

To efficiently harvest crops in the field **70,** it is conceivable to run a harvester **100** that harvests crops while traveling within the field **70** in parallel with a transport vehicle, and have the transport vehicle receive harvested crops discharged by the harvester **100** and accumulate them in the cargo bed of the transport vehicle. This enables the harvester **100** to transfer harvested crops to the transport vehicle while performing crop harvesting. Since there is no need to interrupt harvesting work to transfer harvested crops accumulated in the harvester **100** to a transport vehicle waiting at the outer periphery of the field **70,** crop harvesting can be performed efficiently. However, this method requires securing a ground surface within the field **70** where a transport vehicle can run in parallel with the harvester **100,** and depending on the field **70,** securing such a ground surface may not be easy.

According to the present embodiment, the unmanned aerial vehicle **10** acquires harvested crops that the harvester **100** has harvested. The unmanned aerial vehicle **10** can acquire harvested crops from the harvester **100** without landing on the ground. Also, for example, the unmanned aerial vehicle **10** can acquire harvested crops from a position above the harvester **100.** Since there is no need to secure a ground surface for running a transport vehicle in parallel with the harvester **100,** crop harvesting can be performed easily and efficiently.

Next, another example of an acquisition device used for acquiring harvested crops will be described.

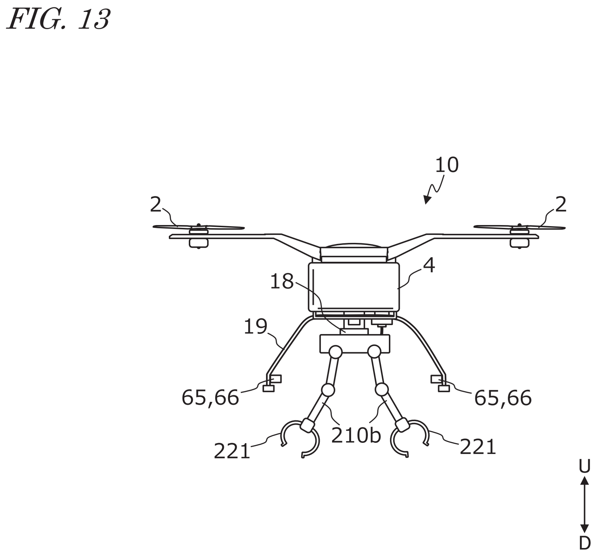

FIG. **13** is a diagram schematically showing another example of the unmanned aerial vehicle **10** to which an acquisition device is connected. In the example shown in FIG. **13****,** the acquisition device is a robot arm **210b.** The robot arm **210b** includes a gripper **221.** The robot arm **210b** includes multiple actuators, and by driving these actuators, the joint parts of the robot arm **210b** can be moved and objects can be grasped by the gripper **221.** The number of robot arms **210b** connected to the unmanned aerial vehicle **10** is arbitrary and may be one or three or more.

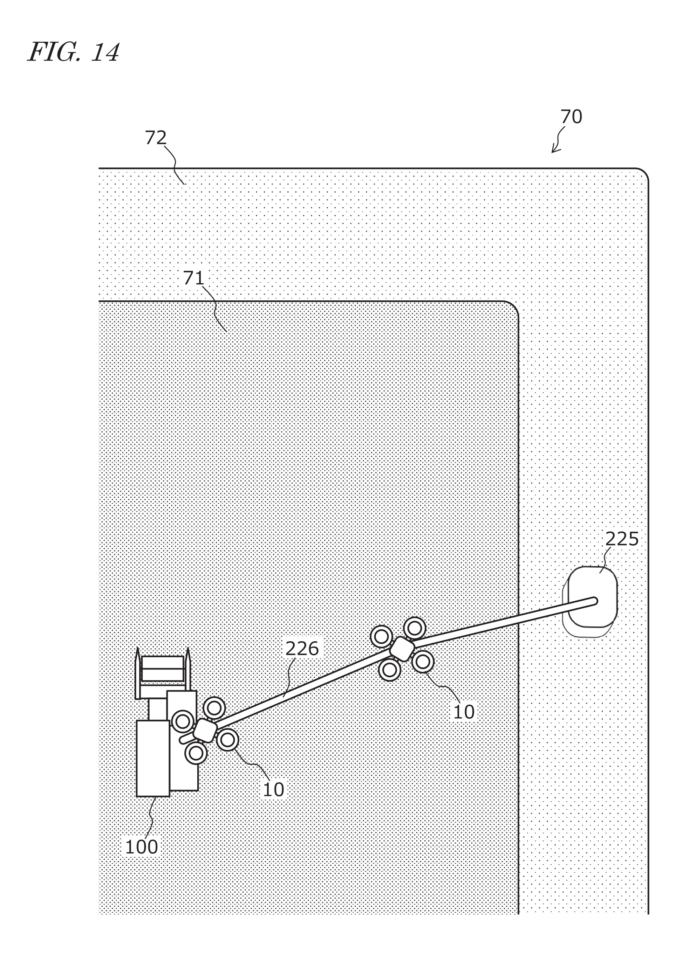

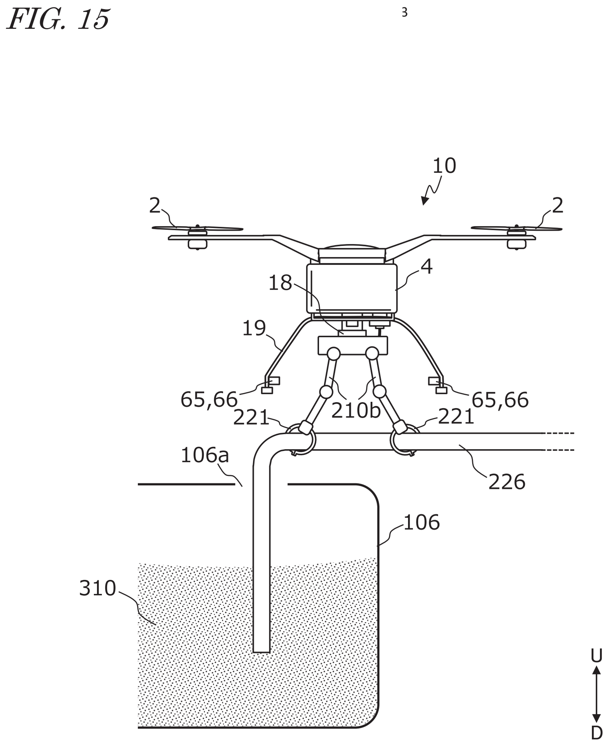

The gripper **221,** for example, grips a vacuum hose extending from a suction machine placed outside the field **70** or within the field **70.** FIG. **14** is a diagram showing a vacuum hose **226** extending from a suction machine **225** placed within the field **70,** and the unmanned aerial vehicle **10** supporting the vacuum hose **226.** FIG. **15** is a diagram showing the unmanned aerial vehicle **10** flying so that the end of the vacuum hose **226** gripped by the gripper **221** is positioned inside the tank **106** of the harvester **100.**

Support of the vacuum hose **226** may be performed cooperatively by two or more unmanned aerial vehicles **10,** or may be performed by one unmanned aerial vehicle **10.** By having two or more unmanned aerial vehicles **10** cooperatively support the vacuum hose **226,** support of the vacuum hose **226** can be performed stably.

As shown in FIG. **15****,** the processor **41** of the unmanned aerial vehicle **10** causes the unmanned aerial vehicle **10** to fly so that the end of the vacuum hose **226** gripped by the gripper **221** is positioned inside the tank **106** of the harvester **100.** In this state, by having the suction machine **225** perform suction operations, the harvested crops **310** inside the tank **106** are suctioned and transferred from the harvester **100** to the suction machine **225** through the vacuum hose **226.** In this example, harvested crops **310** can be transferred to the suction machine **225** placed at a position away from the harvester **100.** By suctioning harvested crops **310** from the harvester **100** that is performing crop harvesting using the vacuum hose **226,** crop harvesting can be performed efficiently.

The gripper **221** of the robot arm **210b** may grip a discharge hose extending from the harvester **100.**

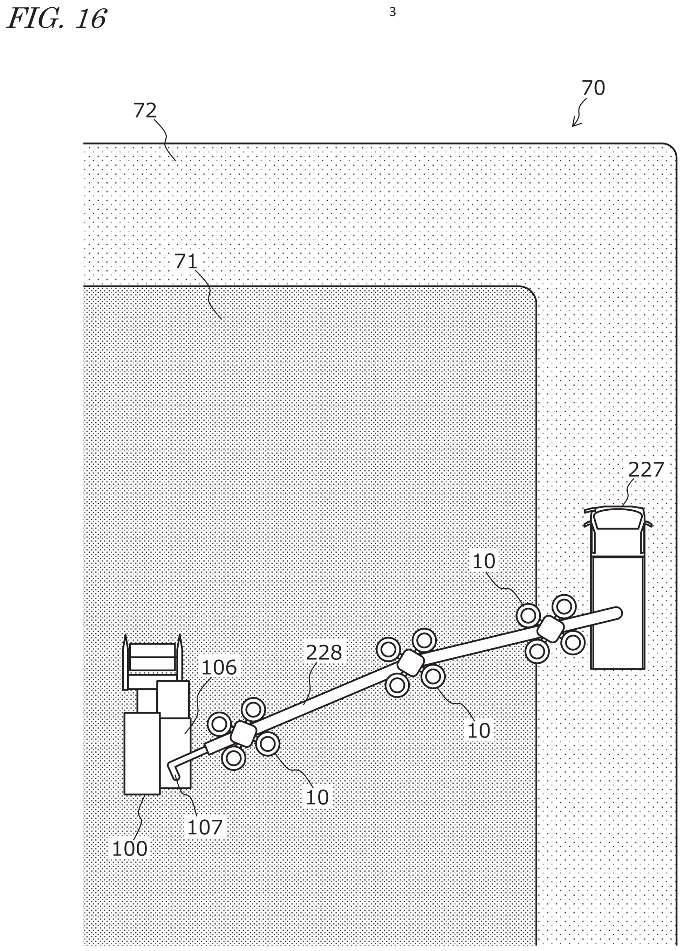

FIG. **16** is a diagram showing a discharge hose **228** extending from the harvester **100,** and the unmanned aerial vehicle **10** supporting the discharge hose **228.** Support of the discharge hose **228** may be performed cooperatively by two or more unmanned aerial vehicles **10,** or may be performed by one unmanned aerial vehicle **10.** By having two or more unmanned aerial vehicles **10** cooperatively support the discharge hose **228,** support of the discharge hose **228** can be performed stably.

In the example shown in FIG. **16****,** the harvester **100** includes a discharge device **107** that discharges harvested crops from the tank **106.** The discharge device **107** includes, for example, a conveying device such as a screw conveyor, and can move harvested crops inside the tank **106** upward and discharge the harvested crops to the outside. The discharge device **107** can perform lifting and rotating operations. Since a discharge device used in known harvesters can be adopted as the discharge device **107,** detailed description thereof is omitted here. In this example, one end of the discharge hose **228** is connected to a discharge port at the tip of the discharge device **107.**

The processor **41** of the unmanned aerial vehicle **10** causes the unmanned aerial vehicle **10** to fly so that the position of the other end of the discharge hose **228** gripped by the gripper **221** is at the position of the cargo bed of a transport vehicle **227** placed outside the field **70** or within the field **70.**

In this state, by having the discharge device **107** perform harvested crop discharge operations, harvested crops inside the tank **106** are discharged and transferred from the harvester **100** to the transport vehicle **227** through the discharge hose **228.** In this example, harvested crops can be transferred to the transport vehicle **227** placed at a position away from the harvester **100.** By transferring harvested crops discharged from the harvester **100** that is performing crop harvesting using the discharge hose **228,** crop harvesting can be performed efficiently.

Instead of the transport vehicle **227,** a container may be placed outside the field **70** or within the field **70,** and harvested crops may be transferred to that container. Also, a discharge device that discharges harvested crops from the tank **106** may be arranged adjacent to the harvester **100** as a separate body from the harvester **100.**

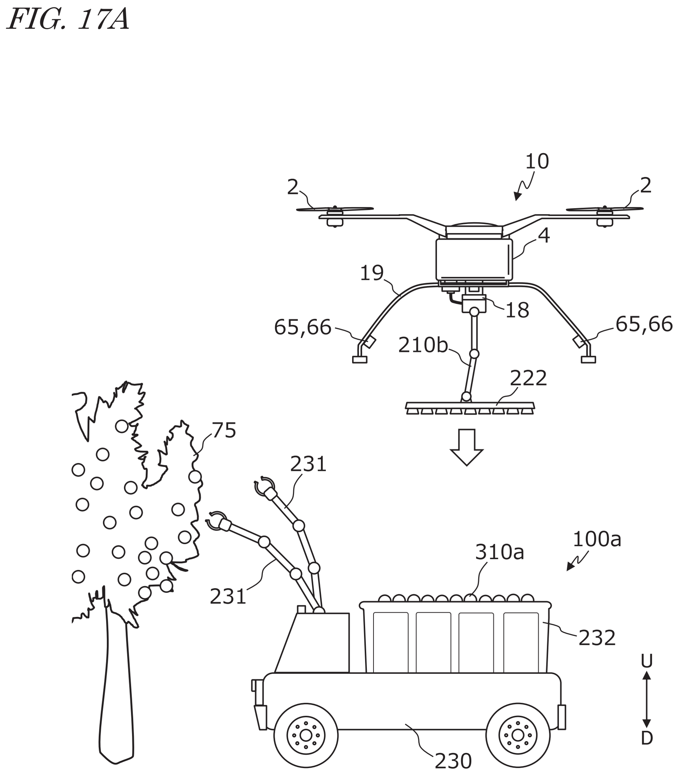

The robot arm **210b** connected to the unmanned aerial vehicle **10** may include a vacuum gripper. FIGS. **17A** to **17C** are diagrams showing examples of operations for acquiring harvested crops **310a** stored in a container **232** of a harvester **100a** using the unmanned aerial vehicle **10.** In this example, the robot arm **210b** includes a vacuum gripper **222.** Control of the operations of the robot arm **210b** and the vacuum gripper **222** may be performed by the processor **41** of the unmanned aerial vehicle **10.**

In this example, a robot arm **231** is provided on the vehicle body **230** of the harvester **100a,** and crops are harvested using the robot arm **231.** The crops in the field are, for example, vegetables, fruits, etc., but are not limited thereto. For example, crops are harvested from trees **75** within the field. A container **232** is arranged on the vehicle body **230.** By putting harvested crops **310a** harvested by the robot arm **231** into the container **232,** the harvested crops **310a** are stored in the container **232.** The vacuum gripper **222** can simultaneously adsorb multiple harvested crops **310a.**

The processor **41** of the unmanned aerial vehicle **10** causes the unmanned aerial vehicle **10** to fly so that the vacuum gripper **222** can adsorb and acquire the harvested crops **310a** inside the container **232.** The processor **41** performs position alignment between the vacuum gripper **222** and the container **232** using output signals from the LiDAR sensor **65** and/or the camera **66.** As described above, for example, by detecting the positions of the vacuum gripper **222** and the container **232** from three-dimensional point cloud data and/or image data using an estimation model generated by machine learning, position alignment between the vacuum gripper **222** and the container **232** can be performed. The processor **41** can bring the vacuum gripper **222** into contact with the harvested crops **310a** inside the container **232** by causing the unmanned aerial vehicle **10** to fly so that the vacuum gripper **222** is positioned within the range of the container **232** in plan view, while causing the unmanned aerial vehicle **10** to descend.

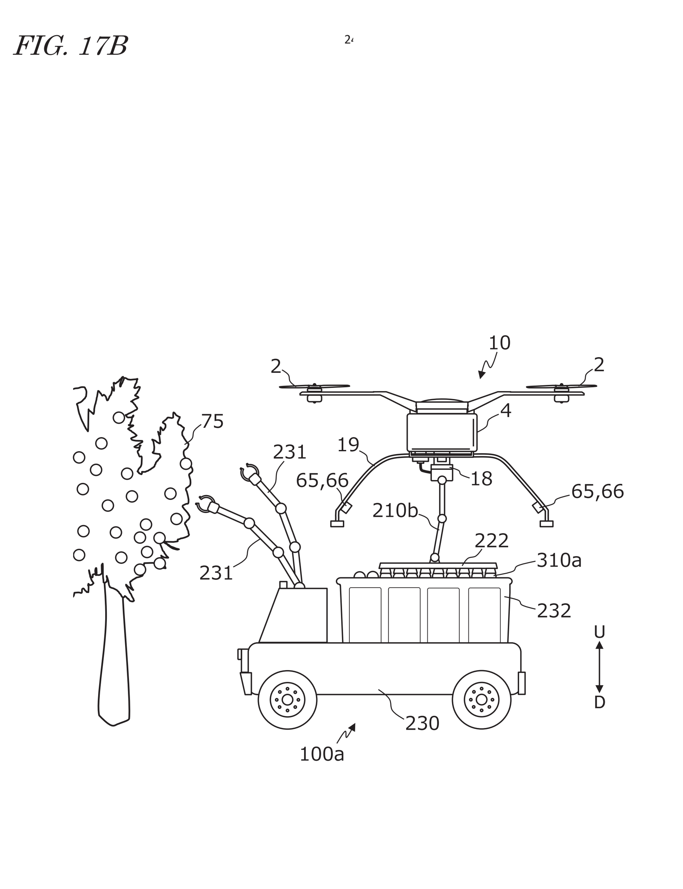

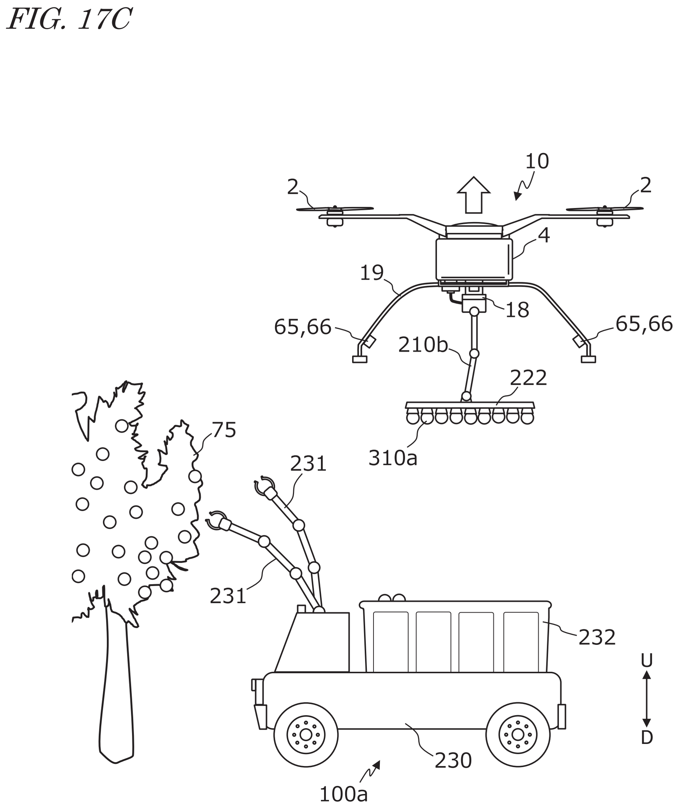

FIG. **17B** is a diagram showing an operation where the vacuum gripper **222** adsorbs the harvested crops **310a** inside the container **232.** When the vacuum gripper **222** adsorbs the harvested crops **310a,** the processor **41** causes the unmanned aerial vehicle **10** to separate from the harvester **100a.** FIG. **17C** is a diagram showing the unmanned aerial vehicle **10** separating from the harvester **100a.** The processor **41** causes the unmanned aerial vehicle **10** to separate from the harvester **100a** by causing the unmanned aerial vehicle **10** to rise above the harvester **100a.**

After causing the unmanned aerial vehicle **10** to separate from the harvester **100a,** the processor **41** causes the unmanned aerial vehicle **10** to transport the harvested crops to a predetermined location. For example, the processor **41** moves the unmanned aerial vehicle **10** to a building that stores harvested crops. When the unmanned aerial vehicle **10** arrives at the storage facility **78** or its surrounding area, the harvested crops are transferred to the storage facility **78.** The unmanned aerial vehicle **10** that has released the harvested crops may return to the field **70** again to resume work of acquiring harvested crops.

In this way, by having the unmanned aerial vehicle **10** adsorb and extract harvested crops stored by the harvester **100a** that is performing crop harvesting from the harvester **100a,** crop harvesting can be performed efficiently.

In the above description, the unmanned aerial vehicle **10** was acquiring harvested crops from the harvester **100a,** but it is not limited thereto. For example, the unmanned aerial vehicle **10** may acquire harvested crops stored in a transport vehicle.

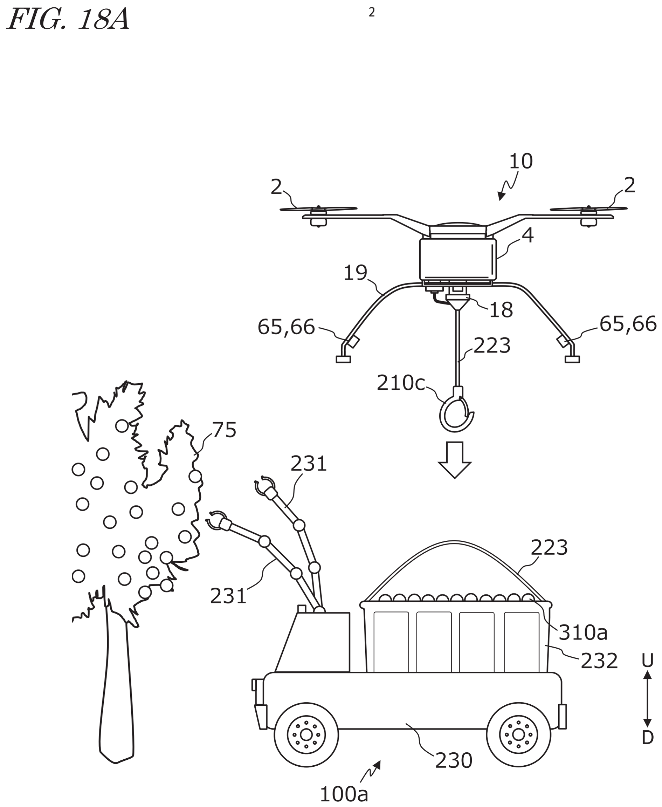

The unmanned aerial vehicle **10** may lift and transport the container **232** that is detachably provided on the harvester **100a** using a hook. FIGS. **18A** to **18C** are diagrams showing examples of operations for acquiring the container **232** in which harvested crops **310a** are stored using the unmanned aerial vehicle **10.** In this example, the acquisition device is a hook **210c.** The hook **210c** is connected to the connection device **18** via a wire **223.** Instead of the wire **223,** rods, robot arms, etc., may be used. The hook **210c** may be provided with an actuator that moves a latch, and in this case, the processor **41** of the unmanned aerial vehicle **10** may control the opening and closing of the latch.

The container **232** is provided with a wire **223** that connects the ends of the container **232.** The wire **223** connects, for example, the four corners of the opening of the container **232.** By hooking this wire **223** onto the hook **210c,** the container **232** can be lifted by the hook **210c.** Instead of the wire **223,** a handle may be provided on the container **232.**

The processor **41** of the unmanned aerial vehicle **10** causes the unmanned aerial vehicle **10** to fly so that the container **232** can be lifted by the hook **210c.** The processor **41** performs position alignment between the hook **210c** and the wire **223** using output signals from the LiDAR sensor **65** and/or the camera **66.** As described above, for example, by detecting the positions of the hook **210c** and the wire **223** from three-dimensional point cloud data and/or image data using an estimation model generated by machine learning, position alignment between the hook **210c** and the wire **223** can be performed. The processor **41** can hook the wire **223** onto the hook **210c** by causing the unmanned aerial vehicle **10** to descend and bringing the hook **210c** into contact with the wire **223.** The work of hooking the wire **223** onto the hook **210c** may be performed by a human.

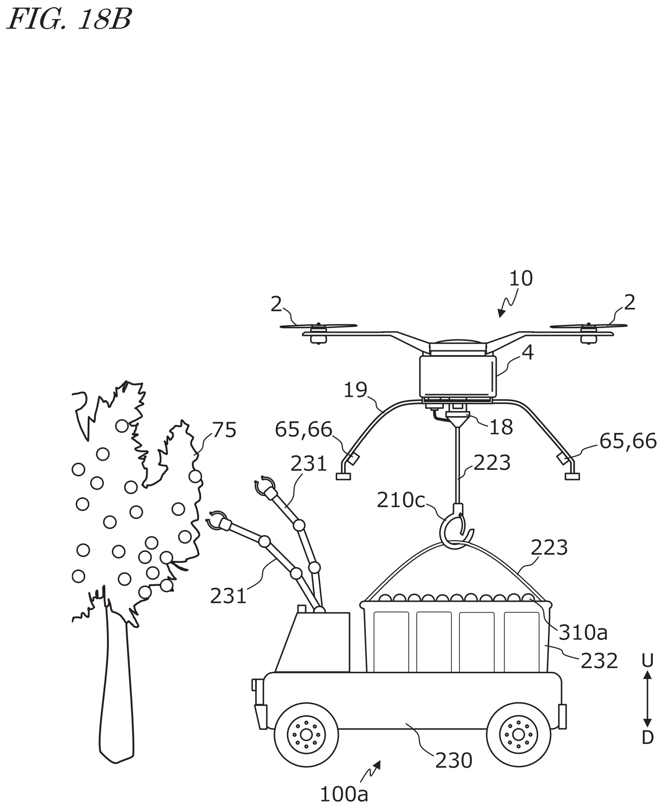

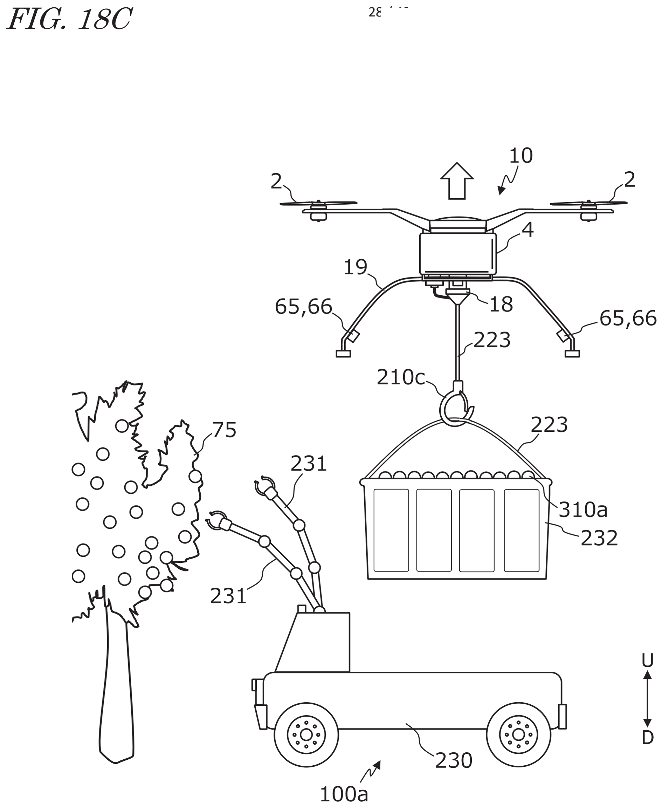

FIG. **18B** is a diagram showing a state where the wire **223** is hooked onto the hook **210c.** When the wire **223** is hooked onto the hook **210c,** the processor **41** causes the unmanned aerial vehicle **10** to separate from the harvester **100a.** FIG. **18C** is a diagram showing the unmanned aerial vehicle **10** separating from the harvester **100a.** The processor **41** causes the unmanned aerial vehicle **10** to separate from the harvester **100a** by causing the unmanned aerial vehicle **10** to rise above the harvester **100a.** By causing the unmanned aerial vehicle **10** to rise above the harvester **100a,** the container **232** can be lifted by the hook **210c.** An empty container **232** transported by another unmanned aerial vehicle **10** may be set on the harvester **100a.** This enables the harvester **100a** to continue harvesting work.

After causing the unmanned aerial vehicle **10** to separate from the harvester **100a,** the processor **41** causes the unmanned aerial vehicle **10** to transport the container **232** to a predetermined location. For example, the processor **41** moves the unmanned aerial vehicle **10** to a building that stores harvested crops. When the unmanned aerial vehicle **10** arrives at the storage facility **78** or its surrounding area, the harvested crops in the container **232** are transferred to the storage facility **78.** The unmanned aerial vehicle **10** may suspend the empty container **232** and return to the field **70** again to set the container **232** on the harvester **100a.**

In this way, by having the unmanned aerial vehicle **10** lift and transport the container **232** of the harvester **100a** that is performing crop harvesting, crop harvesting can be performed efficiently.

In the above description, the unmanned aerial vehicle **10** was lifting the container **232** arranged on the harvester **100a,** but it is not limited thereto. For example, the unmanned aerial vehicle **10** may lift and transport the container **232** arranged on a transport vehicle.

Also, the tank **106** of the harvester **100** (FIG. **4****)** may be detachable from the harvester **100,** and in this case, the unmanned aerial vehicle **10** may lift and transport the tank **106** of the harvester **100.**

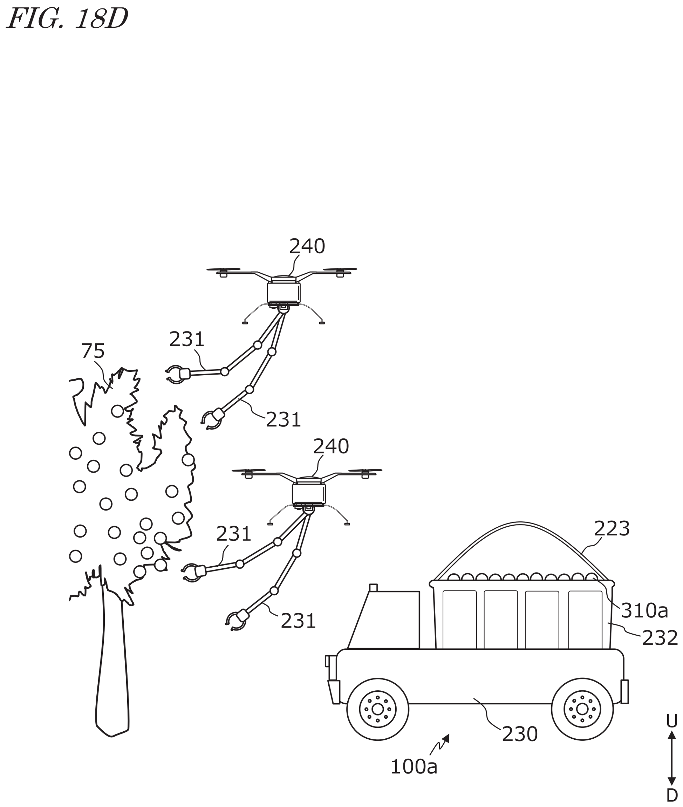

In the above-described harvester **100a,** crops were harvested using the robot arm **231** provided on the harvester **100a,** but it is not limited thereto. For example, a small unmanned aerial vehicle may harvest crops and put the harvested crops into the container **232.** FIG. **18D** is a diagram showing an example of a small unmanned aerial vehicle **240** that harvests crops. In this example, the robot arm **231** is provided on the unmanned aerial vehicle **240,** and the unmanned aerial vehicle **240** harvests crops using the robot arm **231.** The unmanned aerial vehicle **240** puts the harvested crops **310a** into the container **232,** whereby the harvested crops **310a** are stored in the container **232.** In this example, a transport vehicle may be used as the harvester **100a.**

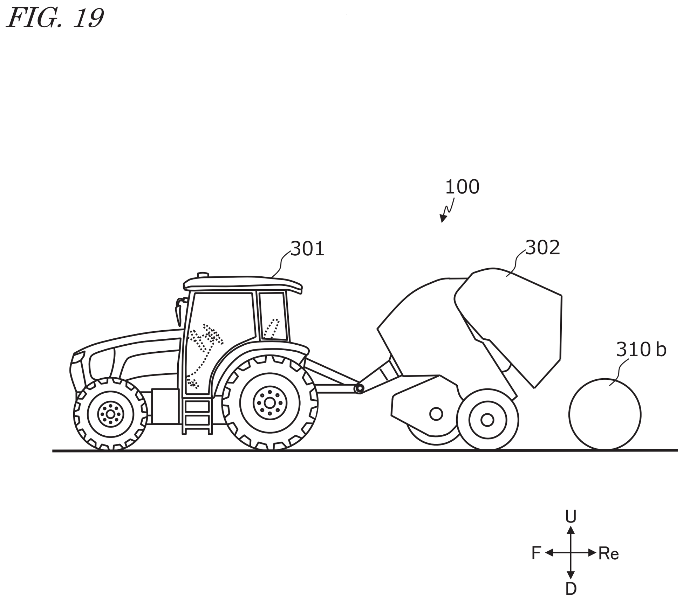

Next, an embodiment will be described where the unmanned aerial vehicle **10** scoops up harvested crops discharged from the agricultural machine **100.** FIG. **19** is a diagram showing an example of the agricultural machine **100.** In the example shown in FIG. **19****,** a baler **302,** which is an example of an implement, is being towed by a tractor **301.** The implement **302** towed by the tractor **301** and the tractor **301** as a whole function as one "agricultural machine."

The baler **302** is towed by the tractor **301** to collect grass included in swaths (grass rows) formed within the field **70,** and forms bales **310b** by shaping the collected grass into a predetermined shape. The baler **302** discharges the formed bales **310b,** for example, to the rear of the baler **302.** Since the configuration of balers is known, detailed description is omitted here.

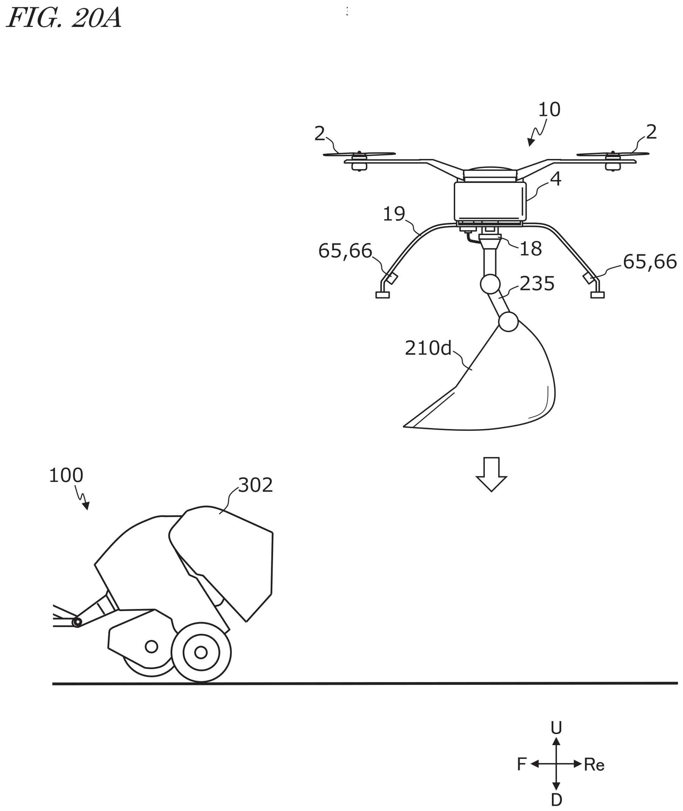

In this example, the unmanned aerial vehicle **10** scoops up and transports bales **310b** discharged from the baler **302.** FIGS. **20A** to **20C** are diagrams showing examples of operations for scooping up bales **310b** discharged from the baler **302.** In this example, the acquisition device is a bucket **210d.** The bucket **210d** is connected to the connection device **18** via an arm **235.** The arm **235** may be provided with multiple actuators that move the arm **235** itself and the bucket **210d,** and in this case, the processor **41** of the unmanned aerial vehicle **10** may drive these actuators. By scooping up the bales **310b** using the bucket **210d**, the bales **310b** can be transported.

The processor **41** of the unmanned aerial vehicle **10** causes the unmanned aerial vehicle **10** to standby near the scheduled discharge position of the bales **310b** before the baler **302** discharges the bales **310b.** The tractor **301** or the baler **302** transmits position information indicating the scheduled discharge position of the bales **310b** to the unmanned aerial vehicle **10.** The position information includes geographic coordinate information. Based on the received position information, the processor **41** causes the unmanned aerial vehicle **10** to fly to a position where bales **310b** discharged from the baler **302** can be acquired and causes it to standby. For example, as shown in FIG. **20A****,** the unmanned aerial vehicle **10** is caused to standby at a position slightly behind the scheduled discharge position of the bales **310b** on the travel route of the baler **302.**

When the baler **302** discharges the bales **310b,** the tractor **301** or the baler **302** transmits a signal notifying the discharge of the bales **310b** to the unmanned aerial vehicle **10.** When the unmanned aerial vehicle **10** receives this signal, the processor **41** causes the unmanned aerial vehicle **10** to descend and scoops up the discharged bales **310b** with the bucket **210d**.

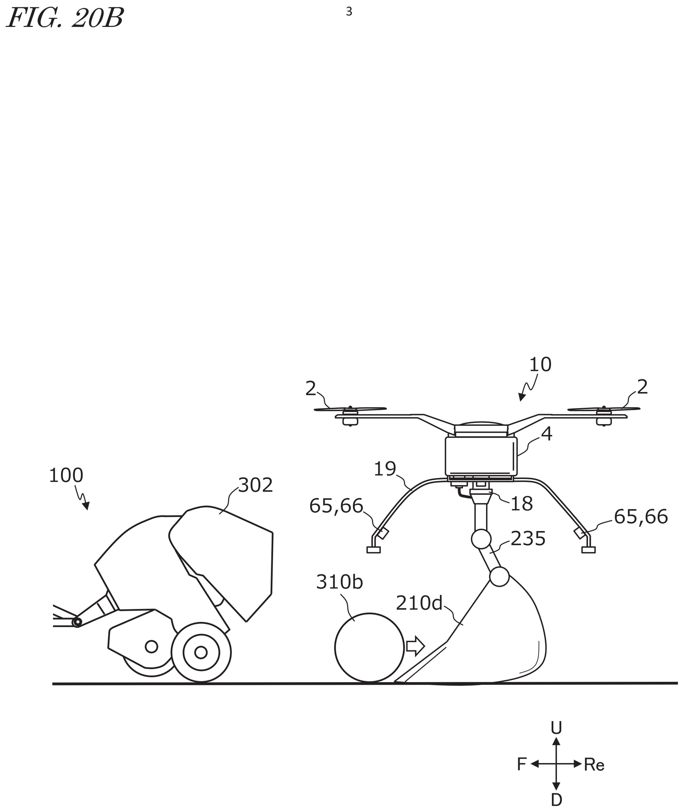

FIG. **20B** is a diagram showing an operation where the bucket **210d** scoops up bales **310b** that are discharged from the baler **302** and rolling on the ground.

The processor **41** moves the bucket **210d** to a position where the bales **310b** can be acquired using output signals from the LiDAR sensor **65** and/or the camera **66.** As described above, for example, the positions of the bales **310b** and the bucket **210d** can be detected from three-dimensional point cloud data and/or image data using an estimation model generated by machine learning. By bringing the bales **310b** and the bucket **210d** close to each other, the bales **310b** can be accommodated inside the bucket **210d.**

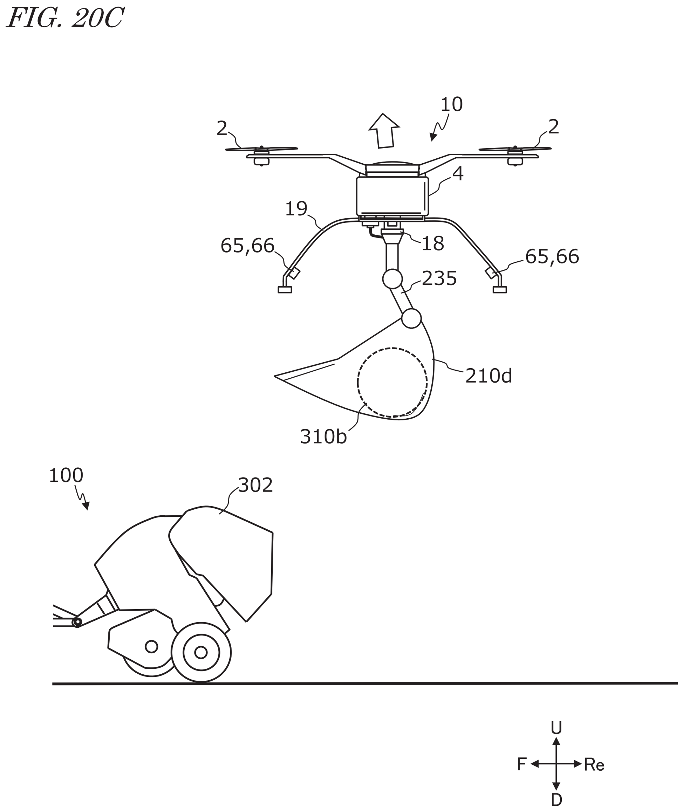

When the bales **310b** are accommodated inside the bucket **210d,** the processor **41** causes the unmanned aerial vehicle **10** to rise. FIG. **20C** is a diagram showing the unmanned aerial vehicle **10** rising with the bales **310b** accommodated inside the bucket **210d.**

After causing the unmanned aerial vehicle **10** to separate from the baler **302,** the processor **41** causes the unmanned aerial vehicle **10** to transport the bales **310b** to a predetermined location. For example, the processor **41** moves the unmanned aerial vehicle **10** to a building that stores harvested crops. When the unmanned aerial vehicle **10** arrives at the storage facility **78** or its surrounding area, the bales **310b** are transferred to the storage facility **78.** The unmanned aerial vehicle **10** may return to the field **70** again to acquire bales **310b.**

Each of the above-described acquisition devices used for acquiring harvested crops was detachable from the unmanned aerial vehicle **10,** but it is not limited thereto. Each of the acquisition devices may be integrally mounted on the unmanned aerial vehicle **10.**

Next, processing for determining an unmanned aerial vehicle **10** that transports packages of harvested crops harvested from the field **70** from among multiple unmanned aerial vehicles **10** will be described.

In crop harvesting work in the field **70,** multiple packages of harvested crops that should be transported to predetermined positions such as areas where storage facilities are located may be generated. In some cases, transportation of such multiple packages is shared among multiple unmanned aerial vehicles **10.** In the present embodiment, when a package to be transported is generated, an unmanned aerial vehicle **10** suitable for transporting that package is determined from among multiple unmanned aerial vehicles **10.**

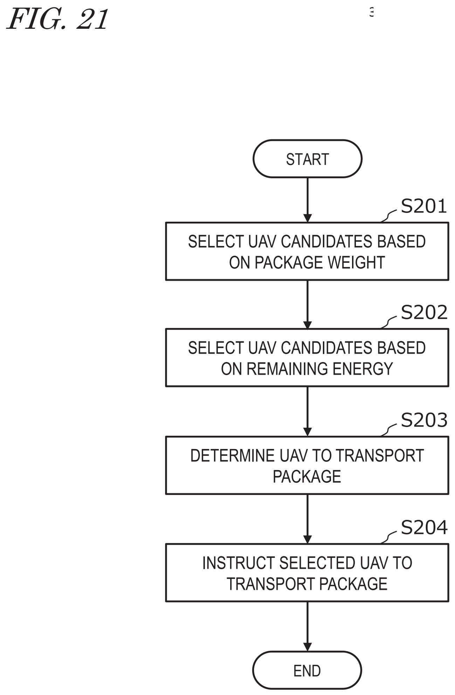

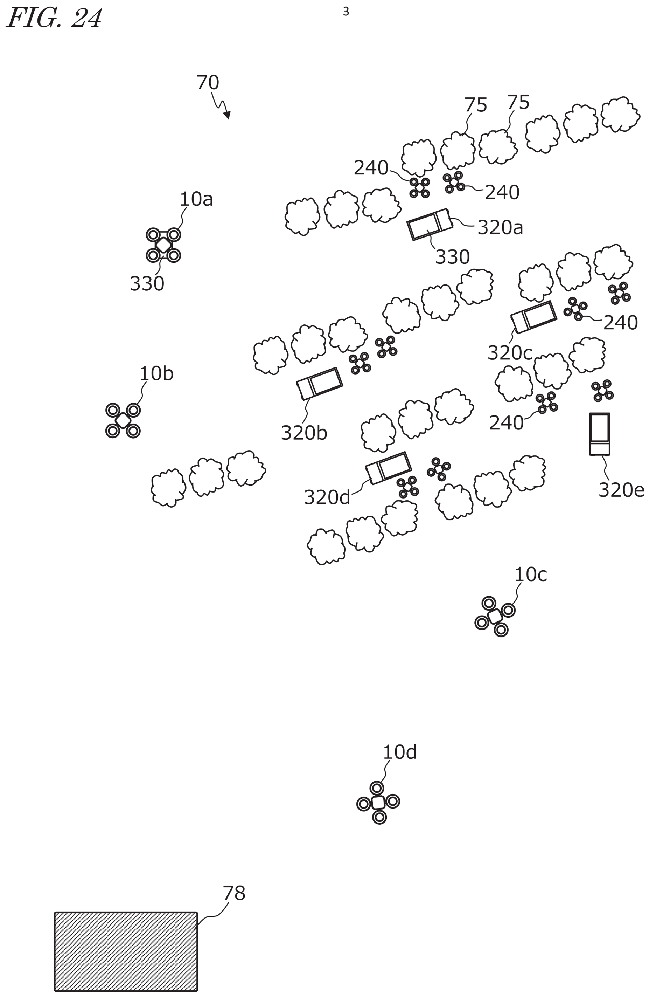

FIGS. **21****,** **22****,** and **23** are flowcharts showing examples of processing for determining an unmanned aerial vehicle **10** that transports packages of harvested crops from among multiple unmanned aerial vehicles **10.** FIG. **24** is a diagram showing an example of the field **70** where the unmanned aerial vehicle **10** performs operations to acquire and transport packages.

In the example shown in FIG. **24****,** small unmanned aerial vehicles **240** (FIG. **18D****)** are harvesting crops from trees **75** within the field **70.** Transport vehicles **320** for storing harvested crops are arranged within the field **70.** Containers **330** are arranged on the transport vehicles **320.** The unmanned aerial vehicles **240** put the harvested crops **310a** into the containers **330,** whereby harvested crops are stored in the containers **330.** The containers **330** are detachable from the transport vehicles **320.** The packages of harvested crops that the unmanned aerial vehicles **10** transport are, for example, the containers **330** in which harvested crops are stored. The unmanned aerial vehicles **10** acquire and transport the containers **330** in which harvested crops are stored.

The transport vehicles **320** may be the harvesters **100a** described above. The containers **330** may be the containers **232** (FIG. **18D****).** The transport vehicles **320** may include the components shown in FIG. 5. The transport vehicles **320** can communicate with the terminal device **400** and the management device **600** via the network **80** (FIG. **3****).** The transport vehicles **320** and the unmanned aerial vehicles **10** may communicate via the network **80** or may communicate directly without going through the network **80.** The transport vehicles **320** may be capable of manned operation or may correspond only to unmanned operation. When the transport vehicles **320** correspond only to unmanned operation, components necessary only for manned operation, such as steering devices and driver's seats, may not be provided in the transport vehicles **320.** When the transport vehicles **320** do not perform crop harvesting, components for harvesting crops may not be provided in the transport vehicles **320.**

The processor **161** (FIG. **5****)** of the transport vehicles **320** can communicate with the unmanned aerial vehicles **10,** the terminal device **400,** and the management device **600** via the communication device **190.** The processor **41** (FIG. **6****)** of the unmanned aerial vehicles **10** can communicate with the transport vehicles **320,** the terminal device **400,** and the management device **600** via the communication device **4c.**

In the example shown in FIG. **24****,** transport vehicles **320a-320e** are positioned within the field **70** as transport vehicles **320.** Unmanned aerial vehicles **10a-10d** are performing work as unmanned aerial vehicles **10.**

Here, as an example, the container **330** arranged on the transport vehicle **320a** will be described as a target package for transport, and processing for determining an unmanned aerial vehicle **10** that transports the target package **330** from among the multiple unmanned aerial vehicles **10a-10d** will be described.

The load sensor **156** (FIG. **5****)** of the transport vehicle **320a** detects the weight of the container **330.** When harvested crops **310a** (FIG. **18D****)** are stored in the container **330,** the load sensor **156** detects the weight of the container **330** including the stored harvested crops **310a.**

The processor **161** of the transport vehicle **320a** determines whether the weight of the container **330** detected by the load sensor **156** is equal to or greater than a third predetermined value. The third predetermined value is, for example, the weight of the container **330** when about 50-90% of the volume of the container **330** is filled with harvested crops **310a,** but is not limited to that value.

When the processor **161** determines that the weight of the container **330** is equal to or greater than the third predetermined value, it transmits to the management device **600** package weight information indicating the weight of the container **330** which is the target package, and package position information indicating the geographic coordinates of the position of the container **330.** The processor **161** can acquire information about the geographic coordinates of the position of the container **330** from information output by the GNSS unit **121.** Also, the processor **161** transmits a request signal requesting transportation of the container **330** to the management device **600.**

Each of the unmanned aerial vehicles **10a-10d** transmits availability information indicating the availability status regarding their own payload to the management device **600.** The availability status represents the weight of packages that the unmanned aerial vehicle **10** can additionally load. The availability status can be obtained, for example, from the difference between the maximum payload of the unmanned aerial vehicle **10** and the weight of objects currently loaded by the unmanned aerial vehicle **10.** The availability status may be calculated considering the weight of fuel carried by the unmanned aerial vehicle **10.**

The processor **41** of the unmanned aerial vehicle **10** can detect the weight of currently loaded objects using the load sensor **67** (FIG. **6****).** The load sensor **67** is provided, for example, in the connection device **18** and detects the weight of objects connected to the connection device **18.** Information about the maximum payload of the unmanned aerial vehicle **10** is stored in advance in the storage device **44.** The processor **41** of each of the unmanned aerial vehicles **10a-10d** transmits availability information to the management device **600.**

The processor **41** of the unmanned aerial vehicle **10** further transmits energy remaining information indicating the remaining amount of energy sources for flying the unmanned aerial vehicle **10** to the management device **600.** The remaining amount of energy sources for flying the unmanned aerial vehicle **10** is, for example, the remaining amount of the battery **52** (FIG. **2A****)** and/or the remaining amount of fuel in the fuel tank **7b** (FIG. **2B**). For example, the processor **41** can acquire information about the remaining amount of the battery **52** from information output by a battery management system (BMS) of the battery **52.** For example, a fuel sensor that detects the remaining amount of fuel is provided in the fuel tank **7b**, and the processor **41** can acquire information about the remaining amount of fuel from output signals of the fuel sensor. The processor **41** of the unmanned aerial vehicle **10** further transmits unmanned aerial vehicle position information indicating the geographic coordinates of the position of the unmanned aerial vehicle **10** to the management device **600.** The processor **41** can acquire information about the geographic coordinates of the position of the unmanned aerial vehicle **10** from information output by the GNSS unit **61.** The processor **41** of each of the unmanned aerial vehicles **10a-10d** transmits energy remaining information and unmanned aerial vehicle position information to the management device **600.**

The processor **660** (FIG. **7****)** of the management device **600** can communicate with the unmanned aerial vehicles **10,** the transport vehicle **320a,** and the terminal device **400** via the communication device **690.** The communication device **690** receives the above-mentioned package weight information, package position information, request signal, availability information, energy remaining information, and unmanned aerial vehicle position information.

The processor **660** determines a transport unmanned aerial vehicle **10** that transports the target package **330** to a predetermined position from among the multiple unmanned aerial vehicles **10a-10d.** In the example shown in FIG. **24****,** the predetermined position is the position of the storage facility **78** or its surrounding area.

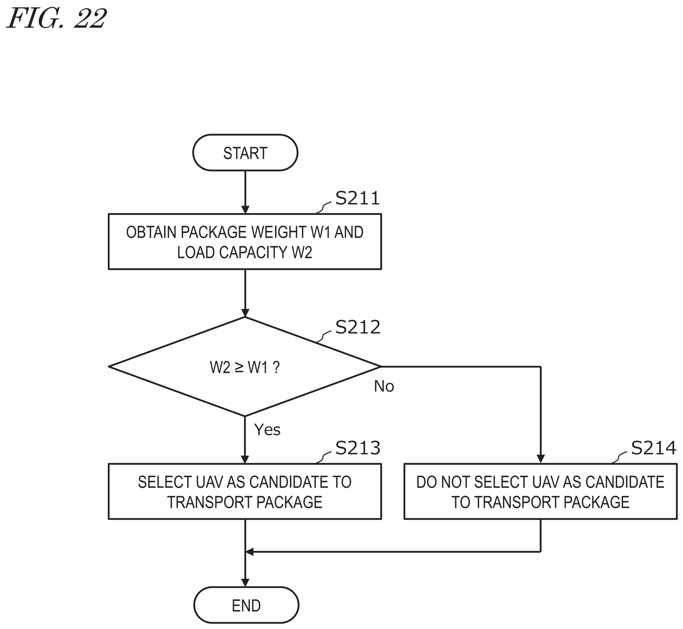

The processor **660** selects candidates for the transport unmanned aerial vehicle **10** from among the multiple unmanned aerial vehicles **10a-10d** based on the package weight information and the availability information (step S201 in FIG. **21****).** FIG. **22** is a flowchart showing an example of details of the processing in step S201. The processor **660** selects, as candidates for the transport unmanned aerial vehicle **10,** unmanned aerial vehicles whose weight of packages that can be additionally loaded obtained from the availability information is equal to or greater than the weight indicated by the package weight information.

The processor **660** acquires the package weight information and the availability information of each of the unmanned aerial vehicles **10a-10d** (step S211). The package weight information indicates a weight value W1 of the target package **330.** The availability information indicates a weight value W2 of packages that can be additionally loaded. The processor **660** compares the magnitude relationship between the weight value W1 and the weight value W2 for each of the unmanned aerial vehicles **10a-10d** (step S212). The processor **660** selects unmanned aerial vehicles whose weight value W2 is equal to or greater than the weight value W1 as candidates for the transport unmanned aerial vehicle **10** (step S213). The processor **660** does not select unmanned aerial vehicles whose weight value W2 is less than the weight value W1 as candidates for the transport unmanned aerial vehicle **10** (step S214).

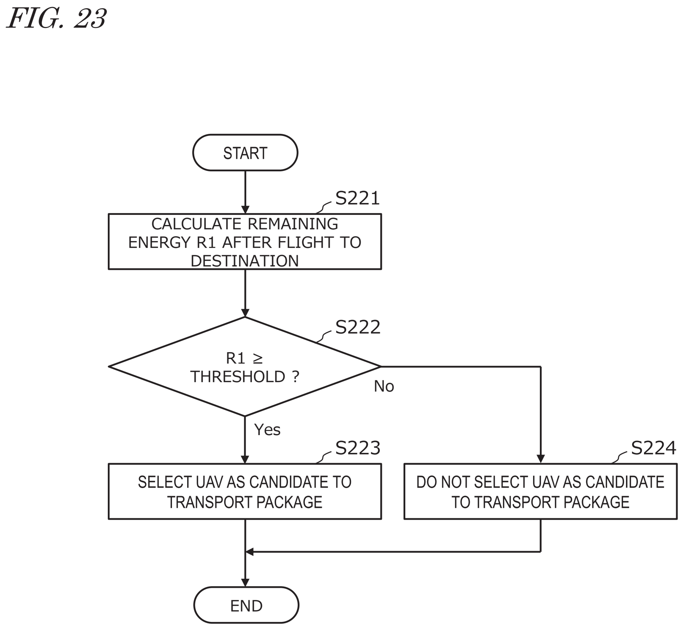

Next, the processor **660** further selects candidates from among one or more unmanned aerial vehicles **10** selected in step S213 based on the energy remaining information (step S202 in FIG. **21****).** FIG. **23** is a flowchart showing an example of details of the processing in step S202.

Information indicating the relationship between the energy consumption rate of the flying unmanned aerial vehicle **10** and the weight of objects loaded by the unmanned aerial vehicle **10,** for example, a map showing this relationship, is stored in advance in the storage device **650.** The energy consumption rate represents the consumption amount of electric power and/or fuel for flying the unmanned aerial vehicle **10** per unit distance. Information about the geographic coordinates of the transport destination position of the target package **330** (for example, the position of the storage facility **78** or its surrounding area) is stored in advance in the storage device **650.**

The processor **660** calculates the distance between the current position of the unmanned aerial vehicle **10** and the position of the target package **330,** and also calculates the distance between the position of the target package **330** and the transport destination position.

The processor **660** calculates the energy consumption (first energy consumption) when the unmanned aerial vehicle **10** is flown from the current position to the position of the target package **330.** Also, the processor **660** calculates the energy consumption (second energy consumption) when the unmanned aerial vehicle **10** supporting the target package **330** flies from the position of the target package **330** to the transport destination position, assuming that the unmanned aerial vehicle **10** supports the target package **330.** The processor **660** can calculate the energy remaining amount R1 when the unmanned aerial vehicle **10** supporting the target package **330** flies to the transport destination position based on the current energy remaining amount, the first energy consumption, and the second energy consumption.

The processor **660** calculates the energy remaining amount R1 for each of one or more unmanned aerial vehicles **10** selected in step S213 (FIG. **22****)** (step S221 in FIG. **23****).**

The processor **660** compares the magnitude relationship between the calculated energy remaining amount R1 and a fourth predetermined value (step S222). The fourth predetermined value is an arbitrary value greater than zero. The fourth predetermined value is, for example, a value corresponding to 10-20% energy remaining amount, but is not limited thereto.

The processor **660** selects unmanned aerial vehicles whose energy remaining amount R1 is equal to or greater than the fourth predetermined value as candidates for the transport unmanned aerial vehicle **10** (step S223). The processor **660** does not select unmanned aerial vehicles whose energy remaining amount R1 is less than the fourth predetermined value as candidates for the transport unmanned aerial vehicle **10** (step S224).

The processor **660** determines a transport unmanned aerial vehicle **10** that transports the target package **330** from among one or more unmanned aerial vehicles **10** selected in step S223 (step S203 in FIG. **21****).** For example, the processor **660** determines the unmanned aerial vehicle **10** with the smallest distance between the current position of the unmanned aerial vehicle **10** and the position of the target package **330** as the transport unmanned aerial vehicle **10.** Also, for example, the unmanned aerial vehicle **10** with the largest energy remaining amount R1 may be determined as the transport unmanned aerial vehicle **10.**

As an example, the processor **660** determines the unmanned aerial vehicle **10b** as the transport unmanned aerial vehicle. The processor **660** outputs an instruction to transport the target package **330** for transport to the unmanned aerial vehicle **10b.** Also, the processor **660** outputs package position information indicating the geographic coordinates of the position of the target package **330** to the unmanned aerial vehicle **10b.**

When the processor **41** of the unmanned aerial vehicle **10b** receives the transport instruction and package position information, it causes the unmanned aerial vehicle **10b** to fly to the position of the target package **330.** The target package **330** is, for example, the container **232** (FIGS. **18A-18D****).** The unmanned aerial vehicle **10b** is provided with, for example, the hook **210c** as a support device that supports the target package **330.** The unmanned aerial vehicle **10b** that has reached above the container **232** can acquire the container **232** by the method described using FIGS. **18A-18C****.** The unmanned aerial vehicle **10b** that has acquired the container **232** flies toward the transport destination storage facility **78** or its surrounding area. When the unmanned aerial vehicle **10b** arrives at the storage facility **78** or its surrounding area, the harvested crops are transferred to the storage facility **78.**

In the present embodiment, an unmanned aerial vehicle **10** suitable for transporting the target package **330** is determined from among multiple unmanned aerial vehicles **10.**

The weight value W1 of the target package **330** and the weight value W2 of packages that the unmanned aerial vehicle **10** can additionally load are compared, and an unmanned aerial vehicle **10** that satisfies the condition that the weight value W2 is equal to or greater than the weight value W1 is determined as the transport unmanned aerial vehicle **10.**

This can prevent unmanned aerial vehicles **10** that cannot transport the target package **330,** such as those that would exceed the maximum payload when loading the target package **330,** from attempting to transport the target package **330.** Also, even if the unmanned aerial vehicle **10** is already supporting another package, if there is spare capacity in the transport capability of that unmanned aerial vehicle **10,** by having it support the target package **330,** efficient transport of harvested crops can be achieved.

Also, in the present embodiment, the energy remaining amount R1 when the unmanned aerial vehicle **10** supports the target package **330** and flies to the transport destination position is calculated. An unmanned aerial vehicle **10** that satisfies the condition that the energy remaining amount R1 is equal to or greater than the fourth predetermined value is determined as the transport unmanned aerial vehicle **10.** This can prevent the unmanned aerial vehicle **10** from becoming unable to fly during transport of the target package **330.**

Note that when there is sufficient margin in the remaining amount of energy sources for each of the multiple unmanned aerial vehicles **10,** the processing to determine the transport unmanned aerial vehicle **10** based on the energy remaining amount R1 may be omitted.

In the above description, the management device **600** performed the processing to determine the unmanned aerial vehicle **10** that transports the target package **330,** but the terminal device **400** may perform this processing.

Also, the unmanned aerial vehicle **10** itself may determine whether it can transport the target package **330.**

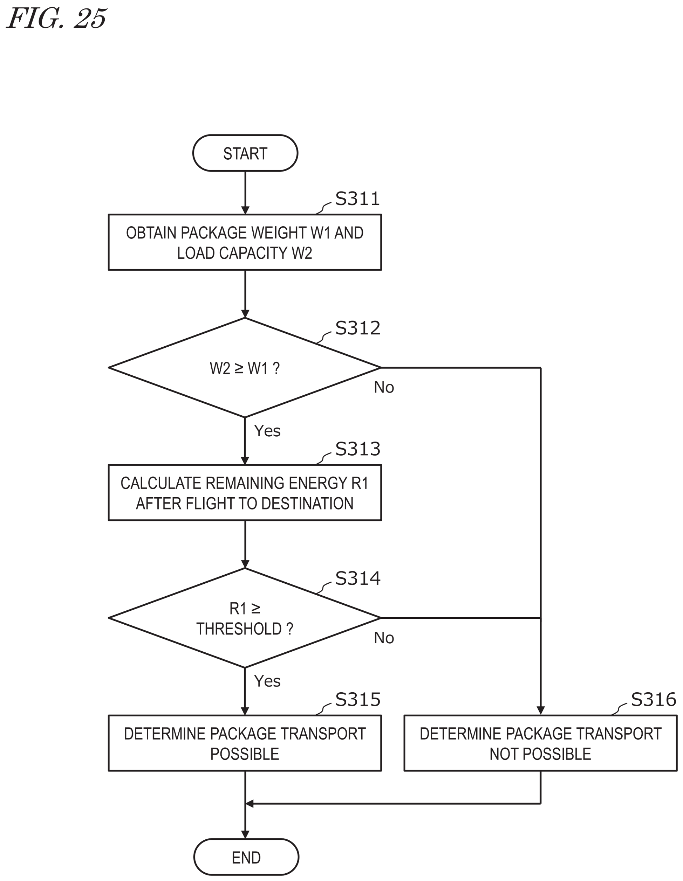

FIG. **25** is a flowchart showing an example of processing where the unmanned aerial vehicle **10** itself determines whether it can transport the target package **330.**

Here, as an example, the container **330** arranged on the transport vehicle **320a** will be described as a target package for transport, and processing where the unmanned aerial vehicle **10** itself determines whether the target package **330** can be transported will be described.

When the processor **161** of the transport vehicle **320a** determines that the weight of the container **330** is equal to or greater than the third predetermined value, it transmits to multiple unmanned aerial vehicles **10** package weight information indicating the weight of the container **330** which is the target package, and package position information indicating the geographic coordinates of the position of the container **330.** Also, the processor **161** transmits a request signal requesting transportation of the container **330** to the multiple unmanned aerial vehicles **10.**

Here, processing performed by one unmanned aerial vehicle **10** among the multiple unmanned aerial vehicles **10** will be described. Other unmanned aerial vehicles **10** also perform similar processing.

The processor **41** of the unmanned aerial vehicle **10** generates availability information, energy remaining information, and unmanned aerial vehicle position information. The communication device **4c** of the unmanned aerial vehicle **10** receives the above-mentioned package weight information, package position information, and request signal.

The processor **41** acquires the package weight information and availability information (step S311). The package weight information indicates the weight value W1 of the target package **330.** The availability information indicates the weight value W2 of packages that can be additionally loaded. The processor **41** compares the magnitude relationship between the weight value W1 and the weight value W2 (step S312).

When the weight value W2 is less than the weight value W1, the processor **41** determines that transport of the target package **330** is impossible (step S316). In this case, transport of the target package **330** is not performed. When the weight value W2 is equal to or greater than the weight value W1, the processor **41** calculates the energy remaining amount R1 (step S313).

Information indicating the relationship between the energy consumption rate of the flying unmanned aerial vehicle **10** and the weight of objects loaded by the unmanned aerial vehicle **10,** for example, a map showing this relationship, is stored in advance in the storage device **44.** Information about the geographic coordinates of the transport destination position of the target package **330** (for example, the position of the storage facility **78** or its surrounding area) is stored in advance in the storage device **44.**

The processor **41** calculates the distance between the current position of the unmanned aerial vehicle **10** and the position of the target package **330,** and also calculates the distance between the position of the target package **330** and the transport destination position.

The processor **41** calculates the energy consumption (first energy consumption) when the unmanned aerial vehicle **10** is flown from the current position to the position of the target package **330.** Also, the processor **41** calculates the energy consumption (second energy consumption) when the unmanned aerial vehicle **10** supporting the target package **330** flies from the position of the target package **330** to the transport destination position, assuming that the unmanned aerial vehicle **10** supports the target package **330.** The processor **41** calculates the energy remaining amount R1 when the unmanned aerial vehicle **10** supporting the target package **330** flies to the transport destination position based on the current energy remaining amount, the first energy consumption, and the second energy consumption.

The processor **41** compares the magnitude relationship between the calculated energy remaining amount R1 and the fourth predetermined value (step S314). When the energy remaining amount R1 is less than the fourth predetermined value, the processor **41** determines that transport of the target package **330** is impossible (step S316). In this case, transport of the target package **330** is not performed. When the energy remaining amount R1 is equal to or greater than the fourth predetermined value, the processor **41** determines that the target package **330** can be transported (step S315).

The processor **41** outputs information indicating the determination result of whether the target package **330** can be transported to the outside via the communication device **4c.** This enables notifying other unmanned aerial vehicles **10** and the management device **600,** etc., that it can transport the target package **330,** or that it cannot transport the target package **330.**

When the processor **41** determines that the target package **330** can be transported, it causes the unmanned aerial vehicle **10** to fly to the position of the target package **330.** The target package **330** is, for example, the container **232** (FIGS. **18A-18D****).** The unmanned aerial vehicle **10** is provided with, for example, the hook **210c** as a support device that supports the target package **330.** The unmanned aerial vehicle **10** that has reached above the container **232** can acquire the container **232** by the method described using FIGS. **18A-18C****.** The processor **41** causes the unmanned aerial vehicle **10** that has acquired the container **232** to fly toward the transport destination storage facility **78** or its surrounding area. When the unmanned aerial vehicle **10** arrives at the storage facility **78** or its surrounding area, the harvested crops are transferred to the storage facility **78.**

Note that when there is sufficient margin in the remaining amount of energy sources of the unmanned aerial vehicle **10,** the processing to determine whether the target package **330** can be transported based on the energy remaining amount R1 may be omitted.

As described above, by having an unmanned aerial vehicle **10** capable of transporting the target package **330** fly to the position where the target package **330** is located, support and transport the target package **330,** efficient transport of harvested crops can be achieved.

When determining whether the target package **330** can be transported based on the weight of the target package **330,** the processor **41** may determine that the target package **330** can be transported when the total weight of one or more packages that the unmanned aerial vehicle **10** will support when supporting the target package **330** is equal to or less than the maximum payload. The processor **41** determines that the target package **330** cannot be transported when the total weight exceeds the maximum payload.

When the unmanned aerial vehicle **10** is already supporting one or more other packages different from the target package **330,** the processor **41** determines that the target package **330** can be transported when the total value of the weight value indicated by the package weight information and the weight values of the one or more other packages is equal to or less than the maximum payload. The processor **41** determines that the target package **330** cannot be transported when the total value of the weight value indicated by the package weight information and the weight values of the one or more other packages exceeds the maximum payload.

This can prevent unmanned aerial vehicles **10** that cannot transport the target package **330,** such as those that would exceed the maximum payload when loading the target package **330,** from attempting to transport the target package **330.**

Even if the unmanned aerial vehicle **10** is already supporting packages, if there is spare capacity in the transport capability, by having it support additional packages, efficient transport of harvested crops can be achieved.

The harvester **100a** and/or the unmanned aerial vehicle **240** illustrated in FIGS. **18A-18D** operate as a package system that packages harvested crops. As described above, the container **232** in which harvested crops are stored becomes a package. The robot arm **231** provided on the harvester **100a** and/or the unmanned aerial vehicle **240** operates as a packaging device that packages harvested crops. The processor of the harvester **100a** and/or the unmanned aerial vehicle **240** controls the operation of the robot arm **231** which is the packaging device. Here, it is assumed that the processor **161** of the harvester **100a** controls the operation of the robot arm **231.**

A package is, for example, a storage section in which harvested crops are stored. A package may be, for example, the tank **106** that stores harvested crops described above. In this case, the tank **106** is separable from the harvester **100.** A package may be, for example, a lump of harvested crops wrapped like the bales **310b** described above.

The processor **161** of the harvester **100a** may adjust the amount of crops that the robot arm **231** harvests based on the transport capability of the unmanned aerial vehicle **10** that transports packages of harvested crops, and change the weight of the container **232** containing harvested crops.

For example, the processor **41** of the unmanned aerial vehicle **10** transmits availability information indicating the weight value W2 of packages that can be additionally loaded to the harvester **100a.** The processor **161** of the harvester **100a** adjusts the amount of crops that the robot arm **231** harvests so that the weight value W1 of the container **232** does not exceed the weight value W2. In this way, by adjusting the weight of the container **232** containing harvested crops according to the transport capability of the unmanned aerial vehicle **10,** the unmanned aerial vehicle **10** can be made to transport the container **232.** Note that to adjust the weight of the container **232,** the number of harvested crops put into the container **232** may be adjusted.

The processor **161** of the harvester **100a** may move the harvester **100a** on which the container **232** is arranged to a position where the unmanned aerial vehicle **10** can acquire the container **232.** Even if the position where crops are harvested is an area where entry of the unmanned aerial vehicle **10** is difficult, by moving the position of the package, the unmanned aerial vehicle **10** can acquire the package.

The processing to change the weight of the container **232** containing harvested crops based on the transport capability of the unmanned aerial vehicle **10** may be performed by the management device **600.** The processor **660** of the management device **600** transmits an instruction to change the weight of the container **232** containing harvested crops to the harvester **100a** based on the availability information and energy remaining information of the unmanned aerial vehicle **10.** The processor **660** can calculate the weight of the container **232** that the unmanned aerial vehicle **10** can transport to the transport destination position based on the availability information and energy remaining information by using, for example, a map showing the relationship between the energy consumption rate of the unmanned aerial vehicle **10** and the weight of objects loaded by the unmanned aerial vehicle **10.** The processor **660** instructs the harvester **100a** so that the weight of the container **232** does not exceed the calculated transportable weight.

In the above example, the weight of the container **232** was adjusted, but in forms where the unmanned aerial vehicle **10** supports multiple packages, the number of packages that the unmanned aerial vehicle **10** supports may be changed based on the transport capability of the unmanned aerial vehicle **10.**

By changing the weight or number of packages according to the transport capability of the unmanned aerial vehicle **10,** the unmanned aerial vehicle **10** can be made to transport those packages.

In the embodiment where the baler **302** illustrated in FIG. **19** forms bales **310b,** the bales **310b** become packages of harvested crops. In the example of forming bales **310b,** the weight or number of bales **310b** may be changed according to the transport capability of the unmanned aerial vehicle **10.**

In the above example, the unmanned aerial vehicle **10** was transporting packages of harvested crops, but it may transport harvested crops that are not packaged. In this case, the processor **161** of the harvester **100a** may transmit harvested crop weight information indicating the weight of harvested crops and harvested crop position information indicating the geographic coordinates of the position of harvested crops to the management device **600** and/or the unmanned aerial vehicle **10.** The processor **660** of the management device **600** determines a transport unmanned aerial vehicle **10** that transports harvested crops to a transport destination position (for example, the position of the storage facility **78** or its surrounding area) from among multiple unmanned aerial vehicles **10** based on the harvested crop weight information and harvested crop position information. The processor **41** of the unmanned aerial vehicle **10** determines whether harvested crops can be transported to the transport destination position based on the harvested crop weight information and harvested crop position information. When determining that harvested crops can be transported, the processor **41** causes the unmanned aerial vehicle **10** to fly to the position of the harvested crops, causes the acquisition device **210** to acquire the harvested crops, and causes the unmanned aerial vehicle **10** to fly to the transport destination position. By having an unmanned aerial vehicle **10** capable of transporting harvested crops fly to the position where harvested crops are located, acquire and transport the harvested crops, efficient transport of harvested crops can be achieved.

Next, processing for causing an unmanned aerial vehicle **10** that is performing operations other than transporting harvested crops to transport harvested crops will be described.

The unmanned aerial vehicle **10** can perform various operations in addition to transporting harvested crops. For example, the unmanned aerial vehicle **10** performs operations to support and transport arbitrary structures. Structures that the unmanned aerial vehicle **10** supports and transports are, for example, implements **200.** By having the unmanned aerial vehicle **10** support the implement **200,** the implement **200** can be transported to desired locations or the work of the implement **200** can be assisted.

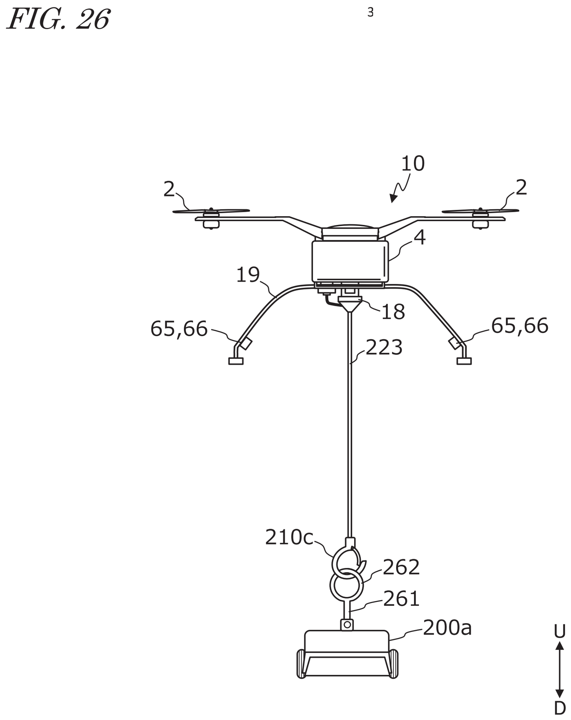

FIG. **26** is a diagram showing an example of the unmanned aerial vehicle **10** supporting an implement **200a.** The type of implement **200a** is arbitrary. In the example shown in FIG. **26****,** the implement **200a** is a grass cutter. In this example, a rod **261** extends upward from the top of the main body of the implement **200a.** A hook **262** is provided at the top of the rod **261.** The hook **262** has a shape that can hook the hook **210c** connected to the unmanned aerial vehicle **10.** The hook **262** is, for example, a ring hook.

The rod **261** is rotatably provided on the main body of the implement **200a,** and the angle of the rod **261** relative to the main body of the implement **200a** can be freely changed. A wire, etc., may be used instead of the rod **261.**

The method by which the unmanned aerial vehicle **10** supports the implement **200a** is arbitrary, and mechanisms different from the above may be used.

In the present embodiment, an unmanned aerial vehicle **10** supporting the implement **200a** is caused to separate the implement **200a** and transport harvested crops.

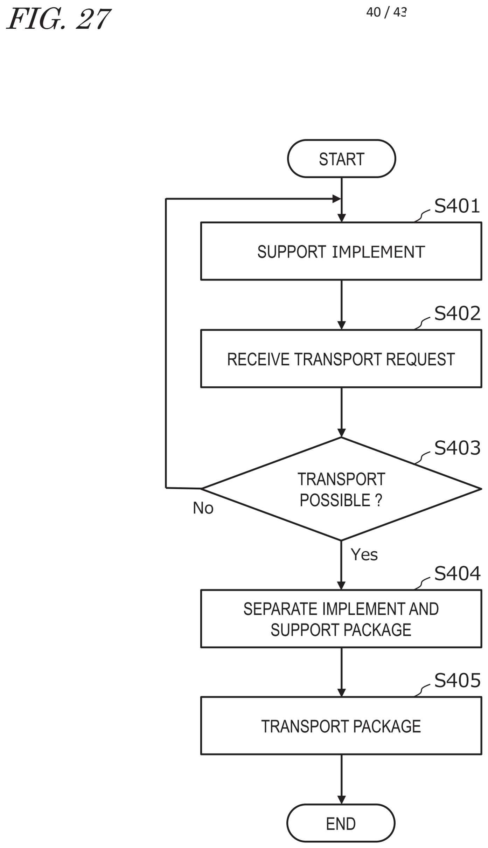

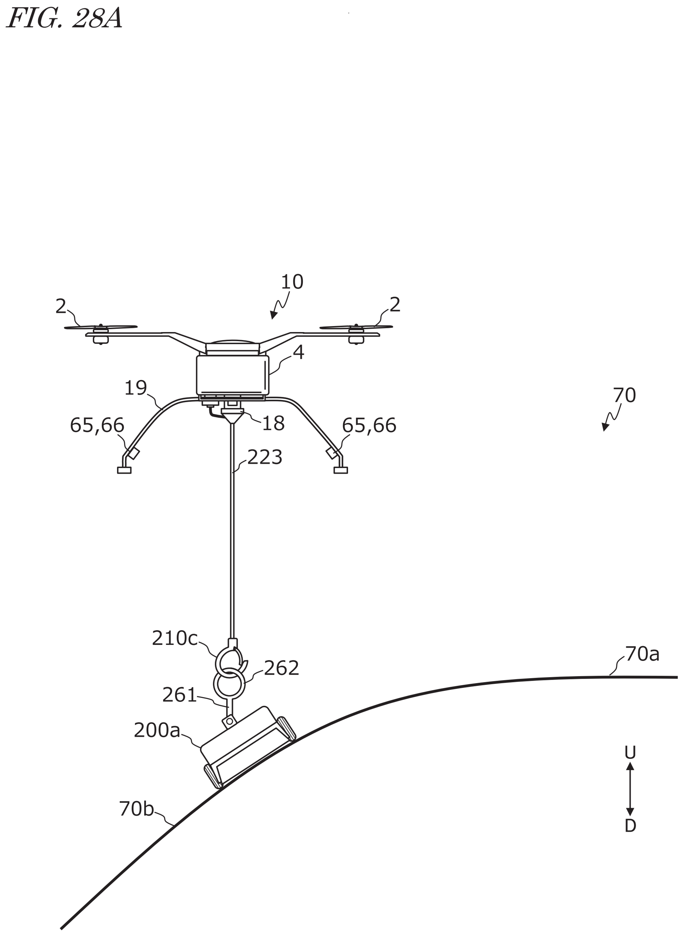

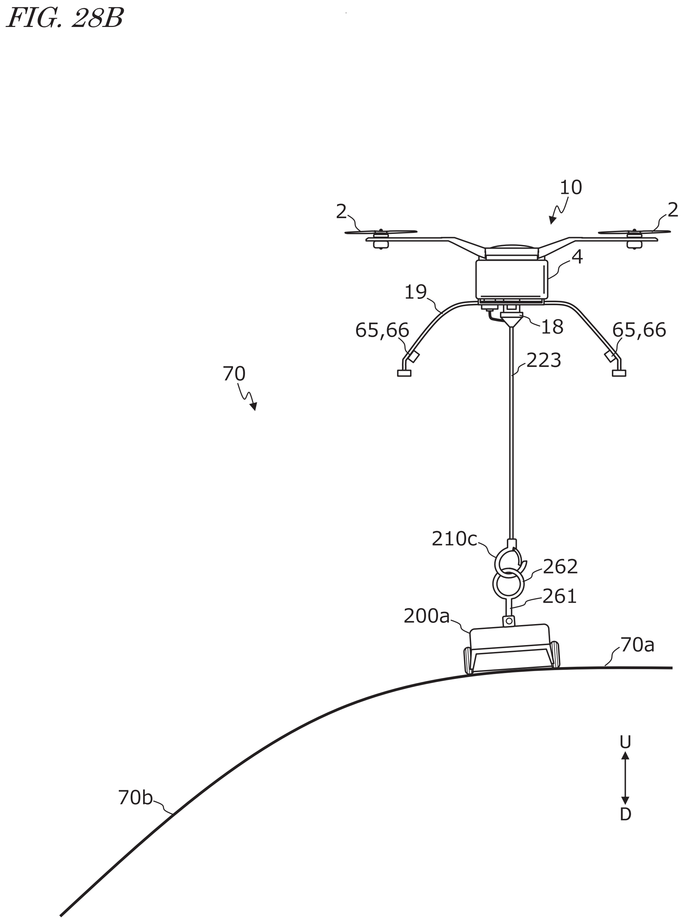

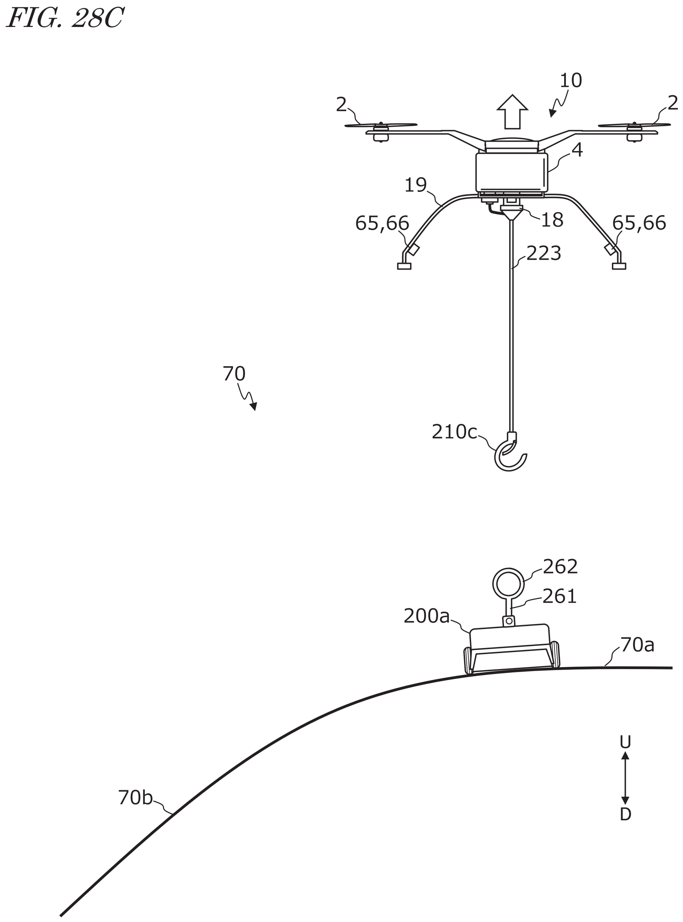

FIG. **27** is a flowchart showing an example of operations for causing an unmanned aerial vehicle **10** supporting the implement **200a** to separate the implement **200a** and perform transport of harvested crops. FIGS. **28A** and **28B** are diagrams showing the unmanned aerial vehicle **10** supporting the implement **200a** performing work in the field **70.** FIG. **28C** is a diagram showing the unmanned aerial vehicle **10** that has separated the implement **200a.**

The unmanned aerial vehicle **10,** for example, supports the implement **200a** at a warehouse or its surrounding area (step S401). The processor **41** of the unmanned aerial vehicle **10** causes the unmanned aerial vehicle **10** supporting the implement **200a** to fly and transports the implement **200a** to an area where the implement **200a** performs work. The area where the implement **200a** performs work is, for example, within the field **70** or an area around the field **70.**

In the examples shown in FIGS. **28A** and **28B****,** the area where the implement **200a** performs work is the field **70.** When the implement **200a** is a grass cutter, the implement **200a** performs grass cutting. FIG. **28A** shows the implement **200a** performing work on a slope **70b** with a relatively large inclination angle. FIG. **28B** shows the implement **200a** performing work on relatively flat ground **70a.** Even when performing work on a slope **70b** with a relatively large inclination angle, by having the unmanned aerial vehicle **10** support the implement **200a,** the implement **200a** can perform work stably.

As described above, when the processor **161** (FIG. **5****)** of the transport vehicle **320** accumulates a predetermined amount or more of harvested crops in the container **330,** it transmits to the unmanned aerial vehicle **10** package weight information indicating the weight of the container **330** which is the target package, and package position information indicating the geographic coordinates of the position of the container **330.** Also, the processor **161** transmits a request signal requesting transportation of the container **330** to the unmanned aerial vehicle **10.** The communication device **4c** of the unmanned aerial vehicle **10** receives the above-mentioned package weight information, package position information, and request signal (step S402).

Upon receiving the request signal, the processor **41** of the unmanned aerial vehicle **10** determines whether it is possible to release support of the implement **200a** and transport the package **330** (step S403).

When the implement **200a** is positioned in an area where support by the unmanned aerial vehicle **10** is necessary, the processor **41** causes the unmanned aerial vehicle **10** to continue supporting the implement **200a** that is performing work. For example, as shown in FIG. **28A****,** when the implement **200a** is performing work on a slope **70b** with a relatively large inclination angle, support of the implement **200a** is continued. In this case, transport of the package **330** is not performed. This enables the implement **200a** to perform work appropriately.

When the implement **200a** is positioned in an area where work is possible without being supported by the unmanned aerial vehicle **10,** the processor **41** causes the unmanned aerial vehicle **10** to release support of the implement **200a** (step S404). For example, as shown in FIG. **28B****,** when the implement **200a** is performing work on relatively flat ground **70a,** support of the implement **200a** is released. FIG. **28C** shows the unmanned aerial vehicle **10** that has released support of the implement **200a** and separated the implement **200a.**

For example, the processor **41** controls the operation of the latch so that the latch of the hook **210c** is in an open state, and causes the unmanned aerial vehicle **10** to fly so that the hook **210c** moves diagonally downward relative to the hook **262** of the implement **200a,** thereby separating the hook **210c** and the hook **262.** This enables separation of the implement **200a** from the unmanned aerial vehicle **10.** The separated implement **200a** may continue to perform work.

The processor **41** causes the unmanned aerial vehicle **10** that has released support of the implement **200a** to fly to the position of the target package **330** indicated by the package position information. The target package **330** is, for example, the container **232** (FIGS. **18A-18D****).** The unmanned aerial vehicle **10** that has reached above the container **232** can support the container **232** by the method described using FIGS. **18A-18C****.** The processor **41** causes the unmanned aerial vehicle **10** supporting the container **232** to fly toward the transport destination storage facility **78** or its surrounding area (step S405). When the unmanned aerial vehicle **10** arrives at the storage facility **78** or its surrounding area, the harvested crops are transferred to the storage facility **78.**

In this way, by causing an unmanned aerial vehicle **10** supporting the implement **200a** to separate the implement **200a** and perform transport of harvested crops, efficient transport of harvested crops can be achieved. By using an unmanned aerial vehicle **10** from which the implement **200a** has been separated, the weight of packages **330** that the unmanned aerial vehicle **10** can transport can be increased.

In the processing of step S403 described above, the processor **41** may determine whether it is possible to cause the unmanned aerial vehicle **10** to release support of the implement **200a** and transport the package **330** based on the degree of progress of the work of the implement **200a.** For example, when the degree of progress of the work of the implement **200a** is relatively low, by continuing to have the unmanned aerial vehicle **10** support the implement **200a** that is performing work, the work of the implement **200a** can be performed appropriately. When the degree of progress of the work of the implement **200a** is relatively high, the unmanned aerial vehicle **10** is caused to release support of the implement **200a** and transport the package **330.**

Also, by comparing the deadline for work of the implement **200a** set in the work plan with the deadline for transport of the package **330,** it may be determined whether it is possible to cause the unmanned aerial vehicle **10** to release support of the implement **200a** and transport the package **330.** For example, when there is margin until the deadline for work of the implement **200a** and the deadline for transport of the package **330** is approaching, the unmanned aerial vehicle **10** may be caused to release support of the implement **200a** and transport the package **330.**

Also, in the processing of step S403 described above, after determining whether the package **330** can be transported according to the state of the implement **200a,** it may be further determined whether the package **330** can be transported based on the weight of the package **330** and/or the remaining amount of energy sources of the unmanned aerial vehicle **10.** In this case, the processor **41** determines whether the unmanned aerial vehicle **10** can transport the package **330** to the transport destination position based on the package weight information. Also, the processor **41** determines whether the unmanned aerial vehicle **10** can transport the package **330** to the transport destination position based on the remaining amount of energy sources. For example, the processor **41** can determine whether the package **330** can be transported by performing processing similar to that described using FIG. **25****.**

Also, the support of the implement **200a** may be released when the unmanned aerial vehicle **10** transporting the implement **200a** reaches its destination, without determining whether the package **330** can be transported according to the state of the implement **200a.** For example, when it is not necessary for the unmanned aerial vehicle **10** to support the implement **200a** that is performing work, the support of the implement **200a** may be released when the destination is reached, the unmanned aerial vehicle **10** may be flown to the position of the package **330,** and the package **330** may be supported.

The processing to determine whether the package **330** can be transported described above may be performed by the processor **660** of the management device **600** and/or the processor **460** of the terminal device **400.** Also, the various processes described above may be performed cooperatively by at least two of the processor **41,** the processor **660,** and the processor **460.**

The systems that perform the various processes described above can also be retrofitted to unmanned aerial vehicles and/or agricultural machines that do not have these functions. Such systems can be manufactured and sold independently of unmanned aerial vehicles and agricultural machines. Computer programs used in such systems can also be manufactured and sold independently of unmanned aerial vehicles and agricultural machines. Computer programs may be provided stored on computer-readable non-transitory storage media, for example. Computer programs may also be provided by download via telecommunication lines (such as the Internet).

As described above, the present disclosure includes the systems, unmanned aerial vehicles, methods, and computer programs described below.

### [Item A1]

A harvest management system for acquiring harvested crops that a mobile agricultural machine has harvested from a field using an unmanned aerial vehicle, wherein
an acquisition device used for acquiring the harvested crops is connected to the unmanned aerial vehicle and moves together with the unmanned aerial vehicle,
the unmanned aerial vehicle includes:
   a receiving device that receives position information indicating a position of the agricultural machine in the field or a position where the agricultural machine is scheduled to discharge harvested crops;
   a flight device that causes the unmanned aerial vehicle to fly; and
   a control device that controls operation of the flight device to cause the unmanned aerial vehicle to fly to a position where first harvested crops stored in the agricultural machine or second harvested crops discharged from the agricultural machine can be acquired, and
   the first harvested crops or the second harvested crops are acquired using the acquisition device connected to the unmanned aerial vehicle.

To efficiently harvest crops in a field, it is conceivable to run an agricultural machine that harvests crops while traveling within the field in parallel with a transport vehicle, and have the transport vehicle receive harvested crops discharged by the agricultural machine and accumulate them in the cargo bed of the transport vehicle. This enables the agricultural machine to transfer harvested crops to the transport vehicle while performing crop harvesting. Since there is no need to interrupt harvesting work to transfer harvested crops accumulated in the agricultural machine to a transport vehicle waiting at the outer periphery of the field, crop harvesting can be performed efficiently.

However, the above method requires securing a ground surface within the field where a transport vehicle can run in parallel with the agricultural machine, and depending on the field, securing such a ground surface may not be easy.

According to an embodiment of the present disclosure, an unmanned aerial vehicle acquires harvested crops that an agricultural machine has harvested. The unmanned aerial vehicle acquires harvested crops from the agricultural machine, for example, without landing on the ground. Also, for example, the unmanned aerial vehicle acquires harvested crops from a position above the agricultural machine. Since there is no need to secure a ground surface for running a transport vehicle in parallel with the agricultural machine, crop harvesting can be performed easily and efficiently.

### [Item A2]

The harvest management system according to Item A1, wherein the acquisition device includes a suction machine, and
the suction machine acquires the first harvested crops stored in the agricultural machine by suction.

By suctioning harvested crops, the harvested crops can be transferred from the agricultural machine to the unmanned aerial vehicle side.

By suctioning harvested crops from the agricultural machine that is performing crop harvesting, crop harvesting can be performed efficiently.

### [Item A3]

The harvest management system according to Item A2, wherein the first harvested crops are stored in a tank of the agricultural machine,
the suction machine is provided with a nozzle, and
the control device performs control to cause the unmanned aerial vehicle to fly so that an end of the nozzle is positioned inside the tank, and
the first harvested crops are transferred from the agricultural machine to the suction machine through the nozzle.

By using the nozzle, harvested crops can be easily transferred from the agricultural machine to the unmanned aerial vehicle side.

### [Item A4]

The harvest management system according to Item A2 or A3, wherein the acquisition device includes a tank that stores the suctioned first harvested crops.

The suctioned harvested crops can be stored in a tank connected to the unmanned aerial vehicle.

### [Item A5]

The harvest management system according to Item A4, further comprising a sensor that detects the weight of the first harvested crops stored in the tank of the acquisition device,
wherein when a weight value detected by the sensor becomes equal to or greater than a first predetermined value, the suction machine stops suctioning the first harvested crops.

This can prevent the weight of the first harvested crops stored in the tank of the acquisition device from exceeding the weight that can be stored in the tank.

### [Item A6]

The harvest management system according to any one of Items A1 to A5, wherein the first harvested crops are stored in a tank of the agricultural machine,
the acquisition device includes a gripper capable of gripping a vacuum hose extending from a suction machine placed outside the field or within the field, and
the control device performs control to cause the unmanned aerial vehicle to fly so that an end of the vacuum hose gripped by the gripper is positioned inside the tank, and
the first harvested crops are transferred from the agricultural machine to the suction machine through the vacuum hose.

This enables transferring harvested crops to a suction machine placed at a position away from the agricultural machine.

By suctioning harvested crops from the agricultural machine that is performing crop harvesting using the vacuum hose, crop harvesting can be performed efficiently.

### [Item A7]

The harvest management system according to Item A6, wherein the unmanned aerial vehicle supports the vacuum hose in cooperation with one or more other unmanned aerial vehicles.

This enables stable support of the vacuum hose.

### [Item A8]

The harvest management system according to any one of Items A1 to A7, wherein the acquisition device includes a vacuum gripper, and
the vacuum gripper acquires the first harvested crops stored in the agricultural machine by adsorption.

Harvested crops can be acquired by adsorbing harvested crops stored in the agricultural machine.

By having the unmanned aerial vehicle adsorb and extract harvested crops stored by the agricultural machine that is performing crop harvesting from the agricultural machine, crop harvesting can be performed efficiently.

### [Item A9]

The harvest management system according to any one of Items A1 to A8, further comprising a connection device that connects the unmanned aerial vehicle to the agricultural machine when acquiring the first harvested crops from the agricultural machine.

Positional deviation between the unmanned aerial vehicle and the agricultural machine can be suppressed, enabling stable acquisition of harvested crops.

### [Item A10]

The harvest management system according to any one of Items A1 to A9, wherein the agricultural machine includes a sensor that detects the weight of the first harvested crops stored in the agricultural machine, and
the control device:
performs control to cause the unmanned aerial vehicle to standby at a predetermined position when a weight value detected by the sensor of the agricultural machine is less than a second predetermined value, and
performs control to cause the unmanned aerial vehicle to fly to a position where the first harvested crops stored in the agricultural machine can be acquired when the weight value detected by the sensor of the agricultural machine is equal to or greater than the second predetermined value.

By having the unmanned aerial vehicle acquire harvested crops when a predetermined amount or more of harvested crops have accumulated in the agricultural machine, work efficiency can be improved.

### [Item A11]

The harvest management system according to any one of Items A1 to A10, wherein the first harvested crops are discharged from a discharge hose extending from the agricultural machine,
the acquisition device includes a gripper capable of gripping the discharge hose, and
the control device performs control to cause the unmanned aerial vehicle to fly so that a position of an end of the discharge hose gripped by the gripper is at a position where the first harvested crops can be discharged to a transport vehicle or container placed outside the field or within the field, and
the first harvested crops are transferred from the agricultural machine to the transport vehicle or the container through the discharge hose.

Harvested crops can be transferred to a transport vehicle or container placed at a position away from the agricultural machine.

By transferring harvested crops discharged from the agricultural machine that is performing crop harvesting using the discharge hose, crop harvesting can be performed efficiently.

### [Item A12]

The harvest management system according to Item A11, wherein the unmanned aerial vehicle supports the discharge hose in cooperation with one or more other unmanned aerial vehicles.

This enables stable support of the discharge hose.

### [Item A13]

The harvest management system according to any one of Items A1 to A12, wherein the acquisition device executes operations to acquire the first harvested crops in response to control by the control device.

The acquisition device can be operated appropriately according to the environment for acquiring harvested crops.

### [Item A14]

The harvest management system according to any one of Items A1 to A13, wherein the first harvested crops are stored in a container detachably provided on the agricultural machine,
the acquisition device includes a hook, and
the control device performs control to cause the unmanned aerial vehicle to fly so as to lift the container using the hook.

Harvested crops can be acquired from the agricultural machine by lifting the container using the hook.

By having the unmanned aerial vehicle lift harvested crops stored by the agricultural machine that is performing crop harvesting, crop harvesting can be performed efficiently.

### [Item A15]

The harvest management system according to any one of Items A1 to A14, wherein the acquisition device acquires the first harvested crops from the moving agricultural machine.

By acquiring harvested crops from the agricultural machine that continues harvesting work while moving, work efficiency can be improved.

### [Item A16]

The harvest management system according to any one of Items A1 to A15, wherein the acquisition device includes a bucket, and
the control device performs control to cause the unmanned aerial vehicle to fly so as to scoop up the second harvested crops discharged from the agricultural machine with the bucket.

Harvested crops can be acquired from the agricultural machine by scooping up harvested crops using the bucket.

### [Item A17]

The harvest management system according to Item A16, wherein the control device performs:
control to cause the unmanned aerial vehicle to standby at a position where the second harvested crops are scheduled to be discharged before the agricultural machine discharges the second harvested crops, and
control to cause the unmanned aerial vehicle to fly so as to scoop up the second harvested crops discharged from the agricultural machine with the bucket.

This enables immediately scooping up harvested crops discharged from the agricultural machine.

### [Item A18]

An unmanned aerial vehicle for acquiring harvested crops that a mobile agricultural machine has harvested from a field, wherein an acquisition device used to acquire the harvested crops is connected to the unmanned aerial vehicle, the unmanned aerial vehicle comprising:
a receiving device configured to receive position information indicating a position of the agricultural machine in the field, or a position at which the agricultural machine is scheduled to discharge harvested crops;
a flight device that causes the unmanned aerial vehicle to fly; and
a control device that controls operation of the flight device so as to fly the unmanned aerial vehicle to a position where first harvested crops stored in the agricultural machine, or second harvested crops discharged from the agricultural machine, can be acquired,
wherein the first harvested crops or the second harvested crops are acquired using the acquisition device.

According to an embodiment of the present disclosure, an unmanned aerial vehicle acquires harvested crops that an agricultural machine has harvested. The unmanned aerial vehicle acquires harvested crops from the agricultural machine, for example, without landing on the ground. Also, for example, the unmanned aerial vehicle acquires harvested crops from a position above the agricultural machine. Since there is no need to secure a ground surface for running a transport vehicle in parallel with the agricultural machine, crop harvesting can be performed easily and efficiently.

### [Item A19]

A harvest management method for acquiring harvested crops that a mobile agricultural machine has harvested from a field using an unmanned aerial vehicle, wherein
an acquisition device used for acquiring the harvested crops is connected to the unmanned aerial vehicle and moves together with the unmanned aerial vehicle,
the method comprising:
   causing the unmanned aerial vehicle to fly to a position where first harvested crops stored in the agricultural machine or second harvested crops discharged from the agricultural machine can be acquired, based on position information indicating a position of the agricultural machine in the field or a position where the agricultural machine is scheduled to discharge harvested crops; and
   acquiring the first harvested crops or the second harvested crops using the acquisition device connected to the unmanned aerial vehicle.

According to an embodiment of the present disclosure, an unmanned aerial vehicle acquires harvested crops that an agricultural machine has harvested. The unmanned aerial vehicle acquires harvested crops from the agricultural machine, for example, without landing on the ground. Also, for example, the unmanned aerial vehicle acquires harvested crops from a position above the agricultural machine. Since there is no need to secure a ground surface for running a transport vehicle in parallel with the agricultural machine, crop harvesting can be performed easily and efficiently.

### [Item A20]

A computer program for causing a computer to execute control of operations for acquiring harvested crops that a mobile agricultural machine has harvested from a field using an unmanned aerial vehicle, wherein
an acquisition device used for acquiring the harvested crops is connected to the unmanned aerial vehicle and moves together with the unmanned aerial vehicle,
the computer program causes the computer to execute:
   causing the unmanned aerial vehicle to fly to a position where first harvested crops stored in the agricultural machine or second harvested crops discharged from the agricultural machine can be acquired, based on position information indicating a position of the agricultural machine in the field or a position where the agricultural machine is scheduled to discharge harvested crops; and
   acquiring the first harvested crops or the second harvested crops using the acquisition device connected to the unmanned aerial vehicle.

According to an embodiment of the present disclosure, an unmanned aerial vehicle acquires harvested crops that an agricultural machine has harvested. The unmanned aerial vehicle acquires harvested crops from the agricultural machine, for example, without landing on the ground. Also, for example, the unmanned aerial vehicle acquires harvested crops from a position above the agricultural machine. Since there is no need to secure a ground surface for running a transport vehicle in parallel with the agricultural machine, crop harvesting can be performed easily and efficiently.

### [Item B1]

An unmanned aerial vehicle that transports harvested crops harvested from a field, comprising:
a flight device that causes the unmanned aerial vehicle to fly;
a control device that controls operation of the flight device;
a communication device that receives package position information indicating a first position where a target package for transport containing the harvested crops is located, and package weight information indicating the weight of the target package; and
a support device capable of supporting the target package,
wherein the control device determines, based on the package weight information, whether the target package can be transported to a second position different from the first position, and
when determining that the target package can be transported, controls the flight device to cause the unmanned aerial vehicle to fly to the first position, causes the support device to support the target package, and controls the flight device to cause the unmanned aerial vehicle to fly to the second position.

By having an unmanned aerial vehicle capable of transporting a target package fly to a first position where the target package is located, support and transport the target package, efficient transport of harvested crops can be achieved.

### [Item B2]

The unmanned aerial vehicle according to Item B1, wherein the control device:
determines that the target package can be transported when a weight value of packages that can be additionally loaded obtained from availability status regarding payload is equal to or greater than a weight value indicated by the package weight information, and
determines that the target package cannot be transported when the weight value of packages that can be additionally loaded is less than the weight value indicated by the package weight information.

This can prevent unmanned aerial vehicles that cannot transport the target package, such as those that would exceed the maximum payload when loading the target package, from attempting to transport the target package.

Even if the unmanned aerial vehicle is already supporting packages, if there is spare capacity in the transport capability, by having it support additional packages, efficient transport of harvested crops can be achieved.

### [Item B3]

The unmanned aerial vehicle according to Item B1 or B2, wherein the control device:
determines that the target package can be transported when a total value of weights of one or more packages that the unmanned aerial vehicle will support when supporting the target package is equal to or less than a predetermined weight value, and
determines that the target package cannot be transported when the total value of the weights exceeds the predetermined weight value.

This can prevent unmanned aerial vehicles that cannot transport the target package, such as those that would exceed the maximum payload when loading the target package, from attempting to transport the target package.

Even if the unmanned aerial vehicle is already supporting packages, if there is spare capacity in the transport capability, by having it support additional packages, efficient transport of harvested crops can be achieved.

### [Item B4]

The unmanned aerial vehicle according to Item B3, wherein when the unmanned aerial vehicle is already supporting one or more other packages different from the target package, the control device:
determines that the target package can be transported when a total value of the weight value indicated by the package weight information and weight values of the one or more other packages is equal to or less than the predetermined weight value, and
determines that the target package cannot be transported when the total value of the weight value indicated by the package weight information and the weight values of the one or more other packages exceeds the predetermined weight value.

Even if the unmanned aerial vehicle is already supporting packages, if there is spare capacity in the transport capability, by having it support additional packages, efficient transport of harvested crops can be achieved.

### [Item B5]

The unmanned aerial vehicle according to any one of Items B1 to B4, wherein the control device further determines whether the target package can be transported to the second position based on a remaining amount of energy sources used for flight of the unmanned aerial vehicle.

This can prevent the unmanned aerial vehicle from becoming unable to fly during transport of the package.

### [Item B6]

The unmanned aerial vehicle according to Item B5, wherein the control device:
calculates a remaining amount of the energy sources when the unmanned aerial vehicle supporting the target package reaches the second position, assuming that the unmanned aerial vehicle transports the target package, and
determines that the target package can be transported when the calculated remaining amount of the energy sources is greater than a predetermined value, and
determines that the target package cannot be transported when the calculated remaining amount of the energy sources is equal to or less than the predetermined value.

This can prevent the unmanned aerial vehicle from becoming unable to fly during transport of the package.

### [Item B7]

The unmanned aerial vehicle according to Item B6, wherein the control device:
calculates a first energy consumption when the unmanned aerial vehicle is flown from a current location to the first position, and a second energy consumption when the unmanned aerial vehicle supporting the target package is flown from the first position to the second position, and
calculates the remaining amount of the energy sources when the unmanned aerial vehicle supporting the target package reaches the second position based on the first energy consumption and the second energy consumption.

This enables accurate calculation of the remaining amount of energy sources.

### [Item B8]

The unmanned aerial vehicle according to any one of Items B1 to B7, wherein the control device outputs information indicating a determination result of whether the target package can be transported to the outside using the communication device.

This enables notifying other unmanned aerial vehicles and management devices, etc., that it can transport the target package, or that it cannot transport the target package.

### [Item B9]

A management system that determines an unmanned aerial vehicle that transports harvested crops harvested from a field from among multiple unmanned aerial vehicles, comprising:
a communication device that receives package position information indicating a first position where a target package for transport containing the harvested crops is located, package weight information indicating the weight of the target package, and availability information indicating availability status regarding payload of each of the multiple unmanned aerial vehicles; and
a processing device that determines a transport unmanned aerial vehicle that transports the target package to a second position different from the first position from among the multiple unmanned aerial vehicles based on the package weight information and the availability information,
wherein the processing device outputs an instruction to transport the target package to the determined transport unmanned aerial vehicle using the communication device.

This enables determining an unmanned aerial vehicle suitable for transporting packages from among multiple unmanned aerial vehicles.

### [Item B10]

The management system according to Item B9, wherein the processing device determines, as the transport unmanned aerial vehicle, an unmanned aerial vehicle whose weight value of packages that can be additionally loaded obtained from the availability information is equal to or greater than a weight value indicated by the package weight information.

This can prevent unmanned aerial vehicles that cannot transport the target package, such as those that would exceed the maximum payload when loading the target package, from attempting to transport the target package.

Even if the unmanned aerial vehicle is already supporting packages, if there is spare capacity in the transport capability of that unmanned aerial vehicle, by having it support additional packages, efficient transport of harvested crops can be achieved.

### [Item B11]

The management system according to Item B9 or B10, wherein the processing device further determines the transport unmanned aerial vehicle from among the multiple unmanned aerial vehicles based on remaining amounts of energy sources used for flight of each of the multiple unmanned aerial vehicles.

This can prevent the unmanned aerial vehicle from becoming unable to fly during transport of the target package.

### [Item B12]

The management system according to Item B11, wherein the processing device calculates, for each of the multiple unmanned aerial vehicles, a remaining amount of the energy sources when the unmanned aerial vehicle flies to the second position while supporting the target package, and
determines, as the transport unmanned aerial vehicle, an unmanned aerial vehicle whose calculated remaining amount of the energy sources is greater than a predetermined value, and
does not determine, as the transport unmanned aerial vehicle, an unmanned aerial vehicle whose calculated remaining amount of the energy sources is equal to or less than the predetermined value.

This can prevent the unmanned aerial vehicle from becoming unable to fly during transport of the target package.

### [Item B13]

The management system according to Item B12, wherein the processing device calculates, for each of the multiple unmanned aerial vehicles:
a first energy consumption when the unmanned aerial vehicle is flown from a current location to the first position, and a second energy consumption when the unmanned aerial vehicle is flown from the first position to the second position while supporting the target package, and
calculates the remaining amount of the energy sources when the unmanned aerial vehicle flies to the second position while supporting the target package based on the first energy consumption and the second energy consumption.

This enables accurate calculation of the remaining amount of energy sources.

### [Item B14]

A package system that packages harvested crops harvested from a field, comprising:
a packaging device that packages the harvested crops; and
a control device that controls operation of the packaging device,
wherein the control device changes the weight or number of packages of the harvested crops created by the packaging device based on the transport capability of an unmanned aerial vehicle that transports the packages of the harvested crops.

By changing the weight or number of packages according to the transport capability of the unmanned aerial vehicle, the unmanned aerial vehicle can be made to transport the packages.

### [Item B15]

The package system according to Item B14, wherein the control device changes the weight or number of the packages created by the packaging device based on at least one of availability status regarding payload of the unmanned aerial vehicle and a remaining amount of energy sources used for flight of the unmanned aerial vehicle.

By changing packages to weights or numbers that the unmanned aerial vehicle can transport, the unmanned aerial vehicle can be made to transport the packages.

### [Item B16]

The package system according to Item B14 or B15, wherein the control device performs control to move the packages to a position where the unmanned aerial vehicle can acquire the packages.

This enables the unmanned aerial vehicle to acquire packages by moving the position of packages even if the position where crops are harvested is an area where entry of the unmanned aerial vehicle is difficult.

### [Item B17]

An unmanned aerial vehicle that transports harvested crops harvested from a field, comprising:
a flight device that causes the unmanned aerial vehicle to fly;
a control device that controls operation of the flight device;
a communication device that receives harvested crop position information indicating a first position where the harvested crops are located, and harvested crop weight information indicating the weight of the harvested crops; and
a support device that supports the harvested crops,
wherein the control device:
   determines, based on the harvested crop weight information, whether the harvested crops can be transported to a second position different from the first position, and
   when determining that the harvested crops can be transported, controls the flight device to cause the unmanned aerial vehicle to fly to the first position, causes the support device to support the harvested crops, and controls the flight device to cause the unmanned aerial vehicle to fly to the second position.

By having an unmanned aerial vehicle capable of transporting harvested crops fly to a first position where harvested crops are located, support and transport the harvested crops, efficient transport of harvested crops can be achieved.

### [Item C1]

A management system that manages transport operations of an unmanned aerial vehicle, comprising:
a communication device that receives package position information indicating a first position where a package containing harvested crops harvested in a field is located; and
a control device that controls operation of an unmanned aerial vehicle supporting a structure,
wherein when causing the unmanned aerial vehicle to support the package, the control device separates the structure from the unmanned aerial vehicle.

By causing an unmanned aerial vehicle that was performing operations to support a structure to transport a package, efficient transport of harvested crops can be achieved.

By using an unmanned aerial vehicle from which the structure has been separated, the weight of packages that the unmanned aerial vehicle can transport can be increased.

### [Item C2]

The management system according to Item C1, wherein the structure is an implement, and
the control device:
controls operation of the unmanned aerial vehicle that supports and transports the implement to a predetermined area within the field or around the field,
causes the unmanned aerial vehicle to release support of the implement in the predetermined area,
causes the unmanned aerial vehicle that has released support of the implement to fly to the first position,
causes the unmanned aerial vehicle to support the package, and
causes the unmanned aerial vehicle supporting the package to fly to a second position different from the first position.

By causing an unmanned aerial vehicle that transports an implement to transport a package, efficient transport of harvested crops can be achieved.

By using an unmanned aerial vehicle from which support of the implement has been released, the weight of packages that the unmanned aerial vehicle can transport can be increased.

### [Item C3]

The management system according to Item C2, wherein the implement performs work in the predetermined area while being supported by the unmanned aerial vehicle, and
the control device causes the unmanned aerial vehicle to release support of the implement when the implement is in an area where work is possible without being supported by the unmanned aerial vehicle.

This enables the implement to continue work even after the unmanned aerial vehicle releases support, allowing the work of the implement to be performed efficiently.

### [Item C4]

The management system according to Item C3, wherein the control device causes the unmanned aerial vehicle to release support of the implement when the communication device receives a request for transport of the package and the implement is in an area where work is possible without being supported by the unmanned aerial vehicle.

By releasing support of the implement after receiving a request for transport of the package, the work of the implement can be performed efficiently.

### [Item C5]

The management system according to Item C4, wherein the control device causes the unmanned aerial vehicle to continue supporting the implement that is performing work when the communication device receives a request for transport of the package but the implement is in an area where support by the unmanned aerial vehicle is necessary.

This enables the work of the implement to be performed appropriately.

### [Item C6]

The management system according to any one of Items C2 to C5, wherein the control device determines whether to cause the unmanned aerial vehicle to release support of the implement based on a degree of progress of work of the implement.

For example, when the degree of progress of work of the implement is low, by continuing to have the unmanned aerial vehicle support the implement that is performing work, the work of the implement can be performed appropriately.

### [Item C7]

The management system according to any one of Items C1 to C6, wherein the communication device further receives package weight information indicating the weight of the package, and
the control device:
determines, based on the package weight information, whether the unmanned aerial vehicle can transport the package to the second position, and
when determining that the unmanned aerial vehicle can transport the predetermined package, causes the unmanned aerial vehicle from which the structure has been separated to fly to the first position and support the package.

By causing the unmanned aerial vehicle to transport a package when the unmanned aerial vehicle has the capability to transport the package, it can be prevented that unmanned aerial vehicles that cannot transport packages attempt to transport packages.

### [Item C8]

The management system according to Item C7, wherein the control device further determines whether the unmanned aerial vehicle can transport the package to the second position based on a remaining amount of energy sources used for flight of the unmanned aerial vehicle.

This can prevent the unmanned aerial vehicle from becoming unable to fly during transport of the package.

### [Item C9]

An unmanned aerial vehicle that supports and transports a structure, comprising:
a communication device that receives package position information indicating a first position where a package containing harvested crops harvested in a field is located; and
a control device that controls operations to support the structure,
wherein when causing the unmanned aerial vehicle to support the package, the control device separates the structure from the unmanned aerial vehicle.

By causing an unmanned aerial vehicle that was performing operations to support a structure to transport a package, efficient transport of harvested crops can be achieved.

By using an unmanned aerial vehicle from which the structure has been separated, the weight of packages that the unmanned aerial vehicle can transport can be increased.

### [Item C10]

A management method for managing transport operations of an unmanned aerial vehicle, comprising:
receiving package position information indicating a first position where a package containing harvested crops harvested in a field is located;
controlling operation of an unmanned aerial vehicle supporting a structure; and
when causing the unmanned aerial vehicle to support the package, separating the structure from the unmanned aerial vehicle.

By causing an unmanned aerial vehicle that was performing operations to support a structure to transport a package, efficient transport of harvested crops can be achieved.

By using an unmanned aerial vehicle from which the structure has been separated, the weight of packages that the unmanned aerial vehicle can transport can be increased.

### [Item C11]

A computer program for causing a computer to execute management of transport operations of an unmanned aerial vehicle, wherein
the computer program causes the computer to execute:
receiving package position information indicating a first position where a package containing harvested crops harvested in a field is located;
controlling operation of an unmanned aerial vehicle supporting a structure; and
when causing the unmanned aerial vehicle to support the package, separating the structure from the unmanned aerial vehicle.

By causing an unmanned aerial vehicle that was performing operations to support a structure to transport a package, efficient transport of harvested crops can be achieved.

By using an unmanned aerial vehicle from which the structure has been separated, the weight of packages that the unmanned aerial vehicle can transport can be increased.

### INDUSTRIAL APPLICABILITY

The technology of the present disclosure is particularly useful in the agricultural field using unmanned aerial vehicles.

### REFERENCE SIGNS LIST

**1:** flight device, **2:** rotor (propeller), **3:** rotary drive device, **4:** main body, **4a:** control device, **4b:** sensor group, **4c:** communication device, **5:** body frame, **6:** ground station, **7a:** internal combustion engine, **7b:** fuel tank, **8:** power generation device, **9:** power buffer, **10:** unmanned aerial vehicle (multicopter), **11:** body, **12:** rotor, **14:** motor, **16:** ESC, **18:** connection device, **19:** skid, **22:** rotor, **23:** power transmission system, **27:** drivetrain, **41:** processor, **42:** RAM, **43:** ROM, **44:** storage device, **52:** battery, **61:** GNSS unit (positioning device), **62:** inertial measurement unit (IMU), **63:** altitude sensor, **65:** LiDAR sensor, **66:** camera, **67:** load sensor, **70:** field, **71:** work area, **72:** headland, **73:** target route, **75:** tree, **76:** power supply device, **78:** storage facility, **100:** agricultural machine (harvester), **101:** vehicle body, **102:** traveling device, **103:** cutting device, **104:** conveying device, **105:** threshing device, **106:** tank, **106a:** opening, **106u:** tank upper part, **107:** discharge device, **108:** straw processing device, **109:** reel, **110:** cabin, **111:** prime mover (engine), **112:** transmission, **117:** discharge port, **121:** positioning device (GNSS unit), **122:** inertial measurement unit (IMU), **125:** LiDAR sensor, **126:** camera, **127:** obstacle sensor, **131:** operating terminal, **132:** operating switch group, **140:** driving device, **141:** power transmission mechanism, **150:** sensor group, **151:** operating lever sensor, **152:** rotation sensor, **156:** load sensor, **160:** control device, **161:** processor, **162:** RAM, **163:** ROM, **164:** storage device, **165-167:** ECU, **190:** communication device, **200:** implement, **210:** acquisition device (support device), **211:** nozzle, **212:** suction blower, **215:** tank, **216:** actuator, **217:** actuator, **221:** gripper, **222:** vacuum gripper, **223:** wire, **225:** suction machine, **226:** vacuum hose, **227:** transport vehicle, **228:** discharge hose, **230:** vehicle body, **231:** robot arm, **232:** container, **233:** wire (handle), **235:** arm, **240:** unmanned aerial vehicle, **261:** rod, **262:** hook, **301:** tractor, **302:** baler, **310:** harvested crops, **320:** transport vehicle (harvester), **330:** package, **400:** terminal device, **420:** input device, **430:** display device, **450:** storage device, **460:** processor, **470:** ROM, **480:** RAM, **490:** communication device, **600:** management device, **660:** processor, **650:** storage device, **670:** ROM, **680:** RAM, **690:** communication device

## Claims

1. An unmanned aerial vehicle that transports harvested crops harvested from a field, comprising:
a flight device that causes the unmanned aerial vehicle to fly;
a control device that controls operation of the flight device;
a communication device that receives package position information indicating a first position where a target package for transport containing the harvested crops is located, and package weight information indicating the weight of the target package; and
a support device capable of supporting the target package,
wherein the control device:
determines, based on the package weight information, whether the target package can be transported to a second position different from the first position, and
when determining that the target package can be transported, controls the flight device to cause the unmanned aerial vehicle to fly to the first position,
causes the support device to support the target package, and
controls the flight device to cause the unmanned aerial vehicle to fly to the second position.

2. The unmanned aerial vehicle according to Claim 1, wherein the control device:
determines that the target package can be transported when a weight value of packages that can be additionally loaded obtained from availability status regarding payload is equal to or greater than a weight value indicated by the package weight information, and
determines that the target package cannot be transported when the weight value of packages that can be additionally loaded is less than the weight value indicated by the package weight information.

3. The unmanned aerial vehicle according to Claim 1 or 2, wherein the control device:
determines that the target package can be transported when a total value of weights of one or more packages that the unmanned aerial vehicle will support when supporting the target package is equal to or less than a predetermined weight value, and
determines that the target package cannot be transported when the total value of the weights exceeds the predetermined weight value.

4. The unmanned aerial vehicle according to Claim 3, wherein when the unmanned aerial vehicle is already supporting one or more other packages different from the target package, the control device:
determines that the target package can be transported when a total value of the weight value indicated by the package weight information and weight values of the one or more other packages is equal to or less than the predetermined weight value, and
determines that the target package cannot be transported when the total value of the weight value indicated by the package weight information and the weight values of the one or more other packages exceeds the predetermined weight value.

5. The unmanned aerial vehicle according to any one of Claims 1 to 4, wherein the control device further determines whether the target package can be transported to the second position based on a remaining amount of energy sources used for flight of the unmanned aerial vehicle.

6. The unmanned aerial vehicle according to Claim 5, wherein the control device:
calculates a remaining amount of the energy sources when the unmanned aerial vehicle supporting the target package reaches the second position, assuming that the unmanned aerial vehicle transports the target package, and
determines that the target package can be transported when the calculated remaining amount of the energy sources is greater than a predetermined value, and
determines that the target package cannot be transported when the calculated remaining amount of the energy sources is equal to or less than the predetermined value.

7. The unmanned aerial vehicle according to Claim 6, wherein the control device:
calculates a first energy consumption when the unmanned aerial vehicle is flown from a current location to the first position, and a second energy consumption when the unmanned aerial vehicle supporting the target package is flown from the first position to the second position, and
calculates the remaining amount of the energy sources when the unmanned aerial vehicle supporting the target package reaches the second position based on the first energy consumption and the second energy consumption.

8. The unmanned aerial vehicle according to any one of Claims 1 to 7, wherein the control device outputs information indicating a determination result of whether the target package can be transported to the outside using the communication device.

9. A management system that determines an unmanned aerial vehicle that transports harvested crops harvested from a field from among multiple unmanned aerial vehicles, comprising:
a communication device that receives package position information indicating a first position where a target package for transport containing the harvested crops is located, package weight information indicating the weight of the target package, and availability information indicating availability status regarding payload of each of the multiple unmanned aerial vehicles; and
a processing device that determines a transport unmanned aerial vehicle that transports the target package to a second position different from the first position from among the multiple unmanned aerial vehicles based on the package weight information and the availability information,
wherein the processing device outputs an instruction to transport the target package to the determined transport unmanned aerial vehicle using the communication device.

10. The management system according to Claim 9, wherein the processing device determines, as the transport unmanned aerial vehicle, an unmanned aerial vehicle whose weight value of packages that can be additionally loaded obtained from the availability information is equal to or greater than a weight value indicated by the package weight information.

11. The management system according to Claim 9 or 10, wherein the processing device further determines the transport unmanned aerial vehicle from among the multiple unmanned aerial vehicles based on remaining amounts of energy sources used for flight of each of the multiple unmanned aerial vehicles.

12. The management system according to Claim 11, wherein the processing device calculates, for each of the multiple unmanned aerial vehicles, a remaining amount of the energy sources when the unmanned aerial vehicle flies to the second position while supporting the target package, and
determines, as the transport unmanned aerial vehicle, an unmanned aerial vehicle whose calculated remaining amount of the energy sources is greater than a predetermined value, and
does not determine, as the transport unmanned aerial vehicle, an unmanned aerial vehicle whose calculated remaining amount of the energy sources is equal to or less than the predetermined value.

13. The management system according to Claim 12, wherein the processing device calculates, for each of the multiple unmanned aerial vehicles:
a first energy consumption when the unmanned aerial vehicle is flown from a current location to the first position, and a second energy consumption when the unmanned aerial vehicle is flown from the first position to the second position while supporting the target package, and
calculates the remaining amount of the energy sources when the unmanned aerial vehicle flies to the second position while supporting the target package based on the first energy consumption and the second energy consumption.

14. A package system that packages harvested crops harvested from a field, comprising:
a packaging device that packages the harvested crops; and
a control device that controls operation of the packaging device,
wherein the control device changes the weight or number of packages of the harvested crops created by the packaging device based on the transport capability of an unmanned aerial vehicle that transports the package of the harvested crops.

15. The package system according to Claim 14, wherein the control device changes the weight or number of the packages created by the packaging device based on at least one of availability status regarding payload of the unmanned aerial vehicle and a remaining amount of energy sources used for flight of the unmanned aerial vehicle.

16. The package system according to Claim 14 or 15, wherein the control device performs control to move the package to a position where the unmanned aerial vehicle can acquire the package.
